(19) Europäisches Patentamt
European Patent Office
Office européen des brevets

(11) EP 2 855 627 B1

(12) **EUROPEAN PATENT SPECIFICATION**

(45) Date of publication and mention of the grant of the patent:
**20.09.2017 Bulletin 2017/38**

(21) Application number: **13727515.2**

(22) Date of filing: **07.05.2013**

(51) Int Cl.:
***C09K 19/02*** *(2006.01)* ***C09K 19/04*** *(2006.01)*
***C09K 19/58*** *(2006.01)*

(86) International application number:
**PCT/EP2013/001353**

(87) International publication number:
**WO 2013/174478 (28.11.2013 Gazette 2013/48)**

# (54) BIMESOGENIC COMPOUNDS AND MESOGENIC MEDIA

BIMESOGENE VERBINDUNGEN UND MESOGENE MEDIEN

COMPOSÉS BIMÉSOGÈNES ET MILIEUX MÉSOGÈNES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.05.2012 EP 12004081**

(43) Date of publication of application:
**08.04.2015 Bulletin 2015/15**

(73) Proprietor: **Merck Patent GmbH**
**64293 Darmstadt (DE)**

(72) Inventors:
- **ADLEM, Kevin**
  **Bournemouth BH8 9LS (GB)**
- **PARRI, Owain Llyr**
  **Ringwood BH24 3AN (GB)**
- **TUFFIN, Rachel**
  **Chandlers Ford SO53 4SY (GB)**
- **SNOW, Benjamin**
  **Chalfont St. Giles HP8 4DR (GB)**
- **NAMUTEBI, Mariam**
  **Southampton SO15 5RU (GB)**

(56) References cited:
**GB-A- 2 356 629** **US-A1- 2008 142 758**
**US-A1- 2009 115 957** **US-A1- 2010 296 038**

- **HENDERSON P A ET AL: "METHYLENE-LINKED LIQUID CRYSTAL DIMERS", LIQUID CRYSTALS: AN INTERNATIONAL JOURNAL OF SCIENCE AND TECHNOLOGY, TAYLOR & FRANCIS, GB, vol. 28, no. 3, 1 March 2001 (2001-03-01), pages 463-472, XP001076571, ISSN: 0267-8292, DOI: 10.1080/02678290010007558**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 855 627 B1

## Description

The invention relates to bimesogenic compounds of formula I

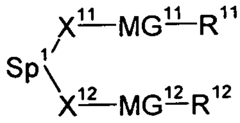

I

wherein $R^{11}$, $R^{12}$, $MG^{11}$, $MG^{12}$ and $Sp^1$ have the meaning given herein below, to the use of bimesogenic compounds of formula I in liquid crystal media and particular to flexoelectric liquid crystal devices comprising a liquid crystal medium according to the present invention.

Liquid Crystal Displays (LCDs) are widely used to display information. LCDs are used for direct view displays, as well as for projection type displays. The electro-optical mode which is employed for most displays still is the twisted nematic (TN)-mode with its various modifications. Besides this mode, the super twisted nematic (STN)-mode and more recently the optically compensated bend (OCB)-mode and the electrically controlled birefringence (ECB)-mode with their various modifications, as e. g. the vertically aligned nematic (VAN), the patterned ITO vertically aligned nematic (PVA)-, the polymer stabilized vertically aligned nematic (PSVA)-mode and the multi domain vertically aligned nematic (MVA)-mode, as well as others, have been increasingly used. All these modes use an electrical field, which is substantially perpendicular to the substrates, respectively to the liquid crystal layer. Besides these modes there are also electro-optical modes employing an electrical field substantially parallel to the substrates, respectively the liquid crystal layer, like e.g. the In Plane Switching (short IPS) mode (as disclosed e.g. in DE 40 00 451 and EP 0 588 568) and the Fringe Field Switching (FFS) mode. Especially the latter mentioned electro-optical modes, which have good viewing angle properties and improved response times, are increasingly used for LCDs for modern desktop monitors and even for displays for TV and for multimedia applications and thus are competing with the TN-LCDs.

Further to these displays, new display modes using cholesteric liquid crystals having a relatively short cholesteric pitch have been proposed for use in displays exploiting the so called "flexo-electric" effect. The term "liquid crystal", "mesomorphic compound" or "mesogenic compound" (also shortly referred to as "mesogen") means a compound that under suitable conditions of temperature, pressure and concentration can exist as a mesophase (nematic, smectic, etc.) or in particular as a LC phase. Non-amphiphilic mesogenic compounds comprise for example one or more calamitic, banana-shaped or discotic mesogenic groups.

Flexoelectric liquid crystal materials are known in prior art and for example suggested in US 2008/142758 A1, US 2010/296038 A1, US 2009/115957 A1 and by Henderson et al. in Liquid crystals, 2001, 28, 3, 463 - 472. The flexoelectric effect is described inter alia by Chandrasekhar, "Liquid Crystals", 2nd edition, Cambridge University Press (1992) and P.G. deGennes et al., "The Physics of Liquid Crystals", 2nd edition, Oxford Science Publications (1995).

In these displays the cholesteric liquid crystals are oriented in the "uniformly lying helix" arrangement (ULH), which also give this display mode its name. For this purpose, a chiral substance which is mixed with a nematic material induces a helical twist transforming the material into a chiral nematic material, which is equivalent to a cholesteric material. The term "chiral" in general is used to describe an object that is non-superimposable on its mirror image. "Achiral" (non-chiral) objects are objects that are identical to their mirror image. The terms chiral nematic and cholesteric are used synonymously in this application, unless explicitly stated otherwise. The pitch induced by the chiral substance (Po) is in a first approximation inversely proportional to the concentration (c) of the chiral material used. The constant of proportionality of this relation is called the helical twisting power (HTP) of the chiral substance and defined by equation (1)

$$HTP \equiv 1 / (c \cdot P_0) \qquad (1)$$

wherein

c is concentration of the chiral compound.

The uniform lying helix texture is realized using a chiral nematic liquid crystal with a short pitch, typically in the range from 0.2 μm to 1 μm, preferably of 1.0 μm or less, in particular of 0.5 μm or less, which is unidirectional aligned with its helical axis parallel to the substrates, e. g. glass plates, of a liquid crystal cell. In this configuration the helical axis of the chiral nematic liquid crystal is equivalent to the optical axis of a birefringent plate.

If an electrical field is applied to this configuration normal to the helical axis the optical axis is rotated in the plane of the cell, similar as the director of a ferroelectric liquid crystal rotate as in a surface stabilized ferroelectric liquid

crystal display. The flexoelectric effect is characterized by fast response times typically ranging from 6 μs to 100 μs. It further features excellent grey scale capability.

The field induces a splay bend structure in the director which is accommodated by a tilt in the optical axis. The angle of the rotation of the axis is in first approximation directly and linearly proportional to the strength of the electrical field. The optical effect is best seen when the liquid crystal cell is placed between crossed polarizers with the optical axis in the unpowered state at an angle of 22.5° to the absorption axis of one of the polarizers. This angle of 22.5° is also the ideal angle of rotation of the electric field, as thus, by the inversion the electrical field, the optical axis is rotated by 45° and by appropriate selection of the relative orientations of the preferred direction of the axis of the helix, the absorption axis of the polarizer and the direction of the electric field, the optical axis can be switched from parallel to one polarizer to the center angle between both polarizers. The optimum contrast is then achieved when the total angle of the switching of the optical axis is 45°. In that case the arrangement can be used as a switchable quarter wave plate, provided the optical retardation, i. e. the product of the effective birefringence of the liquid crystal and the cell gap, is selected to be the quarter of the wave length. In this context the wavelength referred to is 550 nm, the wavelength for which the sensitivity of the human eye is highest, unless explicitly stated otherwise.

The angle of rotation of the optical axis (Φ) is given in good approximation by formula (2)

$$\tan \Phi = \bar{e}\, P_0\, E / (2\, \pi\, K) \qquad (2)$$

wherein

- $P_0$ is the undisturbed pitch of the cholesteric liquid crystal,
- $\bar{e}$ is the average $[\bar{e} = ½\,(e_{splay} + e_{bend})]$ of the splay flexoelectric coefficient ($e_{splay}$) and the bend flexoelectric coefficient ($e_{bend}$),
- E is the electrical field strength and
- $K$ is the average $[K = ½\,(k_{11} + k_{33})]$ of the splay elastic constant ($k_{11}$) and the bend elastic constant ($K_{33}$)

and wherein

- $\bar{e} / K$ is called the flexo-elastic ratio.

This angle of rotation is half the switching angle in a flexoelectric switching element.

The response time (τ) of this electro-optical effect is given in good approximation by formula (3)

$$\tau = [P_0/(2\,\pi)]^2 \cdot \gamma / K \qquad (3)$$

wherein

- γ is the effective viscosity coefficient associated with the distortion of the helix.

There is a critical field ($E_c$) to unwind the helix, which can be obtained from equation (4)

$$E_c = (\pi^2 / P_0) \cdot [k_{22}/(\varepsilon_0 \cdot \Delta\varepsilon)]^{1/2} \qquad (4)$$

wherein

- $k_{22}$ is the twist elastic constant,
- $\varepsilon_0$ is the permittivity of vacuum and
- Δε is the dielectric anisotropy of the liquid crystal.

In this mode, however several problems still have to be resolved, which are, amongst others, difficulties in obtaining the required uniform orientation, an unfavorably high voltage required for addressing, which is incompatible with common driving electronics, a not really dark "off state", which deteriorates the contrast, and, last not least, a pronounced hysteresis in the electro-optical characteristics.

A relatively new display mode, the so-called uniformly standing helix (USH) mode, may be considered as an alternative mode to succeed the IPS, as it can show improved black levels, even compared to other display mode providing wide viewing angles (e.g. IPS, VA etc.).

For the USH mode, like for the ULH mode, flexoelectric switching has been proposed, using bimesogenic liquid crystal materials. Bimesogenic compounds are known in general from prior art (cf. also Hori, K., limuro, M., Nakao, A., Toriumi, H., J. Mol. Struc. 2004, 699, 23-29). The term "bimesogenic compound" relates to compounds comprising two mesogenic groups in the molecule. Just like normal mesogens they can form many mesophases, depending on their structure. In particular compounds of formula I induce a second nematic phase, when added to a nematic liquid crystal medium.

The term "mesogenic group" means in this context, a group with the ability to induce liquid crystal (LC) phase behaviour. The compounds comprising mesogenic groups do not necessarily have to exhibit an LC phase themselves. It is also possible that they show LC phase behaviour only in mixtures with other compounds. For the sake of simplicity, the term "liquid crystal" is used hereinafter for both mesogenic and LC materials.

However, due to the unfavorably high driving voltage required, to the relatively narrow phase range of the chiral nematic materials and to their irreversible switching properties, materials from prior art are not compatible for the use with current LCD driving schemes.

For displays of the USH and ULH mode, new liquid crystalline media with improved properties are required. Especially the birefringence (Δn) should be optimized for the optical mode. The birefringence Δn herein is defined in equation (5)

$$\Delta n = n_e - n_o \qquad (5)$$

wherein $n_e$ is the extraordinary refractive index and $n_o$ is the ordinary refractive index, and the average refractive index $n_{av.}$ is given by the following equation (6).

$$n_{av.} = [(2\ n_o^2 + n_e^2)/3]^{1/2} \qquad (6)$$

The extraordinary refractive index $n_e$ and the ordinary refractive index $n_o$ can be measured using an Abbe refractometer. Δn can then be calculated from equation (5).

Furthermore, for displays utilizing the USH or ULH mode the optical retardation d*Δn (effective) of the liquid crystal media should preferably be such that the equation (7)

$$\sin 2(\pi \cdot d \cdot \Delta n/\lambda) = 1 \qquad (7)$$

wherein

d is the cell gap and
λ is the wave length of light

is satisfied. The allowance of deviation for the right hand side of equation (7) is +/- 3 %.

The wave length of light generally referred to in this application is 550 nm, unless explicitly specified otherwise.

The cell gap of the cells preferably is in the range from 1 μm to 20 μm, in particular within the range from 2.0 μm to 10 μm.

For the ULH/USH mode, the dielectric anisotropy (Δε) should be as small as possible, to prevent unwinding of the helix upon application of the addressing voltage. Preferably Δε should be slightly higher than 0 and very preferably be 0.1 or more, but preferably 10 or less, more preferably 7 or less and most preferably 5 or less. In the present application the term "dielectrically positive" is used for compounds or components with Δε > 3.0, "dielectrically neutral" with -1.5 ≤ Δε ≤ 3.0 and "dielectrically negative" with Δε < -1.5. Δε is determined at a frequency of 1 kHz and at 20 °C. The dielectric anisotropy of the respective compound is determined from the results of a solution of 10 % of the respective individual compound in a nematic host mixture. In case the solubility of the respective compound in the host medium is less than 10 % its concentration is reduced by a factor of 2 until the resultant medium is stable enough at least to allow the determination of its properties. Preferably the concentration is kept at least at 5 %, however, in order to keep the significance of the results a high as possible. The capacitance of the test mixtures are determined both in a cell with homeotropic and with homogeneous alignment. The cell gap of both types of cells is approximately 20 μm. The voltage

applied is a rectangular wave with a frequency of 1 kHz and a root mean square value typically of 0.5 V to 1.0 V, however, it is always selected to be below the capacitive threshold of the respective test mixture.

$\Delta\varepsilon$ is defined as ($\varepsilon\| - \varepsilon_{\perp}$), whereas $\varepsilon_{av.}$ is ($\varepsilon\| + 2\ \varepsilon_{\perp}$) / 3. The dielectric permittivity of the compounds is determined from the change of the respective values of a host medium upon addition of the compounds of interest. The values are extrapolated to a concentration of the compounds of interest of 100 %. The host mixture is disclosed in H.J. Coles et al., J. Appl. Phys. 2006, 99, 034104 and has the composition given in the table 1.

Table 1: Host mixture composition

| Compound | Concentration |
|---|---|
| F-PGI-ZI-9-ZGP-F | 25 % |
| F-PGI-ZI-11-ZGP-F | 25 % |
| FPGI-O-5-O-PP-N | 9.5 % |
| FPGI-O-7-O-PP-N | 39 % |
| CD-1 | 1.5 % |

Besides the above mentioned parameters, the media have to exhibit a suitably wide range of the nematic phase, a rather small rotational viscosity and an at least moderately high specific resistivity.

Similar liquid crystal compositions with short cholesteric pitch for flexoelectric devices are known from EP 0 971 016, GB 2 356 629 and Coles, H.J., Musgrave, B., Coles, M.J., and Willmott, J., J. Mater. Chem., 11, p. 2709-2716 (2001). EP 0 971 016 reports on mesogenic estradiols, which, as such, have a high flexoelectric coefficient. GB 2 356 629 suggests the use of bimesogenic compounds in flexoelectric devices. The flexoelectric effect herein has been investigated in pure cholesteric liquid crystal compounds and in mixtures of homologous compounds only so far. Most of these compounds were used in binary mixtures consisting of a chiral additive and a nematic liquid crystal material being either a simple, conventional monomesogenic material or a bimesogenic one. These materials do have several drawbacks for practical applications, like insufficiently wide temperature ranges of the chiral nematic - or cholesteric phase, too small flexoelectric ratios, small angles of rotation.

One aim of the invention was to provide improved flexoelectric devices that exhibit high switching angles and fast response times. Another aim was to provide liquid crystal materials with advantageous properties, in particular for use in flexoelectric displays that enable good uniform alignment over the entire area of the display cell without the use of a mechanical shearing process, good contrast, high switching angles and fast response times also at low temperatures. The liquid crystal materials should exhibit low melting points, broad chiral nematic phase ranges, short temperature independent pitch lengths and high flexoelectric coefficients. Other aims of the present invention are immediately evident to the person skilled in the art from the following detailed description.

The inventors have found out that the above aims can be surprisingly achieved by providing bimesogenic compounds according to the present invention. These compounds, when used in chiral nematic liquid crystal mixtures, lead to low melting points, broad chiral nematic phases. In particular, they exhibit relatively high values of the elastic constant $k_{11}$, low values of the bend elastic constant $k_{33}$ and the flexoelectric coefficient.

Thus, the present invention relates to bimesogenic compounds of formula I

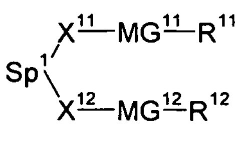

I

wherein

- $R^{11}$ and $R^{12}$ are each independently H, F, Ci, CN, NCS or a straight-chain or branched alkyl group with 1 to 25 C atoms which may be unsubstituted, mono- or polysubstituted by halogen or CN, it being also possible for one or more non-adjacent $CH_2$ groups to be replaced, in each occurrence independently from one another, by -O-, -S-, -NH-, -N($CH_3$)-, -CO-, -COO-, -OCO-, -O-CO-O-, -S-CO-, -CO-S-, -CH=CH-, -CH=CF-, -CF=CF- or -C≡C- in such a manner that oxygen atoms are not linked directly to one another, preferably a polar group, more preferably F, Cl, CN, $OCF_3$ or $CF_3$,
- $MG^{11}$ and $MG^{12}$ are each independently a mesogenic group,

at least one of

MG¹¹ and MG¹² comprises two or more 6-atomic rings, at least two of which are linked by a 2-atomic linking group, selected from -CO-O-, and -O-CO-, and

$Sp^1$ is a spacer group comprising 1, 3 or 5 to 40 C atoms, wherein one or more non-adjacent and non-terminal $CH_2$ groups may also be replaced by -O-, -S-, -NH-, -$N(CH_3)$-, -CO-, -O-CO-, -S-CO-, -O-COO-, -CO-S-, -CO-O-, -CH(halogen)-, -CH(CN)-, -CH=CH- or -C≡C-, however in such a way that no two O-atoms are adjacent to one another, now two -CH=CH- groups are adjacent to each other and no two groups selected from -O-CO-, -S-CO-, -O-COO-, -CO-S-, -CO-O- and -CH=CH- are adjacent to each other, preferably $-CH_2)_n$-(i.e. 1,n-alkylene with n C atoms), with n an integer, preferably from 3 to 19, more preferably from 3 to 11, most preferably an odd integer (i.e. 3, 5, 7, 9 or 11),

$X^{11}$ and $X^{12}$ are independently from one another a linking group selected from -CO-O-, -O-CO-, -CH=CH-, -C≡C-, -S-, -O-and a single bond, preferably -CO-O-, -O-CO- or a single bond, most preferably a single bond,

however under the condition that in $-X^{11}-Sp^1-X^{12}-$ no two O-atoms are adjacent to one another, now two -CH=CH- groups are adjacent to each other and no two groups selected from -O-CO-, -S-CO-, -O-COO-, -CO-S-, -CO-O- and -CH=CH- are adjacent to each other.

Preferably

$-X^{11}-Sp^1-X^{12}-$ is $-Sp^1-$ and

$Sp^1$ is $-(CH_2)_n-$ with

n 1, 3 or an integer from 5 to 15, most preferably an odd (i.e. uneven) integer and,

wherein one or more H atoms in $-(CH_2)_n-$ may independently of each other optionally be replaced by F or $CH_3$.

Preferred compounds of formula I are compounds in which

$MG^{11}$ and $MG^{12}$ are independently from one another a group of (partial) formula II

$$-A^{11}-(Z^{11}-A^{12})_k- \qquad II$$

wherein
at least one of

$Z^{11}$, which is present, is -COO-, or -OCO-, -O-CO-O-, $-OCH_2-$, $-CH_2O-$, $-OCF_2-$, $-CF_2O-$, $-CH_2CH_2-$, $-(CH_2)_4-$, $-CF_2CF_2-$, -CH=CH-, -CF=CF- or -C=C- (optionally substituted with one or more of F, S or Si), preferably -COO-, -OCO-, -O-CO-O-, $-OCH_2-$, $-CH_2O-$, $-OCF_2-$ or $-CF_2O-$ and the others present are, independently of those defined above and of each other -COO-, -OCO-, -O-CO-O-, $-OCH_2-$, $-CH_2O-$ $-OCF_2-$, $-CF_2O-$, $-CH_2CH_2-$, $-(CH_2)_4-$, $-CF_2CF_2-$, -CH=CH-, -CF=CF- or -C≡C- optionally substituted with one or more of F, S or are a single bond, preferably a single bond,

$A^{11}$ and $A^{12}$ are each independently in each occurrence 1,4-phenylene, wherein in addition one or more CH groups may be replaced by N, trans-1,4-cyclo-hexylene in which, in addition, one or two non-adjacent $CH_2$ groups may be replaced by O and/or S, 1,4-cyclohexenylene, 1,4-bicyclo-(2,2,2)-octylene, piperidine-1,4-diyl, naphthalene-2,6-diyl, decahydro-naphthalene-2,6-diyl, 1,2,3,4-tetrahydro-naphthalene-2,6-diyl, cyclobutane-1,3-diyl, spiro[3.3]heptane-2,6-diyl or dispiro[3.1.3.1] decane-2,8-diyl, it being possible for all these groups to be unsubstituted, mono-, di-, tri- or tetrasubstituted with F, Cl, CN or alkyl, alkoxy, alkylcarbonyl or alkoxycarbonyl groups with 1 to 7 C atoms, wherein one or more H atoms may be substituted by F or Cl, preferably F, Cl, $CH_3$ or $CF_3$, and

k is 1, 2, 3 or 4, preferably 1, 2 or 3 and, most preferably 1 or 2.

Especially preferred are compounds of formula I wherein the mesogenic groups $MG^{11}$ and $MG^{12}$ at each

occurrence independently from each other comprise one, two or three six-membered rings, preferably two or three six-membered rings.

A smaller group of preferred mesogenic groups of formula II is listed below. For reasons of simplicity, Phe in these groups is 1,4-phenylene, PheL is a 1,4-phenylene group which is substituted by 1 to 4 groups L, with L being preferably F, Cl, CN, OH, $NO_2$ or an optionally fluorinated alkyl, alkoxy or alkanoyl group with 1 to 7 C atoms, very preferably F, Cl, CN, OH, $NO_2$, $CH_3$, $C_2H_5$, $OCH_3$, $OC_2H_5$, $COCH_3$, $COC_2H_5$, $COOCH_3$, $COOC_2H_5$, $CF_3$, $OCF_3$, $OCHF_2$, $OC_2F_5$, in particular F, Cl, CN, $CH_3$, $C_2H_5$, $OCH_3$, $COCH_3$ and $OCF_3$, most preferably F, Cl, $CH_3$, $OCH_3$ and $COCH_3$ and Cyc is 1,4-cyclohexylene. This list comprises the subformulae shown below as well as their mirror images

| | |
|---|---|
| -Phe-Z-Phe- | II-1 |
| -Phe-Z-Cyc- | II-2 |
| -Cyc-Z-Cyc- | II-3 |
| -Phe-Z-PheL- | II-4 |
| -PheL-Z-Phe- | II-5 |
| -PheL-Z-Cyc- | II-6 |
| -PheL-Z-PheL- | II-7 |
| -Phe-Z-Phe-Z-Phe- | II-8 |
| -Phe-Z-Phe-Z-Cyc- | II-9 |
| -Phe-Z-Cyc-Z-Phe- | II-10 |
| -Cyc-Z-Phe-Z-Cyc- | II-11 |
| -Phe-Z-Cyc-Z-Cyc- | II-12 |
| -Cyc-Z-Cyc-Z-Cyc- | II-13 |
| -Phe-Z-Phe-Z-PheL- | II-14 |
| -Phe-Z-PheL-Z-Phe- | II-15 |
| -PheL-Z-Phe-Z-Phe- | II-16 |
| -PheL-Z-Phe-Z-PheL- | II-17 |
| -PheL-Z-PheL-Z-Phe- | II-18 |
| -PheL-Z-PheL-Z-PheL- | II-19 |
| -Phe-Z-PheL-Z-Cyc- | II-29 |
| -Phe-Z-Cyc-Z-PheL- | II-21 |
| -Cyc-Z-Phe-Z-PheL- | II-22 |
| -PheL-Z-Cyc-Z-PheL- | II-23 |
| -PheL-Z-PheL-Z-Cyc- | II-24 |
| -PheL-Z-Cyc-Z-Cyc- | II-25 |
| -Cyc-Z-PheL-Z-Cyc- | II-26 |

wherein

| | |
|---|---|
| Cyc | is 1,4-cyclohexlene, preferably trans-1,4-cyclohexlene, |
| Phe | is 1,4-phenylene, |
| PheL | is 1,4-phenylene, which is substituted by one, two or three fluorine atoms, by one or two Cl atoms or by one Cl atom and one F atom, and at least one of |
| Z | which is present, is -COO- or -OCO- and the other has one of the meanings of $Z^{11}$ as given under partial formula II. |

Particularly preferred are the sub-formulae II-1, II-4, II-5, II-7, II-8, II-14, II-15, II-16, II-17, II-18 and II-19.

Preferably one of Z is
-COO-, -OCO-, and the others preferably are a single bond.

Very preferably at least one of the mesogenic groups $MG^{11}$ and $MG^{12}$ is, and preferably both of them are each and independently, selected from the following formulae IIa to IIf and their mirror images

| | |
|---|---|
| 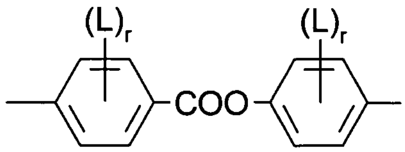 | IIa |
| 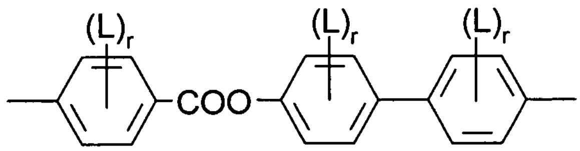 | IIb |
| 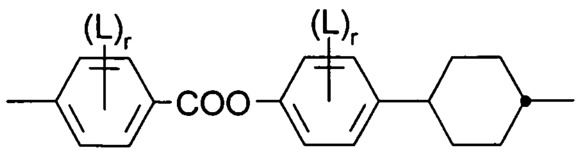 | IIc |
| 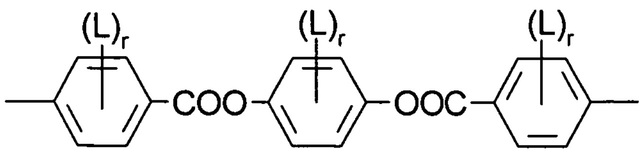 | IId |
| 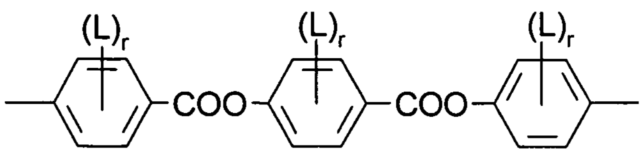 | IIe |
| 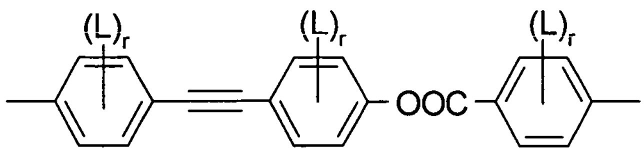 | IIf |

wherein

L is in each occurrence independently of each other F or Cl, preferably F and

r is in each occurrence independently of each other 0, 1, 2 or 3, preferably 0, 1 or 2.

The group

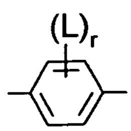

in these preferred formulae is very preferably denoting

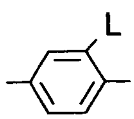 , 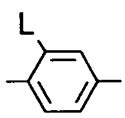 or 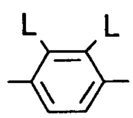 ,

furthermore

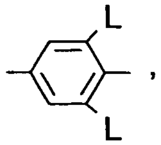

L is in each occurrence independently of each other F or Cl, F.

In case of compounds with a unpolar group, $R^{11}$ and $R^{12}$ are preferably alkyl with up to 15 C atoms or alkoxy with 2 to 15 C atoms.

If $R^{11}$ or $R^{12}$ is an alkyl or alkoxy radical, i.e. where the terminal $CH_2$ group is replaced by -O-, this may be straight-chain or branched. It is preferably straight-chain, has 2, 3, 4, 5, 6, 7 or 8 carbon atoms and accordingly is preferably ethyl, propyl, butyl, pentyl, hexyl, heptyl, octyl, ethoxy, propoxy, butoxy, pentoxy, hexoxy, heptoxy or octoxy, furthermore methyl, nonyl, decyl, undecyl, dodecyl, tridecyl, tetradecyl, pentadecyl, nonoxy, decoxy, undecoxy, dodecoxy, tridecoxy or tetradecoxy, for example.

Oxaalkyl, i.e. where one $CH_2$ group is replaced by -O-, is preferably straight-chain 2-oxapropyl (=methoxymethyl), 2- (=ethoxymethyl) or 3-oxabutyl (=2-methoxyethyl), 2-, 3- or 4-oxapentyl, 2-, 3-, 4- or 5-oxahexyl, 2-, 3-, 4-, 5- or 6-oxaheptyl, 2-, 3-, 4-, 5-, 6- or 7-oxaoctyl, 2-, 3-, 4-, 5-, 6-, 7- or 8-oxanonyl or 2-, 3-, 4-, 5-, 6-,7-, 8- or 9-oxadecyl, for example.

In case of a compounds with a terminal polar group, $R^{11}$ and $R^{12}$ are selected from CN, $NO_2$, halogen, $OCH_3$, OCN, SCN, $COR^x$, $COOR^x$ or a mono- oligo- or polyfluorinated alkyl or alkoxy group with 1 to 4 C atoms. $R^x$ is optionally fluorinated alkyl with 1 to 4, preferably 1 to 3 C atoms. Halogen is preferably F or Cl.

Especially preferably $R^{11}$ and $R^{12}$ in formula I are selected of H, F, Cl, CN, $NO_2$, $OCH_3$, $COCH_3$, $COC_2H_5$, $COOCH_3$, $COOC_2H_5$, $CF_3$, $C_2F_5$, $OCF_3$, $OCHF_2$, and $OC_2F_5$, in particular of H, F, Cl, CN, $OCH_3$ and $OCF_3$, especially of H, F, CN and $OCF_3$.

In addition, compounds of formula I containing an achiral branched group $R^{11}$ and/or $R^{12}$ may occasionally be of importance, for example, due to a reduction in the tendency towards crystallisation. Branched groups of this type generally do not contain more than one chain branch. Preferred achiral branched groups are isopropyl, isobutyl (=methylpropyl), isopentyl (=3-methylbutyl), isopropoxy, 2-methyl-propoxy and 3-methylbutoxy.

The spacer group $Sp^1$ is preferably a linear or branched alkylene group having 1, 3 or 5 to 40 C atoms, in particular 1, 3 or 5 to 25 C atoms, very preferably 1, 3 or 5 to 15 C atoms, and most preferably 5 to 15 C atoms, in which, in addition, one or more non-adjacent and non-terminal $CH_2$ groups may be replaced by -O-, -S-, -NH-, $-N(CH_3)-$, -CO-, -O-CO-, -S-CO-, -O-COO-, -CO-S-, -CO-O-, -CH(halogen)-, -CH(CN)-, -CH=CH- or -C≡C-.

"Terminal" $CH_2$ groups are those directly bonded to the mesogenic groups. Accordingly, "non-terminal" $CH_2$ groups are not directly bonded to the mesogenic groups $MG^{11}$ and $MG^{12}$.

Typical spacer groups are for example $-(CH_2)_o-$, $-(CH_2CH_2O)_p-CH_2CH_2-$, with o being an integer from 5 to 40, in particular from 5 to 25, very preferably from 5 to 15, and p being an integer from 1 to 8, in particular 1, 2, 3 or 4.

Preferred spacer groups are pentylene, hexylene, heptylene, octylene, nonylene, decylene, undecylene, dodecylene, octadecylene, diethyleneoxyethylene, dimethyleneoxybutylene, pentenylene, heptenylene, nonenylene and undecenylene, for example.

Especially preferred are inventive compounds of formula I wherein Sp is denoting alkylene with 5 to 15 C atoms. Straight-chain alkylene groups are especially preferred.

Preferred are spacer groups with even numbers of a straight-chain alkylene having 6, 8, 10, 12 and 14 C atoms.

In another embodiment of the present invention are the spacer groups preferably with odd numbers of a straight-chain alkylene having 5, 7, 9, 11, 13 or 15 C atoms. Very preferred are straight-chain alkylene spacers having 7, 9, and 11 C atoms.

Especially preferred are inventive compounds of formula I wherein Sp is denoting complete deuterated alkylene with 5 to 15 C atoms. Very preferred are deuterated straight-chain alkylene groups. Most preferred are partially deuterated straight-chain alkylene groups.

Preferred are compounds of formula I wherein the mesogenic groups $R^{11}$-$MG^{11}$- $X^{11}$- and $R^{12}$-$MG^{12}$- $X^{12}$- are different from each other. In another embodiment compounds of formula I wherein $R^{11}$-$MG^{11}$- $X^{11}$- and $R^{12}$-$MG^{12}$- $X^{12}$- in formula I are identical to each other.

Preferred compounds of formula I are selected from the group of compounds of formulae IA to IB

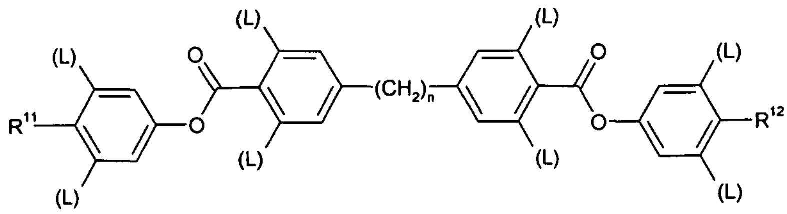

IA

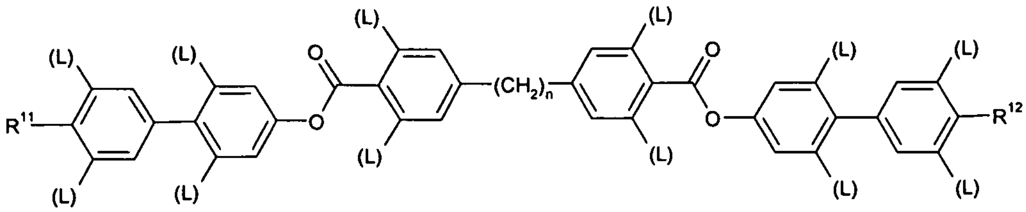

IB

wherein $R^{11}$ and $R^{12}$ are independently from each other as defined above, including the preferred meanings of these groups, preferably F or CN, and wherein L is in each occurrence independently of each other F, Cl or preferably F or Cl, most preferably F.

Particularly preferred compounds are selected from the group of formulae given above, which bear 0, 2 or 4 F atoms in lateral positions (i.e. as L).

The compounds of formula I can be synthesized according to or in analogy to methods which are known per se and which are described in standard works of organic chemistry such as, for example, Houben-Weyl, Methoden der organischen Chemie, Thieme-Verlag, Stuttgart. A preferred method of preparation can be taken from the following synthesis schemes.

The compounds of formula I are preferably accessible according to the following general reaction schemes.

Reaction Scheme I

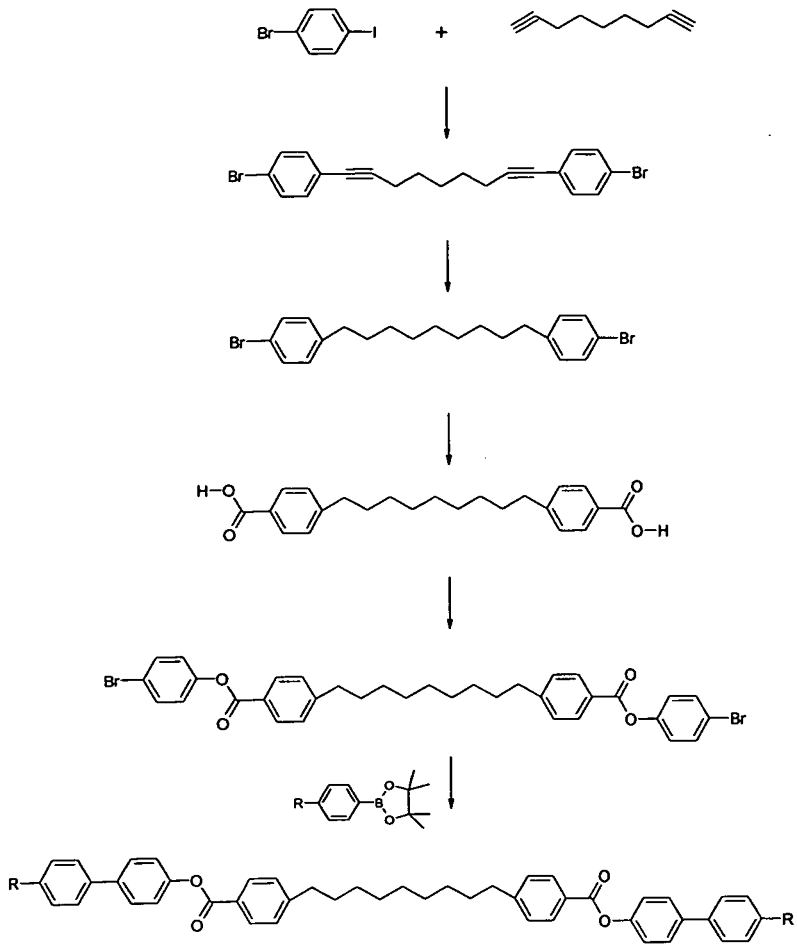

wherein R independently in each occurrence has the meaning given for of $R^{11}$ and $R^{12}$ including the preferred meanings of these groups, most preferably is F or CN, and the conditions of the successive reactions are as follows:

a) CuI, $Pd(PPh_3)_2Cl_2$,Triethylamine, 30°C;
b) $[H_2]$, Pd/C;
c) n-BuLi, CO2, -70°C;
d) DCC, DMAP, DCM, 25°C; and
e) $Pd(PPh_3)_2Cl_2$, NaCO3, THF, under reflux.

All phenylene moieties shown in this scheme and in the following schemes may independently of each other be optionally bearing one, two or three, preferably one or two, F atoms or one Cl atom or one Cl and one F atom. An exemplary reaction scheme for the preparation of such a fluorinated compound is shown in the following scheme.

## Reaction Scheme II

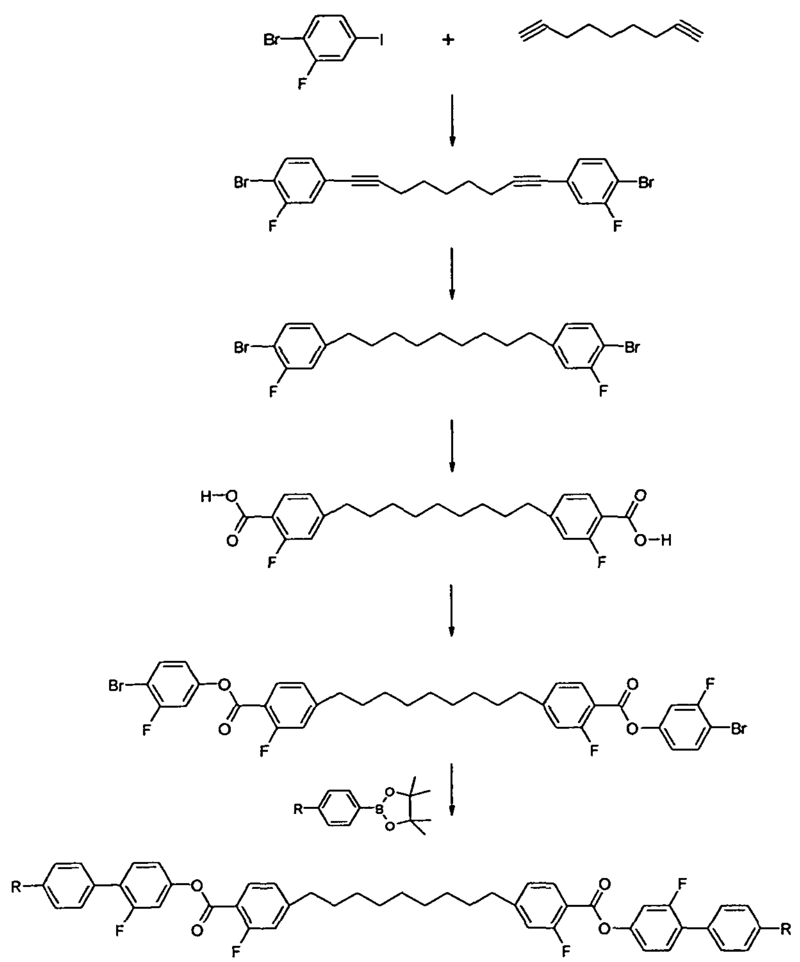

wherein R independently in each occurrence has the meaning given under scheme I and the conditions of the successive reactions are also as given under scheme I.

## Reaction Scheme III

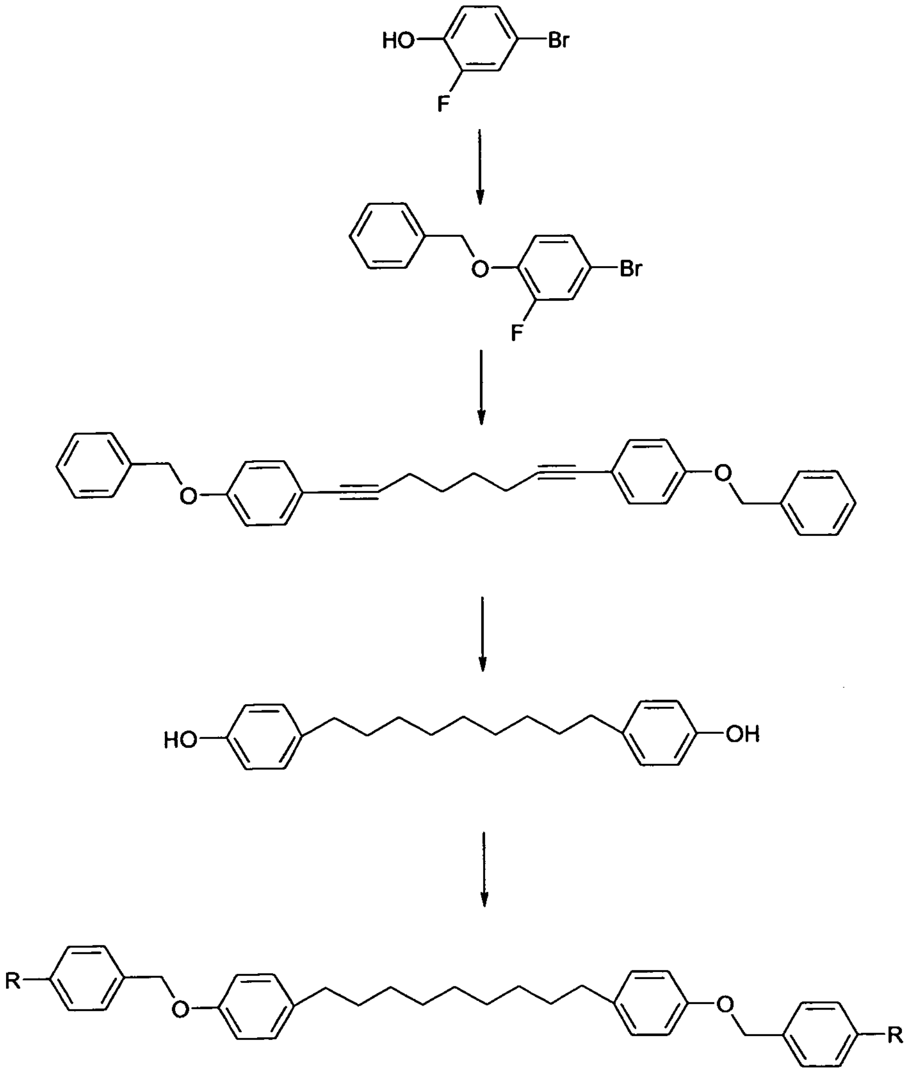

wherein R independently in each occurrence has the meaning given for $R^{11}$ and $R^{12}$ including the preferred meanings of these groups, most preferably is F or CN, and the conditions of the successive reactions are as follows:

a) benzylbromide, $K_2CO_3$ butanone, 80°C;
b) CuI, $Pd(PPh_3)_2Cl_2$,Triethylamine, 30°C;
c) $[H_2]$, Pd/C; and
d) $K_2CO_3$, butanone, 80°C.

Reaction Scheme IV

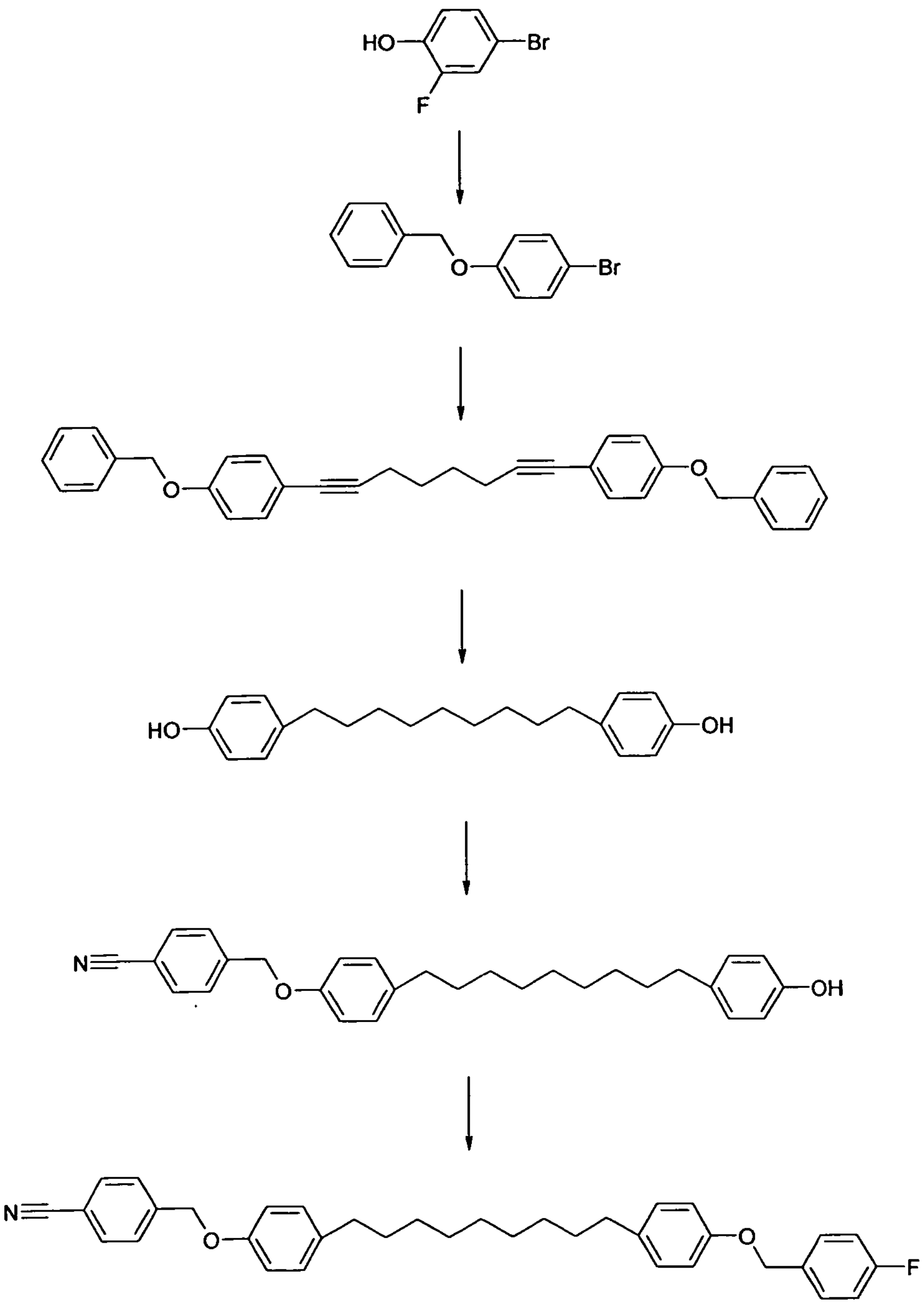

wherein the conditions of the successive reactions are as given under scheme III. Steps d) and e) are performed under the same conditions.

## Reaction Scheme V

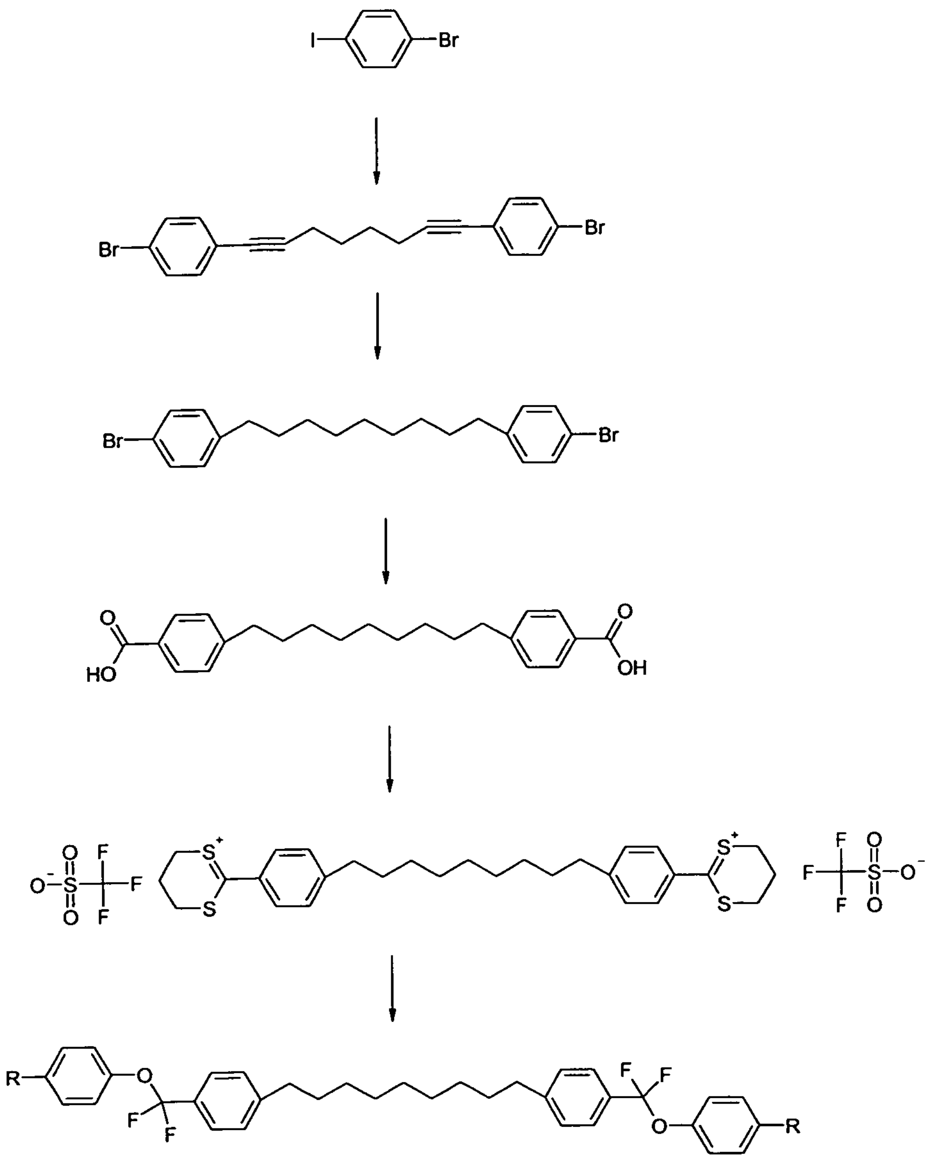

wherein R independently in each occurrence has the meaning given for $R^{11}$ and $R^{12}$ including the preferred meanings of these groups, most preferably is F or CN, and the conditions of the successive reactions are as follows:

a) CuI, $Pd(PPh_3)_2Cl_2$,Triethytamine, 30°C;
b) [$H_2$], Pd/C;
c) n-BuLi, THF, -70 0°C, $CO_2$;
d) $HSC_3H_6SH$, $CF_3SO_3H$,130°C; and
e)$N(C_2H_5)_3$, $3HF.N(C_2H_5)_3$, -70°C.

## Reaction Scheme III

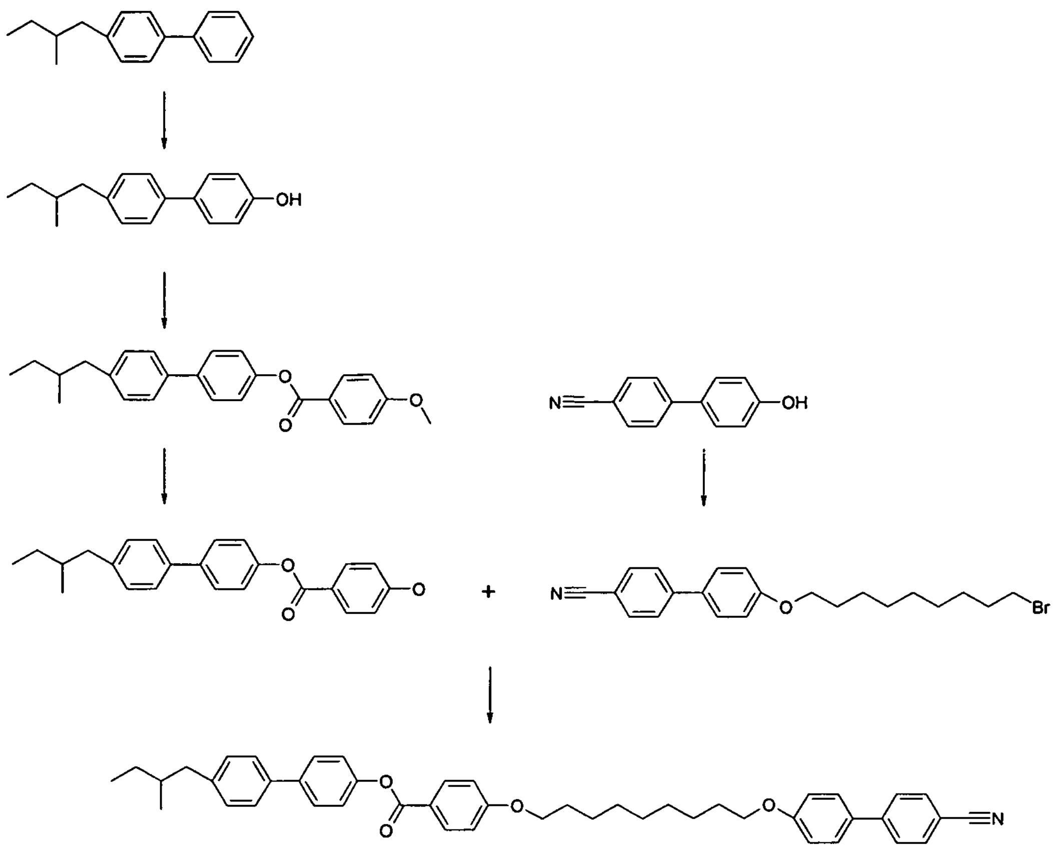

wherein the conditions of the successive reactions are as follows:

a) (i) HBr, 0°C; (ii) $H_2O_2$, 0°C;
b) DCC, DMAP, DCM;
c1)$AlCl_3$, $S(CH_3)_2$, DCM, 0°C;
c2) $K_2CO_3$, butanone, 80°C; and
d) $K_2CO_3$, butanone, 80°C.

Another object of the invention is the use of bimesogenic compounds of formula I in liquid crystalline media.

Compounds of formula I, when added to a nematic liquid crystalline mixture, producing a phase below the nematic. In this context, a first indication of the influence of bimesogenic compounds on nematic liquid crystal mixtures was reported by Barnes, P.J., Douglas, A.G., Heeks, S.K., Luckhurst, G.R., Liquid Crystals, 1993, Vol.13, No.4, 603-613. This reference exemplifies highly polar alkyl spacered dimers and perceives a phase below the nematic, concluding it is a type of smectic.

A photo evidence of an existing mesophase below the nematic phase was published by Henderson, P.A., Niemeyer, O., Imrie, C.T. in Liquid Crystals, 2001, Vol. 28, No.3, 463-472, which was not further investigated.

In Liquid Crystals, 2005, Vol. 32, No. 11-12, 1499-1513 Henderson, P.A., Seddon, J.M. and Imrie, C.T. reported, that the new phase below the nematic belonged in some special examples to a smectic C phase. A additional nematic phase below the first nematic was reported by Panov, V.P., Ngaraj, M., Vij, J.K., Panarin, Y.P., Kohlmeier, A., Tamba, M.G., Lewis, R.A. and Mehl, G.H. in Phys.Rev.Lett. 2010, 105, 1678011 - 1678014.

In this context, liquid crystal mixtures comprising the new and inventive bimesogenic compounds of formula I show also a novel mesophase that is being assigned as a second nematic phase. This mesophase exists at a lower temperature than the original nematic liquid crystalline phase and has been observed in the unique mixture concepts presented by this application.

Accordingly, the bimesogenic compounds of formula I according to the present invention allow the second nematic phase to be induced in nematic mixtures that do not have this phase normally. Furthermore, varying the amounts of compounds of formula I allow the phase behaviour of the second nematic to be tailored to the required temperature.

The invention thus relates to a liquid-crystalline medium which comprises at least one compound of the formula I.

Some preferred embodiments of the mixtures according to the invention are indicated below.

Preferred are compounds of formula I wherein the mesogenic groups $MG^{11}$ and $MG^{12}$ at each occurrence independently from each other comprise one, two or three six-membered rings, preferably two or three six-membered rings.

Particularly preferred are the partial formulae II-1, II-4, II-6, II-7, II-13, II-14, II-15, II-16, II-17 and II-18.

Preferably $R^{11}$ and $R^{12}$ in formula I are selected of H, F, Cl, CN, $NO_2$, $OCH_3$, $COCH_3$, $COC_2H_5$, $COOCH_3$, $COOC_2H_5$, $CF_3$, $C_2F_5$, $OCF_3$, $OCHF_2$, and $OC_2F_5$, in particular of H, F, Cl, CN, $OCH_3$ and $OCF_3$, especially of H, F, CN and $OCF_3$.

Typical spacer groups ($Sp^1$) are for example $-(CH_2)_o-$, $-(CH_2CH_2O)_p-CH_2CH_2-$, with o being 1, 3 or an integer from 5 to 40, in particular from 1, 3 or 5 to 25, very preferably from 5 to 15, and p being an integer from 1 to 8, in particular 1, 2, 3 or 4.

Preferred are compounds of formula I wherein $R^{11}$-$MG^{11}$-$X^{11}$- and $R^{12}$-$MG^{12}$-$X^{12}$- in formula I are identical.

The media according to the invention preferably comprise one, two, three, four or more, preferably one, two or three, compounds of the formula I.

The amount of compounds of formula I in the liquid crystalline medium is preferably from 1 to 50 %, in particular from 5 to 40 %, very preferably 10 to 30 % by weight of the total mixture.

In a preferred embodiment the liquid crystalline medium according to the present invention comprises additionally one or more compounds of formula III, like those or similar to those known from GB 2 356 629.

$$R^{31}\text{-}MG^{31}\text{-}X^{31}\text{-}Sp^{3}\text{-}X^{32}\text{-}MG^{32}\text{-}R^{32} \qquad \text{III}$$

wherein

| | |
|---|---|
| $R^{31}$ and $R^{32}$ | are each independently H, F, Cl, CN, NCS or a straight-chain or branched alkyl group with 1 to 25 C atoms which may be unsubstituted, mono- or polysubstituted by halogen or CN, it being also possible for one or more non-adjacent $CH_2$ groups to be replaced, in each case independently from one another, by -O-, -S-, -NH-, $-N(CH_3)-$, -CO-, -COO-, -OCO-, -O-CO-O-,-S-CO-, -CO-S-, -CH=CH-, -CH=CF-, -CF=CF- or -C≡C- in such a manner that oxygen atoms are not linked directly to one another, |
| $MG^{31}$ and $MG^{32}$ | are each independently a mesogenic group, |
| $Sp^3$ | is a spacer group comprising 5 to 40 C atoms, wherein one or more non-adjacent $CH_2$ groups may also be replaced by -O-, -S-, -NH-, $-N(CH_3)-$, -CO-, -O-CO-, -S-CO-, -O-COO-, -CO-S-, -CO-O-, -CH(halogen)-, -CH(CN)-, -CH=CH- or -C≡C-, and |
| $X^{31}$ and $X^{32}$ | are each independently -O-, -S-, -CO-, -COO-, -OCO-, -O-CO-O-, -CO-NH-, -NH-CO-, $-CH_2CH_2-$, $-OCH_2-$,$-CH_2O-$, $-SCH_2-$, $-CH_2S-$, -CH=CH-, -CH=CH-COO-, -OCO-CH=CH-, -C≡C- or a single bond, and |

with the condition that compounds of formula I are excluded.

The mesogenic groups $MG^{31}$ and $MG^{32}$ are preferably selected of formula II.

Especially preferred are compounds of formula III wherein $R^{31}$-$MG^{31}$-$X^{31}$- and $R^{32}$-$MG^{32}$-$X^{32}$- are identical.

Another preferred embodiment of the present invention relates to compounds of formula III wherein $R^{31}$-$MG^{31}$-$X^{31}$- and $R^{32}$-$MG^{32}$-$X^{32}$- are different.

Especially preferred are compounds of formula III wherein the mesogenic groups $MG^{31}$ and $MG^{32}$ comprise one, two or three six-membered rings very preferably are the mesogenic groups selected from formula II as listed below.

For $MG^{31}$ and $MG^{32}$ in formula III are particularly preferred are the subformulae II-1, II-4, II-6, II-7, II-13, II-14, II-15, II-16, II-17 and II-18. In these preferred groups Z in each case independently has one of the meanings of $Z^1$ as given in formula II. Preferably Z is -COO-, -OCO-, $-CH_2CH_2-$, -C≡C- or a single bond.

Very preferably the mesogenic groups $MG^{31}$ and $MG^{32}$ are selected from the formulae IIa to IIo and their mirror images.

In case of compounds with a unon-polar group, $R^{31}$ and $R^{32}$ are preferably alkyl with up to 15 C atoms or alkoxy with 2 to 15 C atoms.

If $R^{31}$ or $R^{32}$ is an alkyl or alkoxy radical, i.e. where the terminal $CH_2$ group is replaced by -O-, this may be straight-chain or branched. It is preferably straight-chain, has 2, 3, 4, 5, 6, 7 or 8 carbon atoms and accordingly is preferably ethyl, propyl, butyl, pentyl, hexyl, heptyl, octyl, ethoxy, propoxy, butoxy, pentoxy, hexoxy, heptoxy, or octoxy, furthermore methyl, nonyl, decyl, undecyl, dodecyl, tridecyl, tetradecyl, pentadecyl, nonoxy, decoxy, undecoxy, dodecoxy, tridecoxy

or tetradecoxy, for example.

Oxaalkyl, i.e. where one $CH_2$ group is replaced by -O-, is preferably straight-chain 2-oxapropyl (=methoxymethyl), 2- (=ethoxymethyl) or 3-oxabutyl (=2-methoxyethyl), 2-, 3-, or 4-oxapentyl, 2-, 3-, 4-, or 5-oxahexyl, 2-, 3-, 4-, 5-, or 6-oxaheptyl, 2-, 3-, 4-, 5-, 6- or 7-oxaoctyl, 2-, 3-, 4-, 5-, 6-, 7- or 8-oxanonyl or 2-, 3-, 4-, 5-, 6-,7-, 8- or 9-oxadecyl, for example.

In case of a compounds with a terminal polar group, $R^{31}$ and $R^{32}$ are selected from CN, $NO_2$, halogen, $OCH_3$, OCN, SCN, $COR^x$, $COOR^x$ or a mono- oligo- or polyfluorinated alkyl or alkoxy group with 1 to 4 C atoms. $R^x$ is optionally fluorinated alkyl with 1 to 4, preferably 1 to 3 C atoms. Halogen is preferably F or Cl.

Especially preferably $R^{31}$ and $R^{32}$ in formula III are selected of F, Cl, CN, $NO_2$, $OCH_3$, $COCH_3$, $COC_2H_5$, $COOCH_3$, $COOC_2H_5$, $CF_3$, $C_2F_5$, $OCF_3$, $OCHF_2$, and $OC_2F_5$, in particular of F, Cl, CN, $OCH_3$ and $OCF_3$.

As for the spacer group $Sp^3$ in formula III all groups can be used that are known for this purpose to the skilled in the art. The spacer group Sp is preferably a linear or branched alkylene group having 5 to 40 C atoms, in particular 5 to 25 C atoms, very preferably 5 to 15 C atoms, in which, in addition, one or more non-adjacent $CH_2$ groups may be replaced by -O-, -S-, -NH-, $-N(CH_3)-$, -CO-, -O-CO-, -S-CO-, -O-COO-, -CO-S-, -CO-O-, -CH(halogen)-, -CH(CN)-, -CH=CH- or -C≡C-.

Typical spacer groups are for example $-(CH_2)_o-$, $-(CH_2CH_2O)_p-CH_2CH_2-$, $-CH_2CH_2-S-CH_2CH_2-$ or $-CH_2CH_2-NH-CH_2CH_2-$, with o being an integer from 5 to 40, in particular from 5 to 25, very preferably from 5 to 15, and p being an integer from 1 to 8, in particular 1, 2, 3 or 4.

Preferred spacer groups are pentylene, hexylene, heptylene, octylene, nonylene, decylene, undecylene, dodecylene, octadecylene, diethyleneoxyethylene, dimethyleneoxybutylene, pentenylene, heptenylene, nonenylene and undecenylene, for example.

Especially preferred are inventive compounds of formula III wherein $Sp^3$ is denoting alkylene with 5 to 15 C atoms. Straight-chain alkylene groups are especially preferred.

In another preferred embodiment of the invention the chiral compounds of formula III comprise at least one spacer group $Sp^1$ that is a chiral group of the formula IV.

$X^{31}$ and $X^{32}$ in formula III denote preferably -O-, -CO-, -COO-, -OCO-, -O-CO-O- or a single bond. Particularly preferred are the following compounds selected from formulae III-1 to III-4:

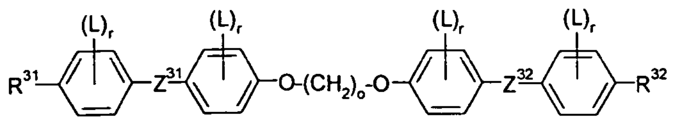

III-1

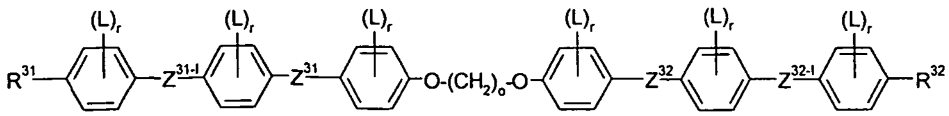

III-2

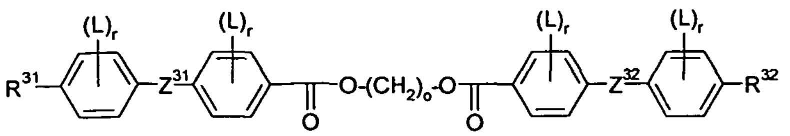

III-3

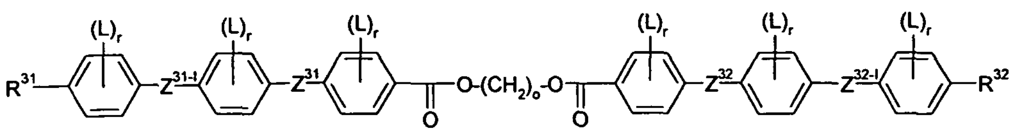

III-4

wherein $R^{31}$, $R^{32}$ have the meaning given under formula III, $Z^{31}$ and $Z^{31\text{-}I}$ are defined as $Z^{31}$ and $Z^{32}$ and $Z^{32\text{-}I}$ are respectively the reverse groups of $Z^{31}$ and $Z^{32\text{-}I}$ in formula III and o and r are independently at each occurrence as defined above, including the preferred meanings of these groups and wherein L is in each occurrence independently of each other preferably F, Cl, CN, OH, $NO_2$ or an optionally fluorinated alkyl, alkoxy or alkanoyl group with 1 to 7 C atoms, very preferably F, Cl, CN, OH, $NO_2$, $CH_3$, $C_2H_5$, $OCH_3$, $OC_2H_5$, $COCH_3$, $COC_2H_5$. $COOCH_3$, $COOC_2H_5$, $CF_3$, $OCF_3$, $OCHF_2$, $OC_2F_5$, in particular F, Cl, CN, $CH_3$, $C_2H_5$, $OCH_3$, $COCH_3$ and $OCF_3$, most preferably F, Cl, $CH_3$, $OCH_3$ and $COCH_3$ and from which compounds of formula I are excluded.

Particularly preferred mixtures according to the invention comprise one or more compounds of the formulae

III-1a to III-1e and III-3a to III-3b.

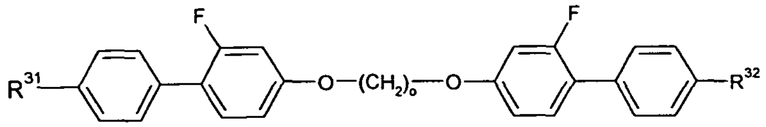

III-1a

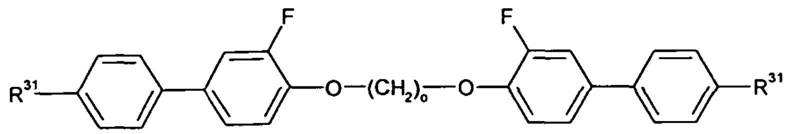

III-1b

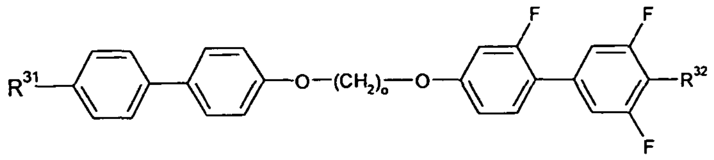

III-1c

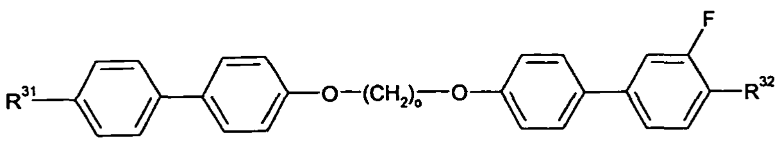

III-1d

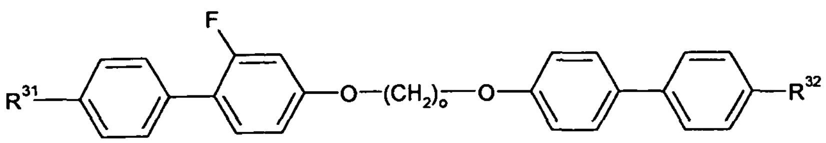

III-1e

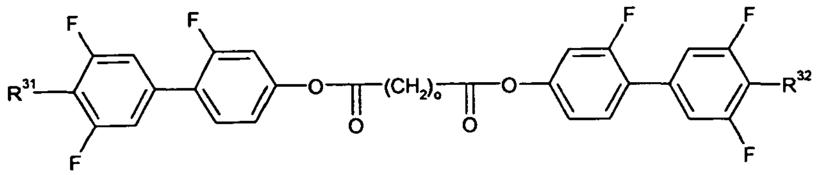

III-3a

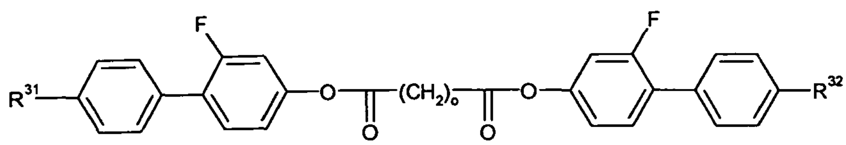

III-3b

wherein the parameters are as defined above.

In a preferred embodiment of the invention the liquid crystalline medium is consisting of 2 to 25, preferably 3 to 15 compounds of formula III.

The amount of compounds of formula III in the liquid crystalline medium is preferably from 10 to 95 %, in particular from 15 to 90 %, very preferably 20 to 85 % by weight of the total mixture.

Preferably, the proportion of compounds of the formulae III-1a and/or III-1b and/or III-1c and/or III-1e and or III-3a and/or III-3b in the medium as a whole is preferably at least 70 % by weight.

Particularly preferred media according to the invention comprise at least one or more chiral dopants which themselves do not necessarily have to show a liquid crystalline phase and give good uniform alignment themselves.

Especially preferred are chiral dopants selected from formula IV

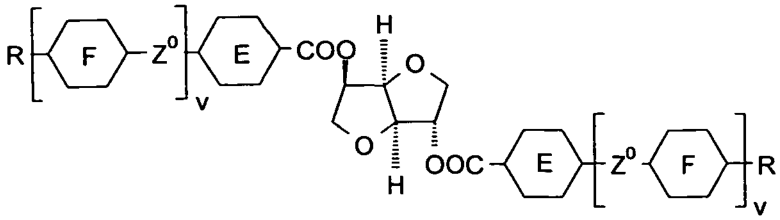

IV

and formula V

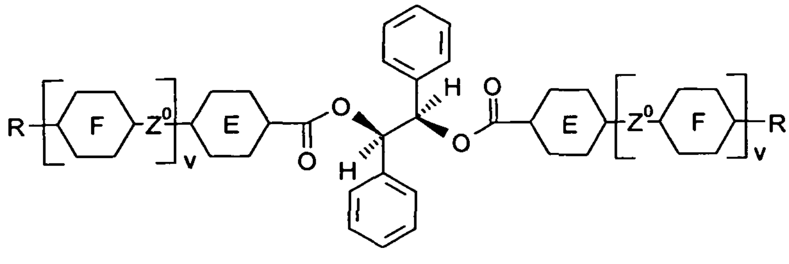

V

including the respective (S,S) enantiomer,

wherein E and F are each independently 1,4-phenylene or trans-1,4-cyclohexylene, v is 0 or 1, $Z^0$ is -COO-, -OCO-, $-CH_2CH_2-$ or a single bond, and R is alkyl, alkoxy or alkanoyl with 1 to 12 C atoms.

The compounds of formula IV and their synthesis are described in WO 98/00428. Especially preferred is the compound CD-1, as shown in table D below. The compounds of formula V and their synthesis are described in GB 2,328,207.

Especially preferred are chiral dopants with a high helical twisting power (HTP), in particular those disclosed in WO 98/00428.

Further typically used chiral dopants are e.g. the commercially available R/S-5011, CD-1, R/S-811 and CB-15 (from Merck KGaA, Darmstadt, Germany).

The above mentioned chiral compounds R/S-5011 and CD-1 and the compounds of formula IV and V exhibit a very high helical twisting power (HTP), and are therefore particularly useful for the purpose of the present invention.

The liquid crystalline medium preferably comprises preferably 1 to 5, in particular 1 to 3, very preferably 1 or 2 chiral dopants, preferably selected from the above formula IV, in particular CD-1, and/or formula V and/or R-5011 or S-5011, very preferably the chiral compound is R-5011, S-5011 or CD-1.

The amount of chiral compounds in the liquid crystalline medium is preferably from 1 to 20 %, in particular from 1 to 15 %, very preferably 1 to 10 % by weight of the total mixture.

Further preferred are liquid crystalline media comprising one or more additives selected from the following formula VI

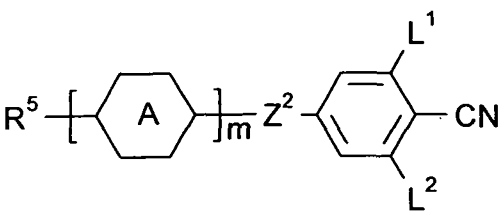

VI

wherein

$R^5$ is alkyl, alkoxy, alkenyl or alkenyloxy with up to 12 C atoms,

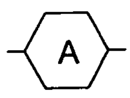

is

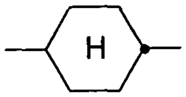 , 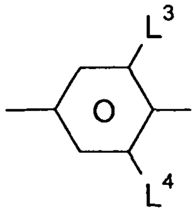 , 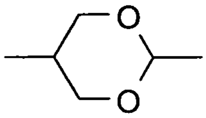 or 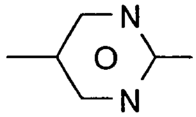 ,

| | |
|---|---|
| $L^1$ through $L^4$ | are each independently H or F, |
| $Z^2$ | is -COO-, $-CH_2CH_2-$ or a single bond, |
| m | is 1 or 2 |

Particularly preferred compounds of formula VI are selected from the following formulae

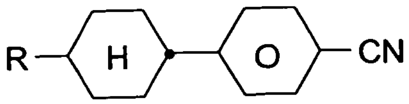 VIa

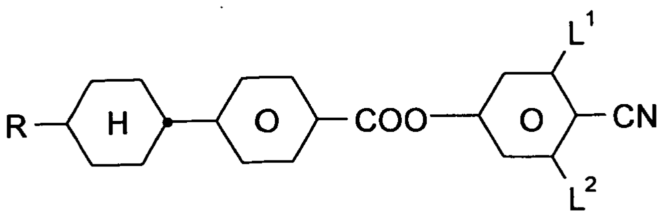 VIb

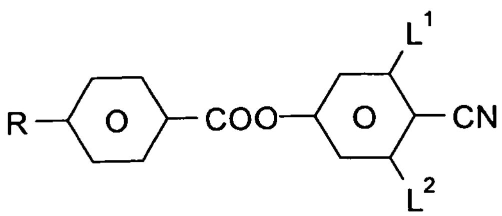 VIc

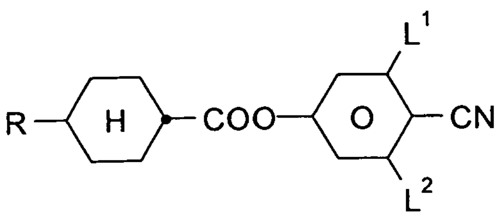 VId

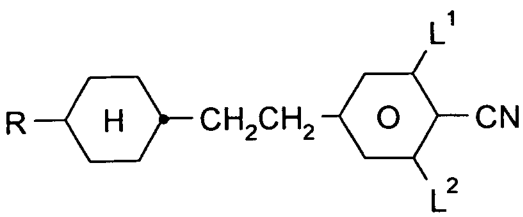 VIe

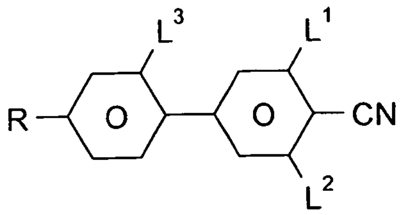

VIf

wherein, R has one of the meanings of $R^5$ above and $L^1$, $L^2$ and $L^3$ have the above meanings.

The liquid crystalline medium preferably comprises preferably 1 to 5, in particular 1 to 3, very preferably 1 or 2, preferably selected from the above formulae VIa to VIf, very preferably from formulae VIf.

The amount of suitable additives of formula VI in the liquid crystalline medium is preferably from 1 to 20 %, in particular from 1 to 15 %, very preferably 1 to 10 % by weight of the total mixture.

The liquid crystal media according to the present invention may contain further additives in usual concentrations. The total concentration of these further constituents is in the range of 0.1 % to 10 %, preferably 0.1 % to 6 %, based on the total mixture. The concentrations of the individual compounds used each are preferably in the range of 0.1 % to 3 %. The concentration of these and of similar additives is not taken into consideration for the values and ranges of the concentrations of the liquid crystal components and compounds of the liquid crystal media in this application. This also holds for the concentration of the dichroic dyes used in the mixtures, which are not counted when the concentrations of the compounds respectively the components of the host medium are specified. The concentration of the respective additives is always given relative to the final doped mixture.

The liquid crystal media according to the present invention consists of several compounds, preferably of 3 to 30, more preferably of 4 to 20 and most preferably of 4 to 16 compounds. These compounds are mixed in conventional way. As a rule, the required amount of the compound used in the smaller amount is dissolved in the compound used in the greater amount. In case the temperature is above the clearing point of the compound used in the higher concentration, it is particularly easy to observe completion of the process of dissolution. It is, however, also possible to prepare the media by other conventional ways, e.g. using so called pre-mixtures, which can be e.g. homologous or eutectic mixtures of compounds or using so called multi-bottle-systems, the constituents of which are ready to use mixtures themselves.

Particularly preferred mixture concepts are indicated below: (the acronyms used are explained in Table A).

The mixtures according to the invention preferably comprise

- one or more compounds of formula I in a total concentration in the range from 1 to 50 %, in particular from 5 to 40 %, very preferably 10 to 30 % by weight of the total mixture

and/or

- one or more compounds of formula III in a total concentration in the range from 10 to 95 %, in particular from 15 to 90 %, very preferably 20 to 85 % by weight of the total mixture, preferably these compounds are selected from formulae III-1a to III-1e and III-3a to III-3b especially preferred they comprise

  - N-PGI-ZI-n-Z-GP-N, preferably N-PGI-ZI-7-Z-GP-N and/or N-PGI-ZI-9-Z-GP-N preferably in concentrations > 5 %, in particular 10-30 %, based on the mixture as a whole,

  and/or

  - F-UIGI-ZI-n-Z-GU-F, preferably F-UIGI-ZI-9-Z-GU-F, preferably in concentrations > 5 %, in particular 10-30 %, based on the mixture as a whole,

  and/or

  - F-PGI-O-n-O-PP-N, preferably F-PGI-O-9-O-PP-, preferably in concentrations of > 1 %, in particular 1-20 %, based on the mixture as a whole,

  and/or

  - N-PP-O-n-O-PG-OT, preferably N-PP-O-7-O-PG-OT, preferably in concentrations of > 5 %, in particular 5-30 %, based on the mixture as a whole,

and/or

- N-PP-O-n-O-GU-F, preferably N-PP-O-9-O-GU-F, preferably in concentrations of > 1 %, in particular 1-20 %, based on the mixture as a whole,

and/or

- F-PGI-O-n-O-GP-F, preferably F-PGI-O-7-O-GP-F and/or F-PGI-O-9-O-GP-F preferably in concentrations of > 1 %, in particular 1-20 %, based on the mixture as a whole,

and/or

- N-GIGIGI-n-GGG-N, in particular N-GIGIGI-9-GGG-N, preferably in concentration > 5 %, in particular 10-30 %, based on the mixture as a whole,

and/or

- N-PGI-n-GP-N, preferably N-PGI-9-GP-N, preferably in concentrations > 5 %, in particular 15-50 %, based on the mixture as a whole,

and/or

- one or more suitable additives of formula VI in a total concentration in the range from 1 to 20 %, in particular from 1 to 15 %, very preferably 1 to 10 % by weight of the total mixture, preferably are these compounds selected from formula VIa to VIf, especially preferred they comprise

  - PP-n-N, preferably in concentrations of > 1 %, in particular 1-20 %, based on the mixture as a whole,

and/or

- one or more chiral compounds preferably in a total concentration in the range from 1 to 20 %, in particular from 1 to 15 %, very preferably 1 to 10 % by weight of the total mixture, preferably these compounds are selected from formula IV, V, and R-5011 or S-5011, especially preferred they comprise

  - R-5011, S-5011 or CD-1, preferably in a concentration of > 1 %, in particular 1-20 %, based on the mixture as a whole.

The bimesogenic compounds of formula I and the liquid crystalline media comprising them can be used in liquid crystal displays, such as STN, TN, AMD-TN, temperature compensation, guest-host, phase change or surface stabilized or polymer stabilized cholesteric texture (SSCT, PSCT) displays, in particular in flexoelectric devices, in active and passive optical elements like polarizers, compensators, reflectors, alignment layers, color filters or holographic elements, in adhesives, synthetic resins with anisotropic mechanical properties, cosmetics, diagnostics, liquid crystal pigments, for decorative and security applications, in nonlinear optics, optical information storage or as chiral dopants.

The compounds of formula I and the mixtures obtainable thereof are particularly useful for flexoelectric liquid crystal display. Thus, another object of the present invention is a flexoelectric display comprising one or more compounds of formula I or comprising a liquid crystal medium comprising one or more compounds of formula I.

The inventive bimesogenic compounds of formula I and the mixtures thereof can be aligned in their cholesteric phase into different states of orientation by methods that are known to the expert, such as surface treatment or electric fields. For example, they can be aligned into the planar (Grandjean) state, into the focal conic state or into the homeotropic state. Inventive compounds of formula I comprising polar groups with a strong dipole moment can further be subjected to flexoelectric switching, and can thus be used in electrooptical switches or liquid crystal displays.

The switching between different states of orientation according to a preferred embodiment of the present invention is exemplarily described below in detail for a sample of an inventive compound of formula I.

According to this preferred embodiment, the sample is placed into a cell comprising two plane-parallel glass plates coated with electrode layers, e.g. ITO layers, and aligned in its cholesteric phase into a planar state wherein the axis of the cholesteric helix is oriented normal to the cell walls. This state is also known as Grandjean state, and the texture of the sample, which is observable e.g. in a polarization microscope, as Grandjean texture. Planar alignment can be achieved e.g. by surface treatment of the cell walls, for example by rubbing and/or coating with an alignment

layer such as polyimide.

A Grandjean state with a high quality of alignment and only few defects can further be achieved by heating the sample to the isotropic phase, subsequently cooling to the chiral nematic phase at a temperature close to the chiral nematic-isotropic phase transition, and rubbing the cell.

In the planar state, the sample shows selective reflection of incident light, with the central wavelength of reflection depending on the helical pitch and the mean refractive index of the material.

When an electric field is applied to the electrodes, for example with a frequency from 10 Hz to 1 kHz, and an amplitude of up to 12 $V_{rms}$ /□m, the sample is being switched into a homeotropic state where the helix is unwound and the molecules are oriented parallel to the field, i.e. normal to the plane of the electrodes. In the homeotropic state, the sample is transmissive when viewed in normal daylight, and appears black when being put between crossed polarizers.

Upon reduction or removal of the electric field in the homeotropic state, the sample adopts a focal conic texture, where the molecules exhibit a helically twisted structure with the helical axis being oriented perpendicular to the field, i.e. parallel to the plane of the electrodes. A focal conic state can also be achieved by applying only a weak electric field to a sample in its planar state. In the focal conic state the sample is scattering when viewed in normal daylight and appears bright between crossed polarizers.

A sample of an inventive compound in the different states of orientation exhibits different transmission of light. Therefore, the respective state of orientation, as well as its quality of alignment, can be controlled by measuring the light transmission of the sample depending on the strength of the applied electric field. Thereby it is also possible to determine the electric field strength required to achieve specific states of orientation and transitions between these different states.

In a sample of an inventive compound of formula I, the above described focal conic state consists of many disordered birefringent small domains. By applying an electric field greater than the field for nucleation of the focal conic texture, preferably with additional shearing of the cell, a uniformly aligned texture is achieved where the helical axis is parallel to the plane of the electrodes in large, well-aligned areas. In accordance with the literature on state of the art chiral nematic materials, such as P. Rudquist et al., Liq. Cryst. 23 (4), 503 (1997), this texture is also called uniformly-lying helix (ULH) texture. This texture is required to characterize the flexoelectric properties of the inventive compound.

The sequence of textures typically observed in a sample of an inventive compound of formula I on a rubbed polyimide substrate upon increasing or decreasing electric field is given below:

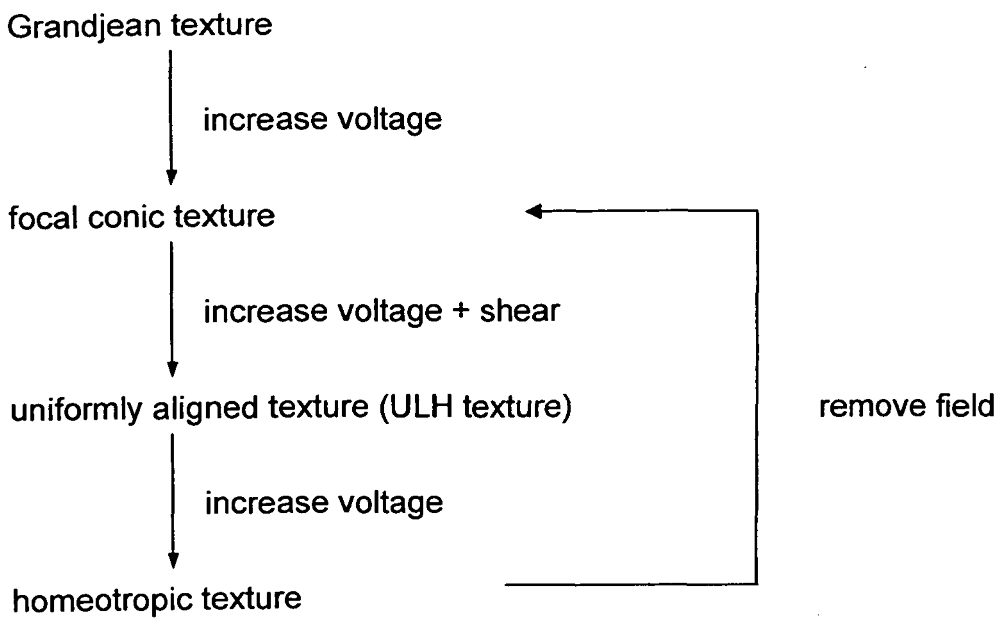


Starting from the ULH texture, the inventive flexoelectric compounds and mixtures can be subjected to flexoelectric switching by application of an electric field. This causes rotation of the optic axis of the material in the plane of the cell substrates, which leads to a change in transmission when placing the material between crossed polarizers. The flexoelectric switching of inventive materials is further described in detail in the introduction above and in the examples.

It is also possible to obtain the ULH texture, starting from the focal conic texture, by applying an electric field with a high frequency, of for example 10 kHz, to the sample whilst cooling slowly from the isotropic phase into the cholesteric phase and shearing the cell. The field frequency may differ for different compounds.

The bimesogenic compounds of formula I are particularly useful in flexoelectric liquid crystal displays as they can easily be aligned into macroscopically uniform orientation, and lead to high values of the elastic constant $k_{11}$ and a

high flexoelectric coefficient e in the liquid crystal medium.

The liquid crystal medium preferably exhibits a $k_{11} < 1\times10^{-10}$ N, preferably $< 2\times10^{-11}$ N, and a flexoelectric coefficient $e > 1\times10^{-11}$ C/m, preferably $> 1\times10^{-10}$ C/m.

Apart from the use in flexoelectric devices, the inventive bimesogenic compounds as well as mixtures thereof are also suitable for other types of displays and other optical and electrooptical applications, such as optical compensation or polarizing films, color filters, reflective cholesterics, optical rotatory power and optical information storage.

A further aspect of the present invention relates to a display cell wherein the cell walls exhibit hybrid alignment conditions. The term "hybrid alignment" or orientation of a liquid crystal or mesogenic material in a display cell or between two substrates means that the mesogenic groups adjacent to the first cell wall or on the first substrate exhibit homeotropic orientation and the mesogenic groups adjacent to the second cell wall or on the second substrate exhibit planar orientation.

The term "homeotropic alignment" or orientation of a liquid crystal or mesogenic material in a display cell or on a substrate means that the mesogenic groups in the liquid crystal or mesogenic material are oriented substantially perpendicular to the plane of the cell or substrate, respectively.

The term "planar alignment" or orientation of a liquid crystal or mesogenic material in a display cell or on a substrate means that the mesogenic groups in the liquid crystal or mesogenic material are oriented substantially parallel to the plane of the cell or substrate, respectively.

A flexoelectric display according to a preferred embodiment of the present invention comprises two plane parallel substrates, preferably glass plates covered with a transparent conductive layer such as indium tin oxide (ITO) on their inner surfaces, and a flexoelectric liquid crystalline medium provided between the substrates, characterized in that one of the inner substrate surfaces exhibits homeotropic alignment conditions and the opposite inner substrate surface exhibits planar alignment conditions for the liquid crystalline medium.

Planar alignment can be achieved e.g. by means of an alignment layer, for example a layer of rubbed polyimide or sputtered $SiO_x$, that is applied on top of the substrate.

Alternatively it is possible to directly rub the substrate, i.e. without applying an additional alignment layer. For example, rubbing can be achieved by means of a rubbing cloth, such as a velvet cloth, or with a flat bar coated with a rubbing cloth. In a preferred embodiment of the present invention rubbing is achieved by means of a at least one rubbing roller, like e.g. a fast spinning roller that is brushing across the substrate, or by putting the substrate between at least two rollers, wherein in each case at least one of the rollers is optionally covered with a rubbing cloth. In another preferred embodiment of the present invention rubbing is achieved by wrapping the substrate at least partially at a defined angle around a roller that is preferably coated with a rubbing cloth.

Homeotropic alignment can be achieved e.g. by means of an alignment layer coated on top of the substrate. Suitable aligning agents used on glass substrates are for example alkyltrichlorosilane or lecithine, whereas for plastic substrate thin layers of lecithine, silica or high tilt polyimide orientation films as aligning agents may be used. In a preferred embodiment of the invention silica coated plastic film is used as a substrate.

Further suitable methods to achieve planar or homeotropic alignment are described for example in J. Cognard, Mol.Cryst.Liq.Cryst. 78, Supplement 1, 1-77 (1981).

By using a display cell with hybrid alignment conditions, a very high switching angle of flexoelectric switching, fast response times and a good contrast can be achieved.

The flexoelectric display according to present invention may also comprise plastic substrates instead of glass substrates. Plastic film substrates are particularly suitable for rubbing treatment by rubbing rollers as described above.

Another object of the present invention is that compounds of formula I, when added to a nematic liquid crystalline mixture, produce a phase below the nematic.

Accordingly, the bimesogenic compounds of formula I according to the present invention allow the second nematic phase to be induced in nematic mixtures that do not show evidence of this phase normally. Furthermore, varying the amounts of compounds of formula I allow the phase behaviour of the second nematic to be tailored to the required temperature.

Examples for this are given and the mixtures obtainable thereof are particularly useful for flexoelectric liquid crystal display. Thus, another object of the present invention is liquid crystal media comprising one or more compounds of formula I exhibiting a second nematic phase.

Without further elaboration, it is believed that one skilled in the art can, using the preceding description, utilize the present invention to its fullest extent. The following examples are, therefore, to be construed as merely illustrative and not limitative of the remainder of the disclosure in any way whatsoever.

Unless the context clearly indicates otherwise, as used herein plural forms of the terms herein are to be construed as including the singular form and vice versa.

Throughout the description and claims of this specification, the words "comprise" and "contain" and variations of the words, for example "comprising" and "comprises", mean "including but not limited to", and are not intended to (and do not) exclude other components.

Throughout the present application it is to be understood that the angles of the bonds at a C atom being bound

to three adjacent atoms, e.g. in a C=C or C=O double bond or e.g. in a benzene ring, are 120° and that the angles of the bonds at a C atom being bound to two adjacent atoms, e.g. in a C=C or in a C=N triple bond or in an allylic position C=C=C are 180°, unless these angles are otherwise restricted, e.g. like being part of small rings, like 3-, 5- or 5-atomic rings, notwithstanding that in some instances in some structural formulae these angles are not represented exactly.

It will be appreciated that variations to the foregoing embodiments of the invention can be made while still falling within the scope of the invention. Each feature disclosed in this specification, unless stated otherwise, may be replaced by alternative features serving the same, equivalent or similar purpose. Thus, unless stated otherwise, each feature disclosed is one example only of a generic series of equivalent or similar features.

All of the features disclosed in this specification may be combined in any combination, except combinations where at least some of such features and/or steps are mutually exclusive. In particular, the preferred features of the invention are applicable to all aspects of the invention and may be used in any combination. Likewise, features described in non-essential combinations may be used separately (not in combination).

The total concentration of all compounds in the media according to this application is 100 %.

In the foregoing and in the following examples, unless otherwise indicated, all temperatures are set forth uncorrected in degrees Celsius and all parts and percentages are by weight.

The following abbreviations are used to illustrate the liquid crystalline phase behavior of the compounds: K = crystalline; N = nematic; N2 = second nematic; S = smectic; Ch = cholesteric; I = isotropic; Tg = glass transition. The numbers between the symbols indicate the phase transition temperatures in °C.

In the present application and especially in the following examples, the structures of the liquid crystal compounds are represented by abbreviations, which are also called "acronyms". The transformation of the abbreviations into the corresponding structures is straight forward according to the following three tables A to C.

All groups $C_nH_{2n+1}$, $C_mH_{2m+1}$, and $C_lH2_{l+1}$are preferably straight chain alkyl groups with n, m and l C-atoms, respectively, all groups $C_nH_{2n}$, $C_mH_{2m}$ and $C_lH_{2l}$, are preferably $(CH_2)_n$, $(CH_2)_m$ and $(CH_2)_l$, respectively and -CH=CH- preferably is *trans*- respectively E vinylene.

Table A lists the symbols used for the ring elements, table B those for the linking groups and table C those for the symbols for the left hand and the right hand end groups of the molecules.

Table D lists exemplary molecular structures together with their respective codes.

**Table A: Ring Elements**

| | | | |
|---|---|---|---|
| C | 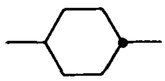 | P | 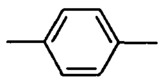 |
| D | 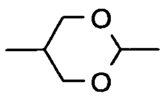 | DI | 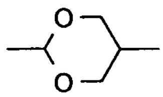 |
| A | 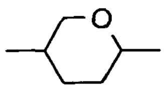 | AI | 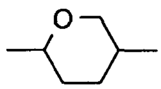 |
| G | 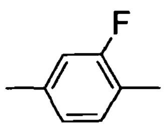 | GI | 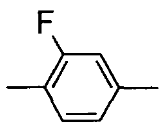 |
| G(Cl) | 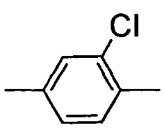 | GI(Cl) | 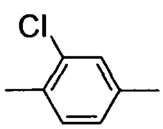 |
| G(1) | 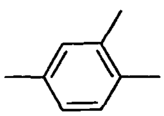 | GI(1) | 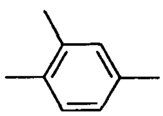 |
| U | 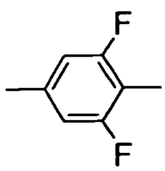 | UI | 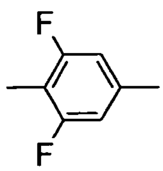 |

(continued)

| | | | |
|---|---|---|---|
| **Y** | 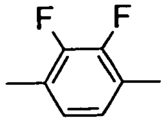 | | |
| **M** | 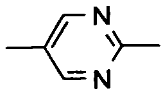 | **MI** | 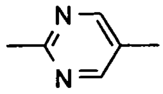 |
| **N** | 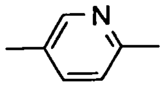 | **NI** | 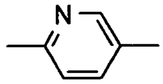 |
| **np** | 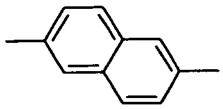 | | |
| **n3f** | 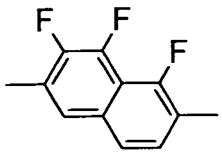 | **n3fl** | 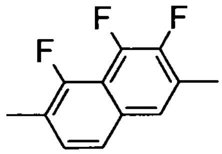 |
| **th** | 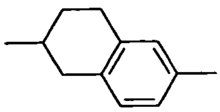 | **thl** | 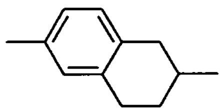 |
| **th2f** | 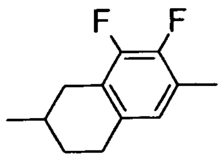 | **th2fl** | 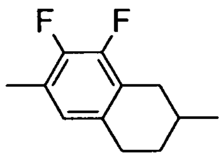 |
| **o2f** | 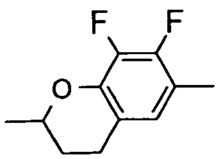 | **o2fl** | 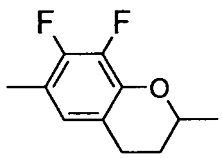 |
| **dh** | 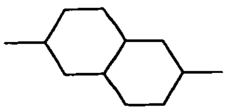 | | |
| **K** | 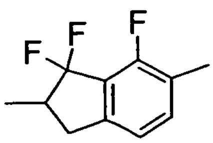 | **KI** | 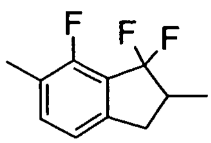 |
| **L** | 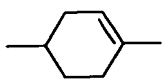 | **LI** | 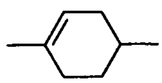 |
| **F** | 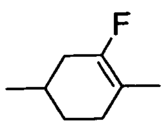 | **FI** | 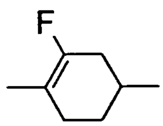 |

**Table B: Linking Groups**

| | | |
|---|---|---|
| **n** | $(-CH_2-)n$ | **"n" is an integer except 0 and 2** |

(continued)

| | | | |
|---|---|---|---|
| **E** | $-CH_2-CH_2-$ | | |
| **V** | -CH=CH- | | |
| **T** | -C=C- | | |
| **W** | $-CF_2-CF_2-$ | | |
| **B** | -CF=CF- | | |
| **Z** | -CO-O- | **ZI** | -O-CO- |
| **X** | -CF=CH- | **XI** | -CH=CF- |
| **1O** | $-CH_2-O$ | **O1** | $-O-CH_2-$ |
| **Q** | $-CF_2-O-$ | **QI** | $-O-CF_2-$ |

**Table C: End Groups**

| **Left hand side, used alone or in combination with others** | | **Right hand side, used alone or in combination with others** | |
|---|---|---|---|
| **-n-** | $C_nH_{2n+1}-$ | **-n** | $-C_nH_{2n+1}$ |
| **-nO-** | $C_nH_{2n+1}O-$ | **-nO** | $-O-C_nH_{2n+1}$ |
| **-V-** | $CH_2=CH-$ | **-V** | $-CH=CH_2$ |
| **-nV-** | $C_nH_{2n+1}-CH=CH-$ | **-nV** | $-C_nH_{2n}-CH=CH_2$ |
| **-Vn-** | $CH_2=CH- C_nH_{2n}-$ | **-Vn** | $-CH=CH-C_nH_{2n+1}$ |
| **-nVm-** | $C_nH_{2n+1}-CH=CH-C_mH_{2m}-$ | **-nVm** | $-C_nH_{2n}-CH=CH-C_mH_{2m+1}$ |
| **-N-** | N=C- | **-N** | -C≡N |
| **-S-** | S=C=N- | **-S** | -N=C=S |
| **-F-** | F- | **-F** | -F |
| **-CL-** | Cl- | **-CL** | -Cl |
| **-M-** | $CFH_2-$ | **-M** | $-CFH_2$ |
| **-D-** | $CF_2H-$ | **-D** | $-CF_2H$ |
| **-T-** | $CF_3-$ | **-T** | $-CF_3$ |
| **-MO-** | $CFH_2O-$ | **-OM** | $-OCFH_2$ |
| **-DO-** | $CF_2HO-$ | **-OD** | $-OCF_2H$ |
| **-TO-** | $CF_3O-$ | **-OT** | $-OCF_3$ |
| **-A-** | H-C=C- | **-A** | -C≡C-H |
| **-nA-** | $C_nH_{2n+1}-C≡C-$ | **-An** | $-C≡C-C_nH_{2n+1}$ |
| **-NA-** | N=C-C=C- | **-AN** | -C≡C-C≡N |

| **Left hand side, used in combination with others only** | | **Right hand side, used in combination with others only** | |
|---|---|---|---|
| **-...n...-** | $(-CH_2-)_n$ | **-...n...** | $(-CH_2-)_n$ |
| **-...M...-** | -CFH- | **-...M...** | -CFH- |
| **-...D...-** | $-CF_2-$ | **-...D...** | $-CF_2-$ |
| **-...V...-** | -CH=CH- | **-...V...** | -CH=CH- |
| **-...Z...-** | -CO-O- | **-...Z...** | -CO-O- |
| **-...ZI...-** | -O-CO- | **-...ZI...** | -O-CO- |
| **-...K...-** | -CO- | **-...K...** | -CO- |
| **-...W...-** | -CF=CF- | **-...W...** | -CF=CF- |

wherein n und m each are integers and three points "..." indicate a space for other symbols of this table.

Preferably the liquid crystalline media according to the present invention comprise, besides the compound(s) of formula I one or more compounds selected from the group of compounds of the formulae of the following table.

Table D

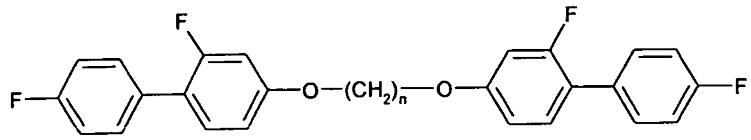

**F-PGI-O-n-O-GP-F**

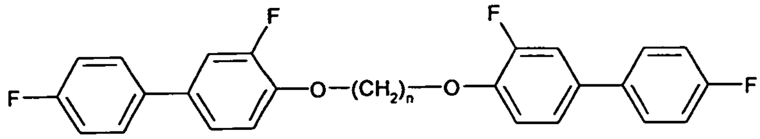

**F-PG-O-n-O-GIP-F**

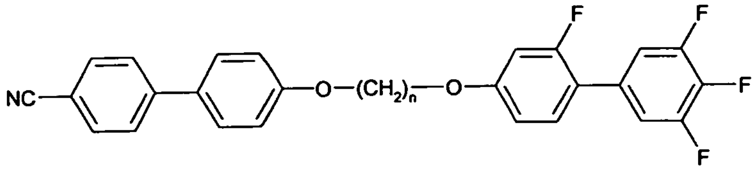

**N-PP-O-n-O-GU-F**

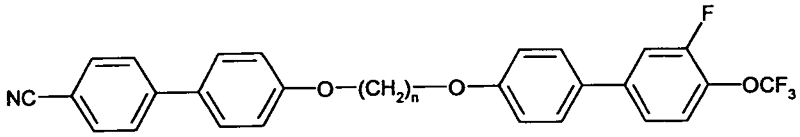

**N-PP-O-n-O-PG-OT**

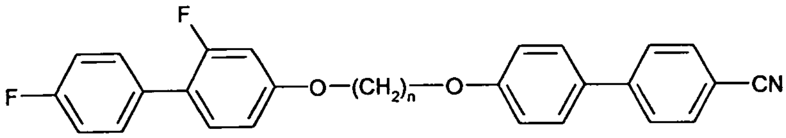

**F-PGI-O-n-O-PP-N**

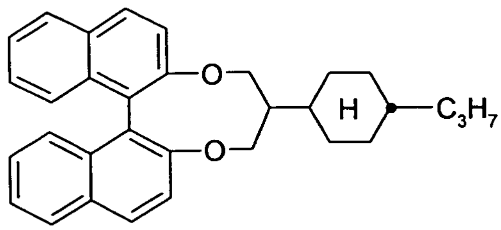

**R-5011 respectively S-5011**

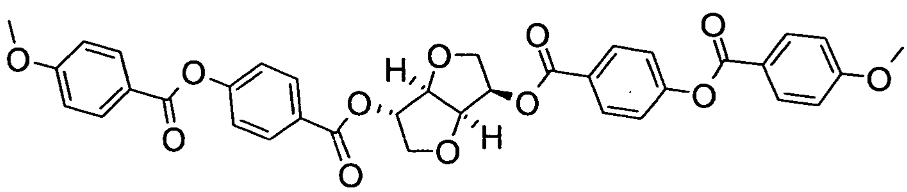

**CD-1**

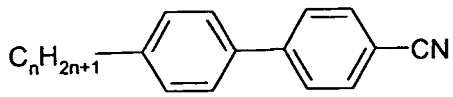

**PP-n-N**

(continued)

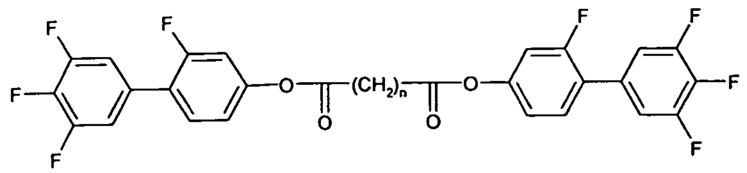

**F-UIGI-ZI-n-Z-GU-F**

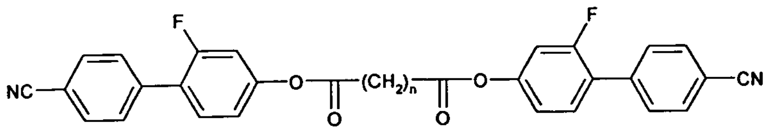

**N-PGI-ZI-n-Z-GP-N**

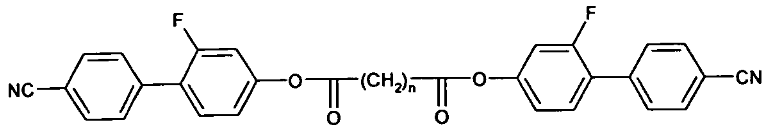

**F-PGI-ZI-n-Z-GP-F**

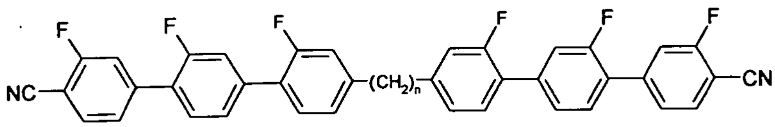

**N-GIGIGI-n-GGG-N**

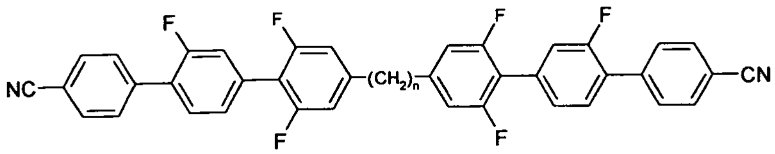

**N-PGIUI-n-UGP-N**

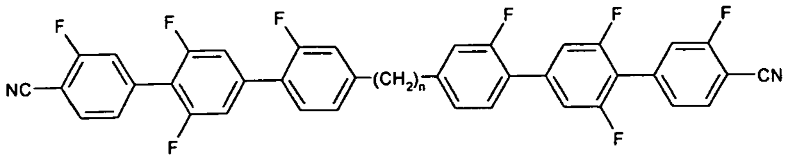

**N-GIUIGI-n-GUG-N**

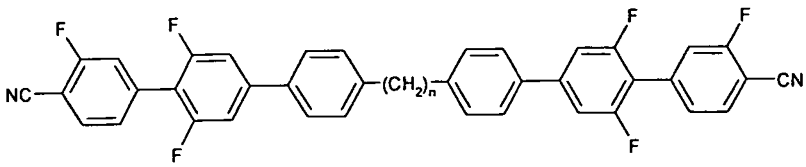

**N-GIUIP-n-PUG-N**

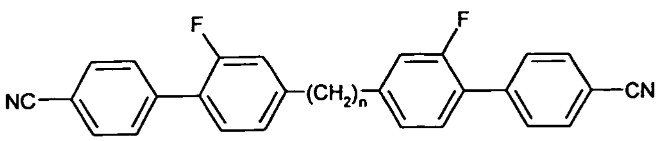

**N-PGI-n-GP-N**

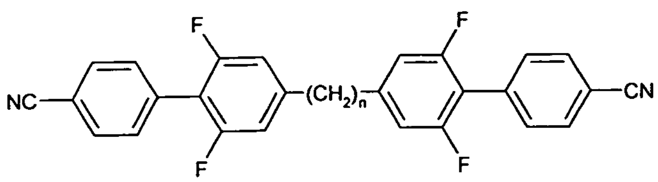

(continued)

**N-PUI-n-UP-N**

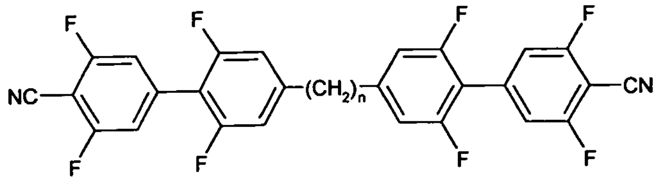

**N-UIUI-n-UU-N**

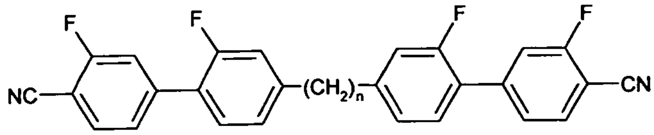

**N-GIGI-n-GG-N**

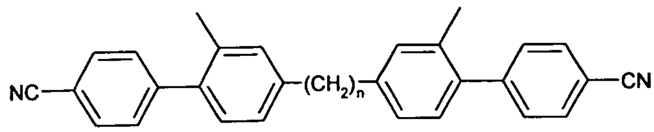

**N-PGI(1)-n-G(1)P-N**

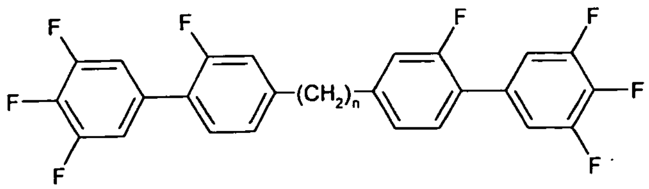

**F-UIGI-n-GU-F**

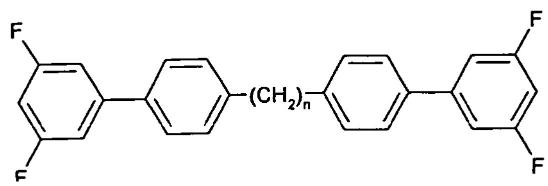

**UIP-n-PU**

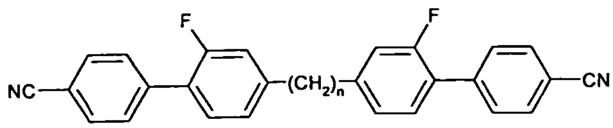

**N-PGI-n-GP-N**

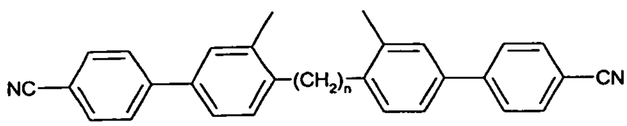

**N-PG(1)-n-GI(1)P-N**

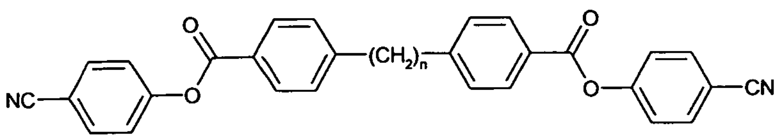

**N-PZIP-n-PZP-N**

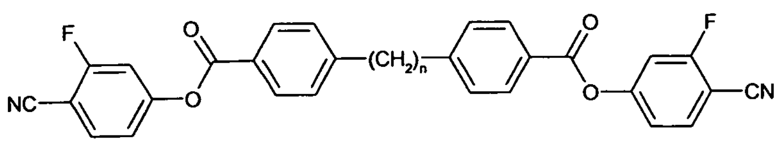

(continued)

**N-GIZIP-n-PZG-N**

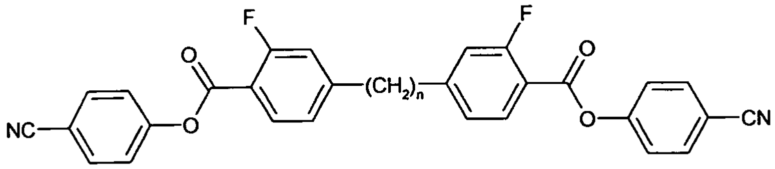

**N-PZIGI-n-GZP-N**

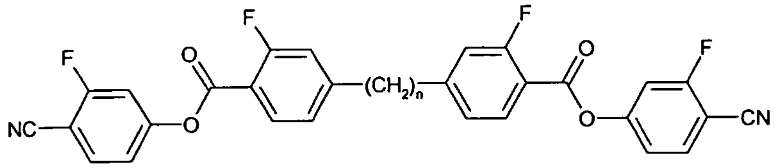

**N-GIZIGI-n-GZG-N**

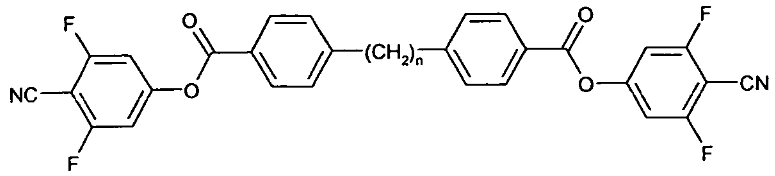

**N-UIZIP-n-PZU-N**

Step 3.4

The product of the synthesis comparative example 2, step 2.3 (2.50 g, 7.18 mmol), 4-bromomethyl-benzonitrile (2.81 g, 14.4 mmol) and potassium carbonate (1.79 g, 19.9 mmol) are mixed together in ethylmethylketone (50 ml). The reaction mixture is heated under reflux at 80°C for 12 hours. The reaction-mixture is then cooled and the solid precipitate formed is filtered off under vacuum, the filter pad is washed with ether then the solution is concentrated under reduced pressure. The crude product is purified by chromatography through silica, eluted with 30 % DCM in petroleum ether (40-60). The material is then re-crystallised from acetonitrile to yield the desired non symmetrical intermediate alcohol.

Step 3.5

The product from the previous step, step 3.4 (2.15 g, 4.64 mmol), 1-bromomethyl-4-fluorobenzene (1.05 g, 5.56 mmol) and potassium carbonate (1.92 g, 14.0 mmol) are mixed together in ethylmethylketone (50 ml). The reaction mixture is heated under reflux at 80°C for 18 hours. The reaction-mixture is then cooled and solids filtered off under vacuum, the filter pad is washed with diethyl ether then concentrated under reduced pressure. The crude product is purified by chromatography through silica, eluted with 30% DCM in petroleum ether (40-60). The material was then re-crystallised twice from acetonitrile to afford the product.

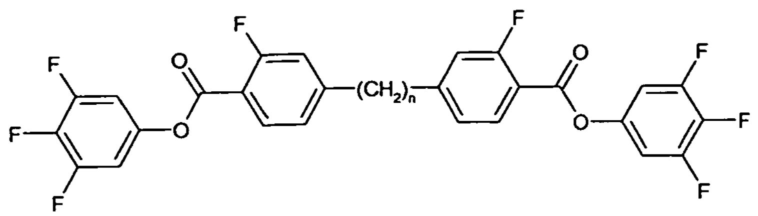

F-UIZIGI-n-GZU-F

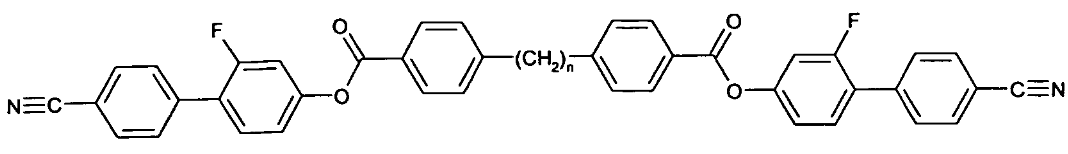

**N-PGIZIP-n-PZGP-N**

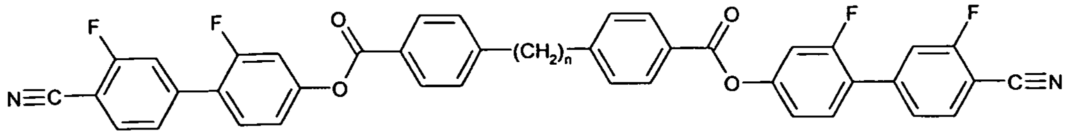

**N-GIGIZIP-n-PZGG-N**

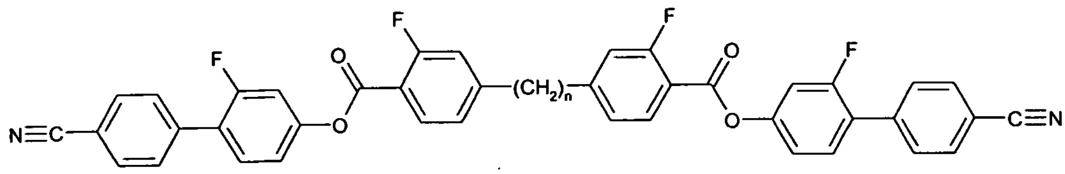

**N-PGIZIGI-n-GZGP-N**

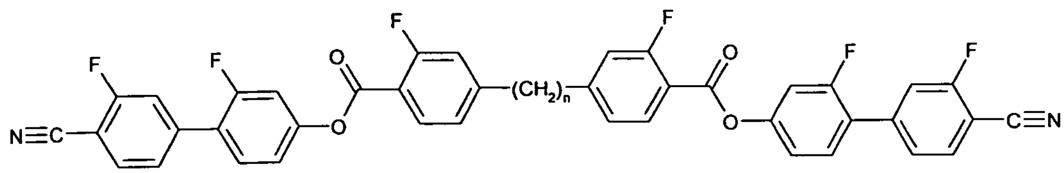

**N-GIGIZIGI-n-GZGG-N**

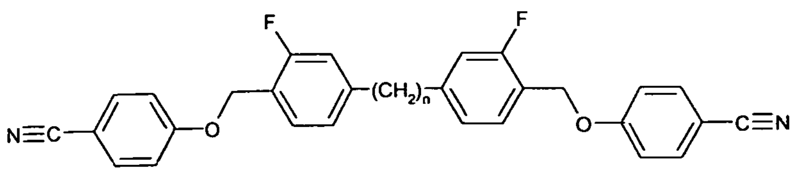

**N-PO1GI-n-GO1P-N**

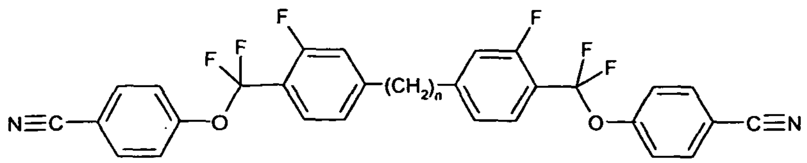

**N-PQIGI-n-GQP-N**

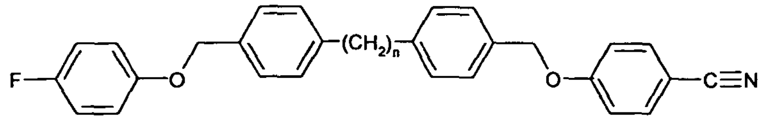

**F-PO1P-n-PO1P-N**
**(= N-PO1P-n-PO1P-F)**

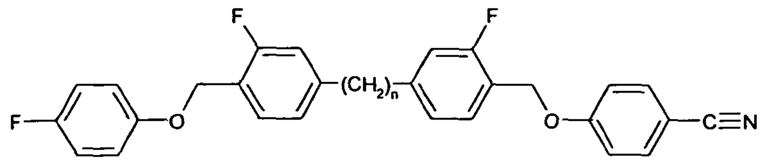

**F-PO1GI-n-GO1P-N**
**(=N-PO1GI-n-GO1P-F)**

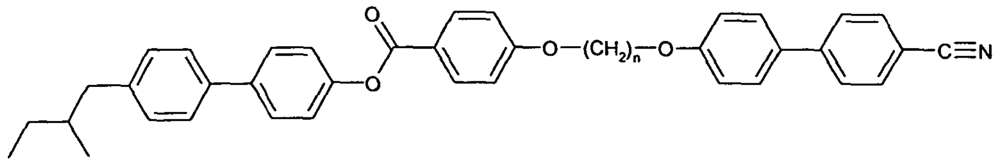

**2(CHCH3)1-PPZIP-O-n-O-PP-N**

Compound and Synthesis Examples

Synthesis Example 1

Preparation of N-PGIZIGI-9-GZGP-N

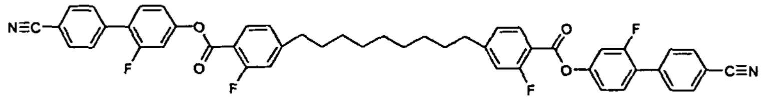

Step 1.1

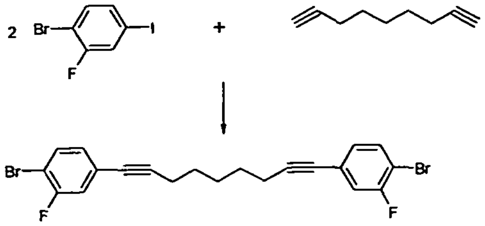

55.1 g (183 mmol) of the iodobromofluorobenzene and 60 ml tetrahydrofuran are added to a reaction flask, which is evacuated three times and subsequently filled with nitrogen, then treated in an ultrasonic bath to degas the reaction mixture, a procedure shortly referred to as "ultasonication" in this application, for 10 min. with additional evacuation/purging with nitrogen. $Pd(PPh_3)_2Cl_2$ (1.8 g, 2.6 mmol) and CuI (0.4 g, 2.1 mmol) as catalysts and diisopropylamine (60 ml) are added and the reaction vessel is purged again before being "ultrasonicated" for 10 minutes and then placed in a large water bath to control the reaction temperature.

1,8-nonadiyne (10 g, 83 mmol) are added slowly over a time span of 15 minutes A fine precipitate is formed. The reaction mixture is stirred overnight at ambient temperature.

The reaction mixture is then filtered under vacuum and the filter pad washed with Dichloromethane. The filtrate is concentrated to a semi-solid, which is re-dissolved in dichloromethane before being passed through a silica column to purify. The target product is eluted with additional dichloromethane before final isolation by re-crystallisation from petroleum ether.

Step 1.2

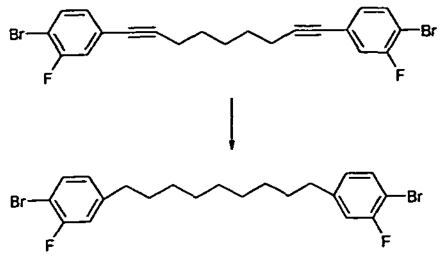

The hydrogenation reaction is performed in an "H-Cube"-hydrogenation apparatus. The parameters of the reaction are as follows: Flow rate: 7 ml/min, Mode: 100 % $H_2$, Catalysts: Pt/C, Temperature: 50°C and Pressure: 30 bar.

Steps 1.3

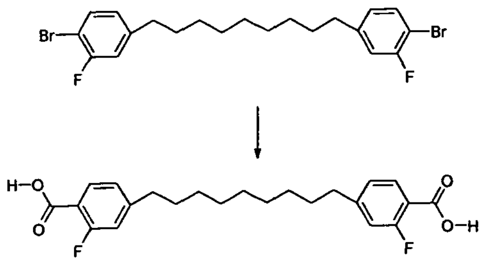

Anhydrous tetrahydrofuran is charged into a three neck flask together with 9.4 g (19.8 mmol) of the dibromide with the saturated spacer. The flask is evacuated and filled with nitrogen. The reaction mixture is stirred and cooled to a temperature of -75 °C in a bath of acetone cooled by solid $CO_2$.

Then 31 ml 1.6 M, (49.5 mmol) n-butyl lithium are added drop wise over a time span of 30 minutes while keeping the temperature at -75°C. After 3 hours further stirring 8.7 g (200 mmol) of crushed, solid $CO_2$ are cautiously added to the reaction mixture. A thick white sludge develops and this is stirred for a further 30 minutes before it is hydrolysed by the addition of dilute HCl. The mixture is extracted three times with diethyl ether, and the combined organic material washed with water until neutral. Then toluene is added and the whole solvent is solution is evaporated. The solid the product is isolated and used in the following without further purification.

Step 1.4

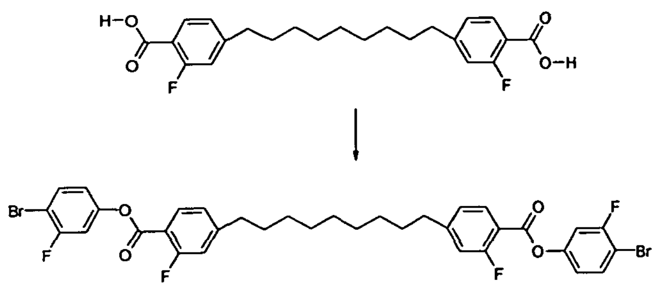

4.9 g (24 mmol) of the acid intermediate are added to flask filled with 50 ml dichloromethane. This mixture is thoroughly stirred before 6.5 g (31 mmol) of trifluoroacetic anhydride are added cdropwise over a time span of 5 minutes. The reaction mixture is then stirred further for 5 minutes.

Then 4.6 g (24.4 mmol) of solid 4-hydroxy-3-fluorobromobenzene are added and the reaction mixture is stirred at a temperature of 35°C. After complete reaction, water is added. The organic and aqueous layers are separated and the aqueous solution is extracted three times with dichloromethane. The combined organic solutions are washed with a solution of sodium carbonate before being dried over magnesium sulphate, filtered and concentrated. The crude product is purified by passing through a silica plug and eluting with a mixture of petrol and dichloromethane (1:2). The final purification is carried out by re-crystallisation from MeCN.

Step 1.5

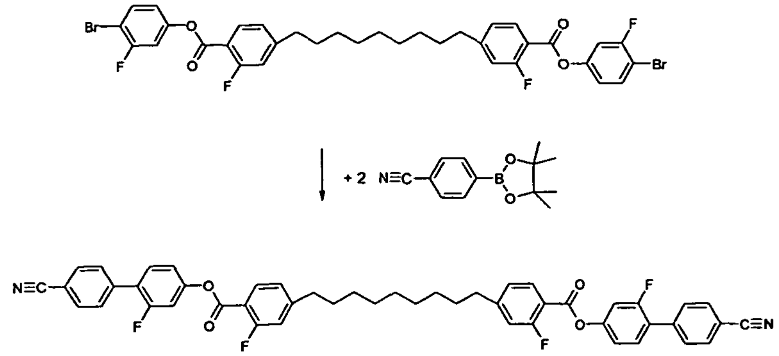


1.0 g (1.33 mmol) of the bromide intermediate, 0.61 g (2.67 mmol) of 4-cyanophenyl boronate ester, 0.63 g (2.66 mmol) of sodium metaborate octahydrate, 9.0 ml (499 mmol) of water and 37.5 ml (463 mmol) of tetrahydrofuran are filled into a round bottom flask. This mixture is stirred, the flask is evacuated and filled with nitrogen before being "untrasonicated" for 30 minutes. Then 0.075 g (0.107 mmol) of palladium dichloride-(bistriphenylphosphine) are added and the vessel is evacuated then filled with nitrogen. The reaction mixture is heated to a temperature of 80°C for 72 hours under reflux. Then the reaction mixture is cooled, water and diethyl ether are added subsequently. Then the resulting phases are separated. The aqueous phase is extracted twice with diethyl ether, and the combined organic phases are washed twice with water and once with an aquous solution of NaCl. The organic solution is dried over sodium sulphate, filtered and the solvent evaporated. The crude product is purified over a short silica column, eluted with first petrol then with a mixture of petrol/dichloromethane (2:1). The product is isolated after repeated re-crystallisation from acetonitrile.

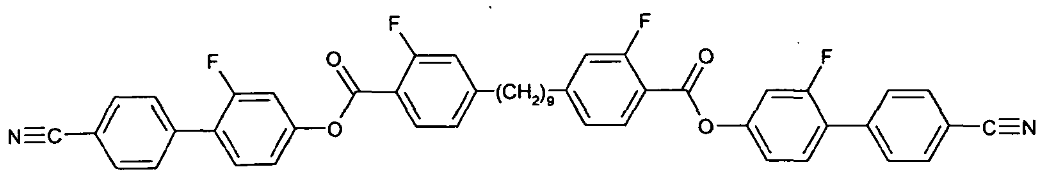

**N-PGIZIGI-9-GZGP-N**

This compound has the phase sequence: K 130 Sm 255 N 271 I.

## Scheme for Synthesis comparative example 2 - Preparation of N-PO1GI-9-GO1P-N

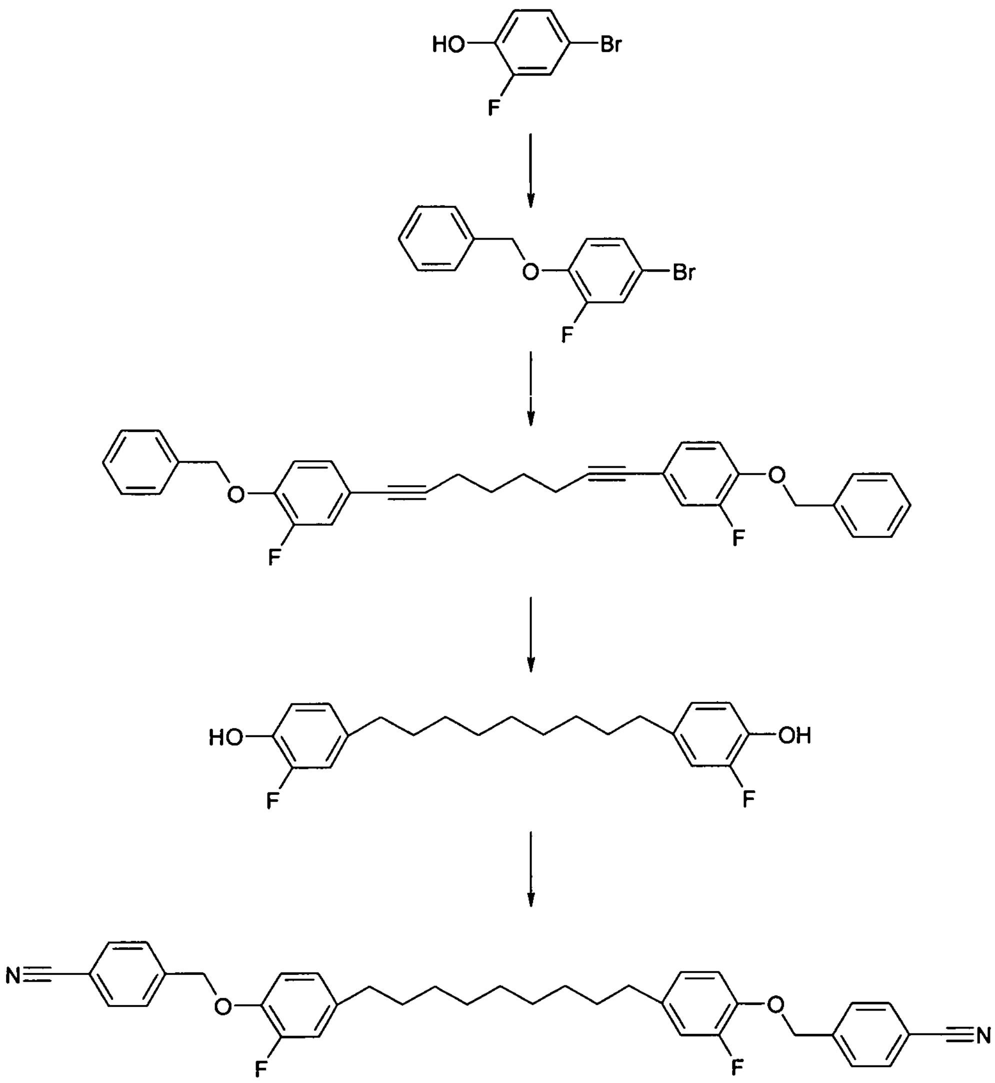

Synthesis comparative example 2

Step 2.1

4-bromofluorophenol (33.9 g, 0.178 moles), benzylbromide (21.1 ml, 0.178 moles), potassium carbonate (34.4 g, 0.25 moles) and butan-2-one (300ml) are heated together at a temperature of 85°C under reflux overnight. The mixture is cooled, filtered, washed with butanone and diethyl ether and the solvent removed *in vacuo.* The material is re-crystallised from heptane at -20°C.

Step 2.2

The bromide (44.5 g, 115.8 mmol) from the previous step, triethylamine (89 ml), tetrahydrofuran (45 ml), Copper(I) Iodide (0.694 g, 3.6 mmol) and bis(triphenylphosphine)Palladium(II)dichloride (3.5 g, 4.91 mmol) are added to a flask and then 1,8-Nonadiyne (9.14 g (76.0 mmol) in tetrahydrofuran (45 ml) is slowly added over a time of 30 minutes. The reaction-mixture is warmed to 40°C overnight. The mixture is then cooled, filtered and the filter pad washed with diethyl ether. The filtrate is acidified with dilute Hydrochloric acid and then neutralized with sodium hydroxide before drying over sodium sulphate. This was filtered and the solvent from the filtrate removed *in vacuo* to give a solid product. The solid was pre-adsorbed onto 50 g silica from a dichloromethane solution and columned through a short silica column using 10% DCM in petrol as eluent. The fractions containing the product were collected and re-crystallised first from

petrol and then from acetonitrile to afford the clean product.

Step 2.3

The hydrogenation reaction is again performed in a an "H-Cube" Hydrogenator.
Parameters: Flow: 10 ml/min., Mode:100% $H_2$ Catalysts: Pd/C
Temp.: 50°C, Pressure: 30bar *Rising to 80°C and 80 bar* at the end of the reaction.

Stage 2.4

The phenol from stage 3 (2.80 g, 8.04 mmol), 4-bromomethylbenzonitrile (3.94 g, 20.09 mmol) and potassium carbonate (1.66 g, 12 mmol) are added to a flask with dimethylformamide (5.87 g) and ethyl methyl ketone (50 ml). The mixture is heated at 85°Covernight. The mixture is cooled, filtered and the filter pad washed with diethyl ether and the solvent from the filtrate removed *in vacuo* to give a solid product. This solid crude product is purified over a short silica column using 33 % DCM in petrol as eluent. The fractions containing the product are collected and re-crystallised from acetonitrile to afford the clean product.

Scheme for Synthesis Comparative Example 3 - Preparation of N-PO1GI-9-GO1P-F

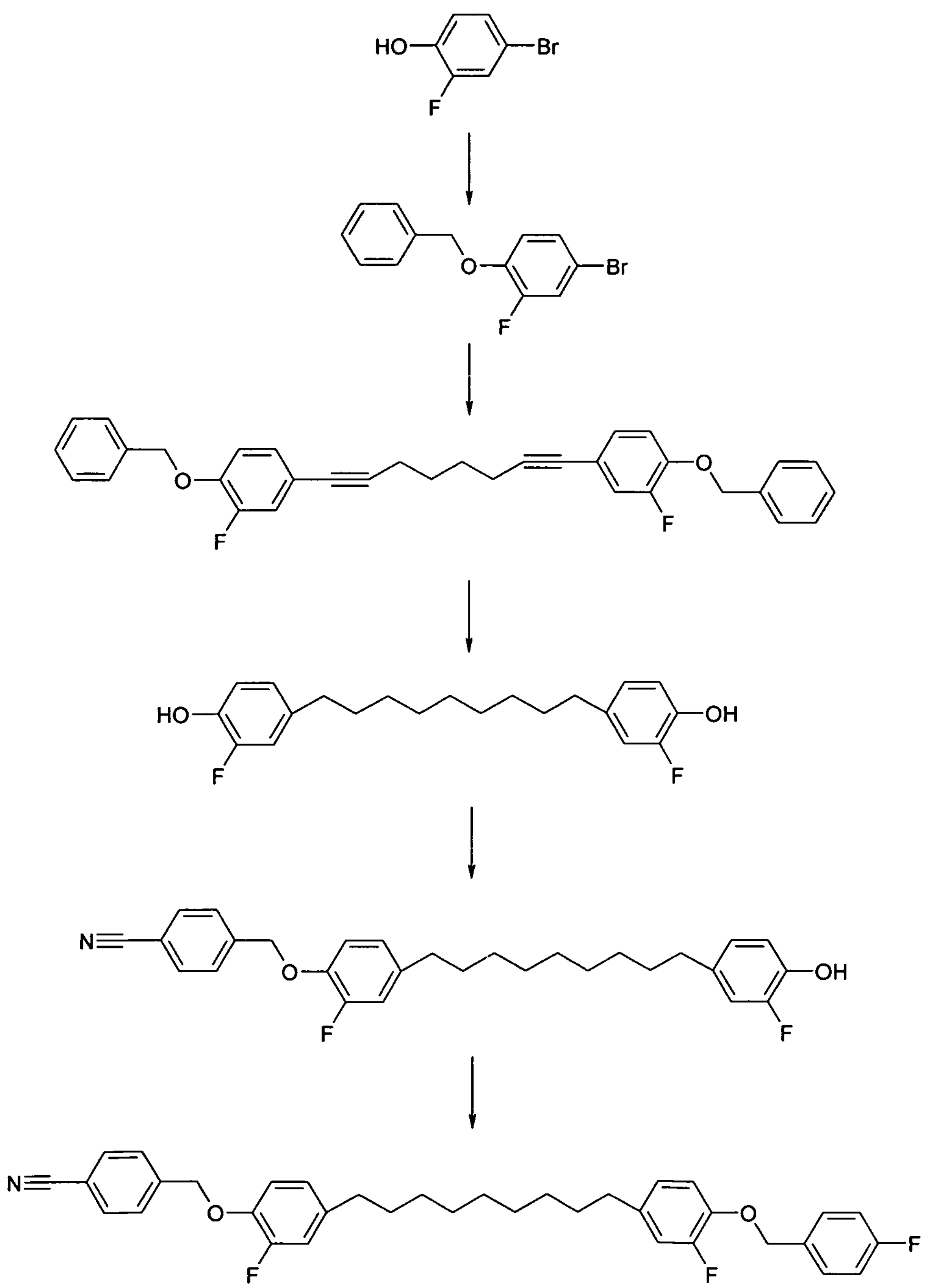

Synthesis Comparative Example 3

Steps 3.1 to 3.3 are identical to those of Synthesis comparative example 2.

Step 3.4

The product of the synthesis example 2, step 2.3 (2.50 g, 7.18 mmol), 4-bromomethyl-benzonitrile (2.81 g, 14.4 mmol) and potassium carbonate (1.79 g, 19.9 mmol) are mixed together in ethylmethylketone (50 ml). The reaction mixture is heated under reflux at 80°C for 12 hours. The reaction-mixture is then cooled and the solid precipitate formed

is filtered off under vacuum, the filter pad is washed with ether then the solution is concentrated under reduced pressure. The crude product is purified by chromatography through silica, eluted with 30 % DCM in petroleum ether (40-60). The material is then re-crystallised from acetonitrile to yield the desired non symmetrical intermediate alcohol.

Step 3.5

The product from the previous step, step 3.4 (2.15 g, 4.64 mmol), 1-bromomethyl-4-fluorobenzene (1.05 g, 5.56 mmol) and potassium carbonate (1.92 g, 14.0 mmol) are mixed together in ethylmethylketone (50 ml). The reaction mixture is heated under reflux at 80°C for 18 hours. The reaction-mixture is then cooled and solids filtered off under vacuum, the filter pad is washed with diethyl ether then concentrated under reduced pressure. The crude product is purified by chromatography through silica, eluted with 30% DCM in petroleum ether (40-60). The material was then re-crystallised twice from acetonitrile to afford the product.

## Scheme for Synthesis comparative example 4 - Preparation of N-PQIP-9-PQP-N

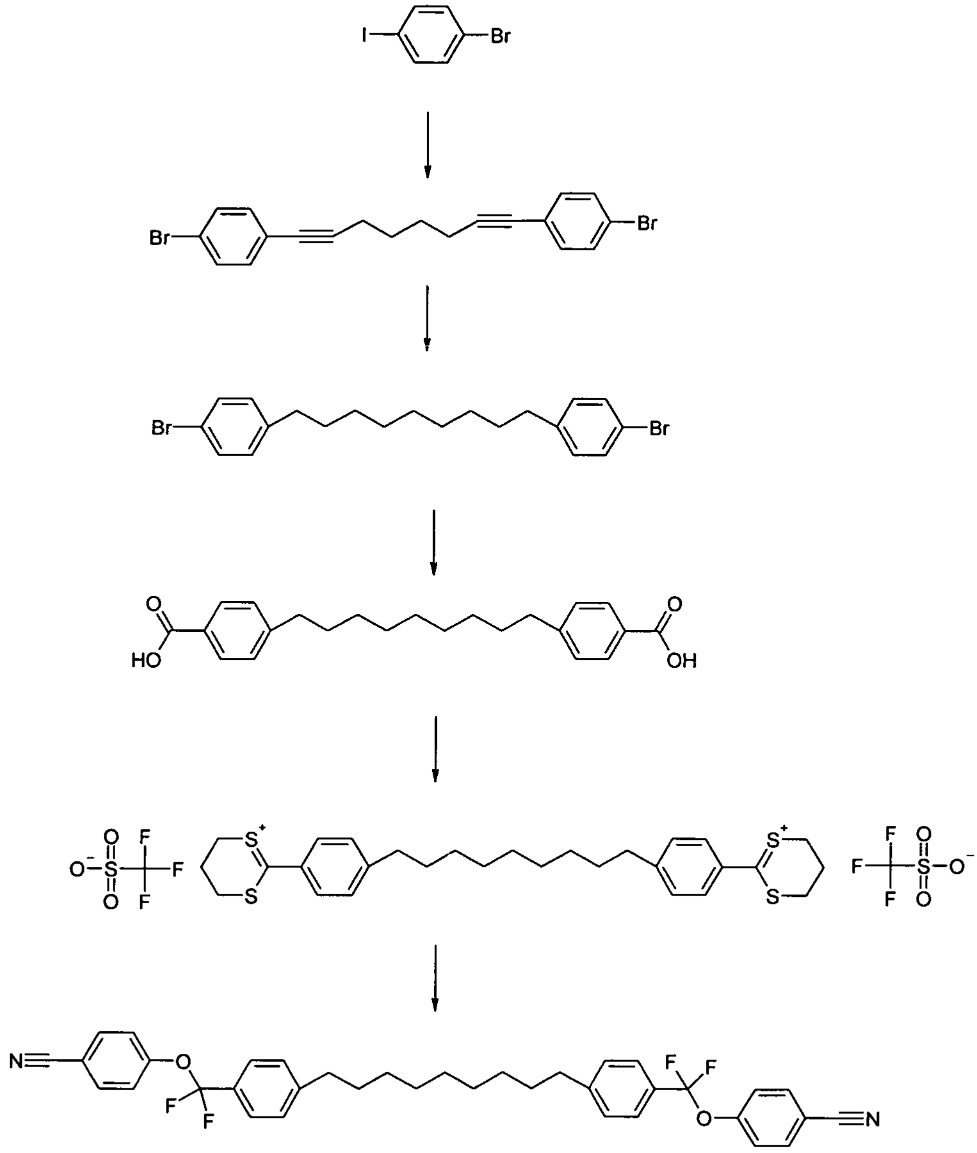

Step 4.1

25.0 g (88.4 mmol) of iodobromobenzene and 80 ml tetrahydrofuran are added to a reaction flask, which is

evacuated three times and subsequently filled with nitrogen each time, then "ultasonicated" for 10 min. with additional evacuation/purging with nitrogen. $Pd(PPh_3)_2Cl_2$ (0.9 g, 1.3 mmol) and CuI (0.2 g, 1.1 mmol) as catalysts and diisopropylamine (14 ml) are an ultrasonic bath for 10 minutes and then placed in a large water bath to control the reaction temperature.

1,8-nonadiyne (5:0 g, 41.6 mmol) is mixed with tetrahydrofuran (20 ml) and added slowly over a time span of 15 minutes. A fine precipitate is formed. The reaction mixture is stirred overnight at ambient temperature. The reaction mixture is then filtered under vacuum and the filter pad washed with tetrahydrofuran. The filtrate is concentrated to a semi-solid, which is re-dissolved in dichloromethane before being passed through a silica column for purification. The target product is eluted with additional dichloromethane to afford a yellow crystalline solid.

Step 4.2

The hydrogenation reaction is performed in an "H-Cube"-hydrogenation apparatus. The parameters of the reaction are as follows: Flow rate: 7 ml/min., Mode: 100 % $H_2$, Catalysts: Pt/C, Temperature: 50°C, and Pressure: 30 bar.

Step 4.3

Anhydrous tetrahydrofuran is charged into a three neck flask together with 9.4 g (19.8 mmol) of the dibromide from the previous stage. The flask is evacuated and filled with nitrogen. The reaction mixture is stirred and cooled to a temperature of -75°C in a bath of acetone cooled by solid $CO_2$.

Then n-butyl lithium (1.6 M, 31 ml, 49.5 mmol) are added drop wise over a time span of 30 minutes while keeping the temperature at -75°C. After 3 hours further stirring 8.7 g (200 mmol) of crushed, solid $CO_2$ are cautiously added to the reaction mixture. A thick white sludge develops and this is stirred for a further 30 minutes before it is hydrolysed by the addition of dilute HCl. The mixture is extracted three times with diethyl ether, and the combined organic material washed with water until neutral. Then toluene is added and the whole solvent is solution is evaporated. The solid the product is isolated and used in the following without further purification.

Steep 4.4

The intermediate product from the previous stage (5.5 g,15 mmol) and propandithiol (3.6 g, 33 mmol) are added to flask before adding trifluoromethanesulphonic acid (6.8 g, 45 mmol) and starting to stir the mixture. The mixture is heated to 120°C and the now clear orange mixture is then cooled to ambient before being treated with diethyl ether (300 ml). The resultant solution is added to a flask of vigorously stirred diethyl ether (700 ml) pre-cooled to -70°C. Within 30 minutes fine crystals appear in the stirred mixture. The solid is isolated by filtration under vacuum and washed with ether to give a pale yellow powder which is used immediately.

Step 4.5

The intermediate (10.1g 12 mmol) from the previous stage is added to a flask with dichloromethane (50 ml) and then cooled to -70°C. A mixture of 4-cyanophenol (3.5 g, 30 mmol), dichloromethane (40 ml) and triethylamine (3.5 g, 34 mmol) is added dropwise. After 90 minutes further stirring triethylaminehydrogen fluoride (20 g, 125 mmol) is added dropwise. After a further hour of stirring bromine (19.9 g, 125 mmol) in dichloromethane (100 ml) is added dropwise. Th reaction mixture is stirred for 30 minutes and allowed to warm to -30°C before adding morpholine (10.9 g, 125 mmol) and finally warming to 0°C where it is stirred for a further time span of 1 hour. The mixture is carefully poured onto a mixture of ice, water and potassium hydroxide, and the layers are separated. The organic material is washed with water, dried over sodium sulphate and concentrated *in vacuo.* The crude material is purified by flash chromatography, eluting with a solution of 30 % DCM in petroleum ether. Final purification is carried out by repeated re-crystallisation from acetonitrile to afford the desired product.

## Scheme for Synthesis comparative example 5 - Preparation of N-PQIG-9-GQP-N

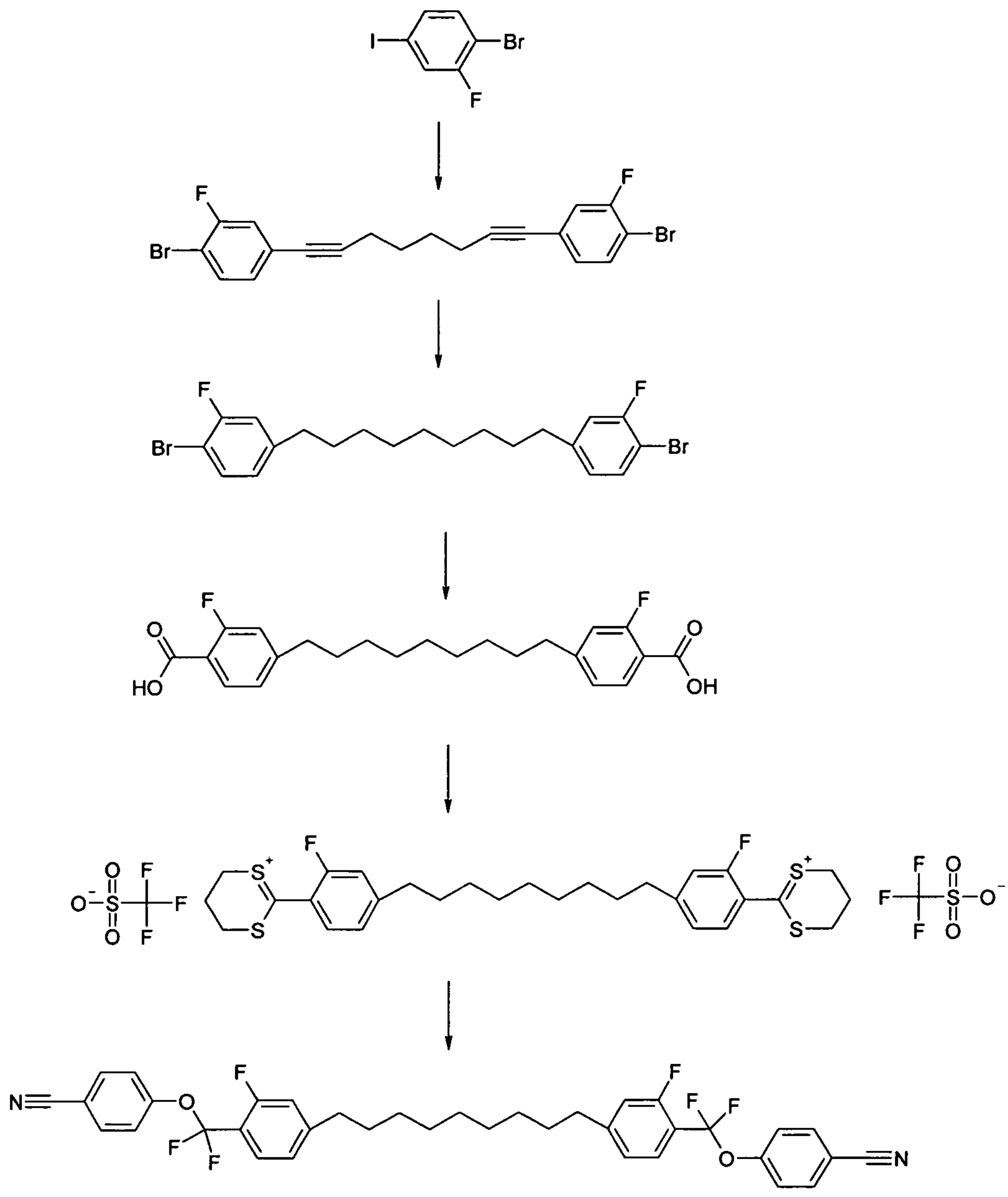

Steps 5.1 to 5.3 are identical to the respective steps of Synthesis Example 1.

Step 5.4

The intermediate product of Synthesis Example 1, step 1.3 (5.5 g,15 mmol) and propandithiol (3.6 g, 33 mmol) are added to flask before adding trifluoromethanesulphonic acid (6.8 g, 45 mmol) and starting to stir the mixture. The mixture is heated to 120°C and the then clear orange mixture is cooled to ambient before being treated with diethyl ether (300 ml). The resultant solution is added to a flask of vigorously stirred diethyl ether (700 ml) pre-cooled to -70°C. Within 30 minutes fine crystals appear in the stirred mixture. The solid is isolated by filtration under vacuum and washed with ether to give a pale yellow powder which is used immediately.

Step 5.5

The intermediate (10.1 g 12 mmol) from the previous step is added to a flask with dichloromethane (50 ml) and then cooled to -70°C. A mixture of 4-cyanophenol (3.5 g, 30 mmol), dichloromethane (40 ml) and triethylamine (3.5 g, 34 mmol) is added dropwise. After 90 minutes further stirring triethylaminehydrogen fluoride (20 g, 125 mmol) is added dropwise. After a further hour of stirring bromine (19.9 g, 125 mmol) in dichloromethane (100 ml) is added dropwise. The reaction mixture is stirred for 30 minutes and allowed to warm to -30°C before adding morpholine (10.9 g, 125 mmol) and finally warming to 0°C where it is stirred for a further time span of 1 hour. The mixture is carefully poured onto a mixture of ice, water and potassium hydroxide, and the layers are separated. The organic material is washed with water, dried over sodium sulphate and concentrated *in vacuo.* The crude material is purified by flash chromatography, eluting with a solution of 30 % DCM in petroleum ether. Final purification is carried out by repeated re-crystallisation from acetonitrile to afford the desired product.

## Scheme for Synthesis Example 6 – Preparation of chiral **C2H5CH(CH3)CH2-PPZIP-O9O-PP-N**

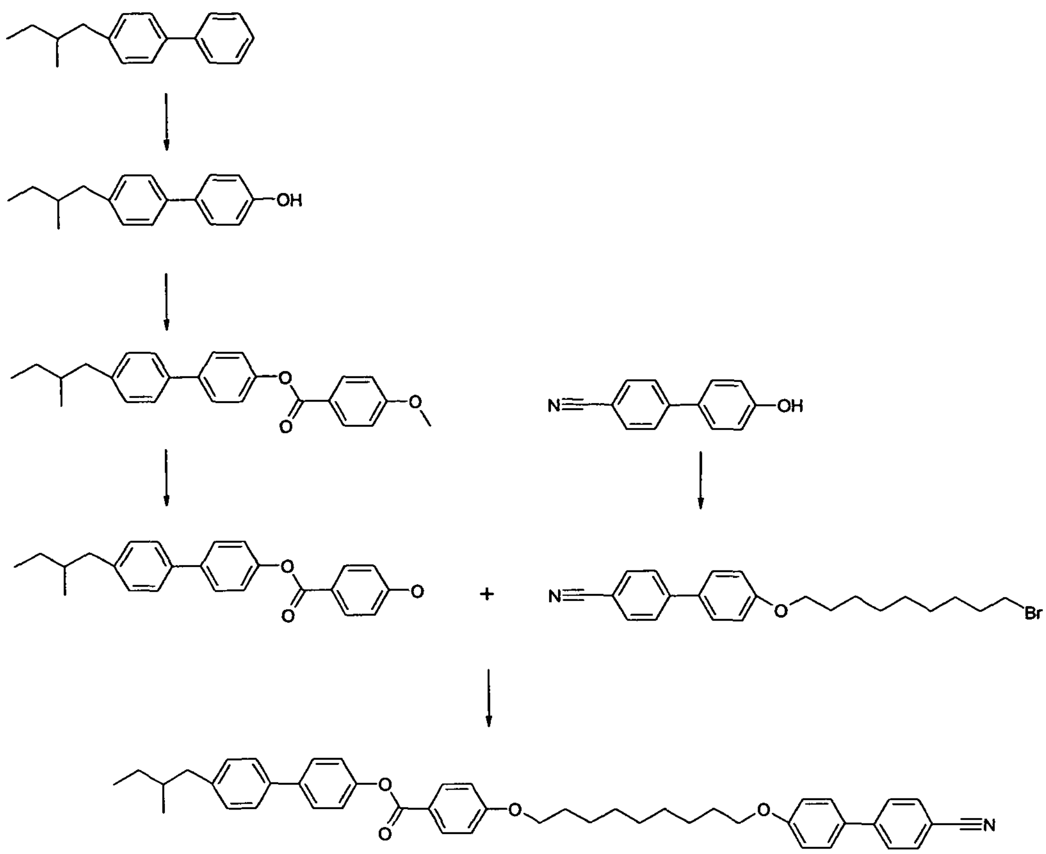

Step 6.1

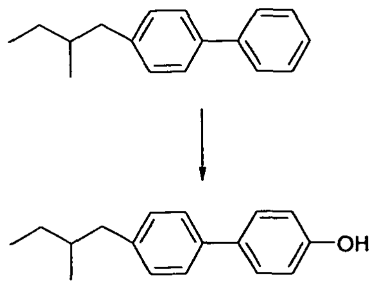

Methylbutylbiphenyl (44.8 g,0.2 mol), dichloromethane (250 ml), tetraethylammonium bromide (2.1 g, 10 mmol) and hydrogen bromide (51.6 g, 0.3 mol) are introduced into a reaction flask and cooled to 0°C. Hydrogen peroxide (48.6 g, 0.5 mol) is added with a dosage of 0.1 ml/min.. After the reaction is shown to have completed (by TLC analysis), the reaction is cooled to 0-10°C and sodium sulfite (17.8 g, 014 mol) as an aqueous solution is added until de-coloration occurs. Thereby, the temperature to is maintained at 10°C. The solution turns green. Then the reaction mixture is stirred for 2 hours. Subsequently a 10 % sodium carbonate solution is prepared and added. The resultant two phases are separated. The aqueous phase is extracted with 100 ml of dichloromethane and added to the organic phase.

The material is washed with sodium carbonate solution and then water before being concentrated *in vacuo.* The residue is then dissolved in 150 ml ethanol and heated for 3 hours under reflux.

The solution is drained and cooled in an ice bath. The resulting crystals are filtered off and dried under ambient atmosphere.

Step 6.2

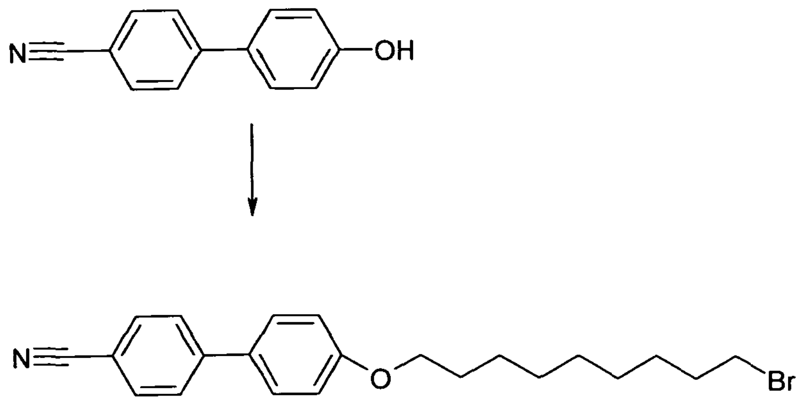

To a stirred solution of the cyano biphenol (25.0 g, 128 mmol) in acetone (625 ml), potassium carbonate (37.5 g, 271 mmol) is added, heated under reflux for 1 hour under a nitrogen atmosphere, and then cooled to ambient temperature. Dibromononane (200 ml, 961 mmol) is then added in a single portion. The reaction mixture is heated again to reflux. After heating under reflux overnightthe reaction was cooled and filtered under vacuum, the filter pad washed with dcm, and the filtrate evaporated under reduced pressure to afford the crude material. This was vacuum distilled on Kugelrohr apparatus to remove excess dibromononane affording a solid pale yellow product.

Step 6.3

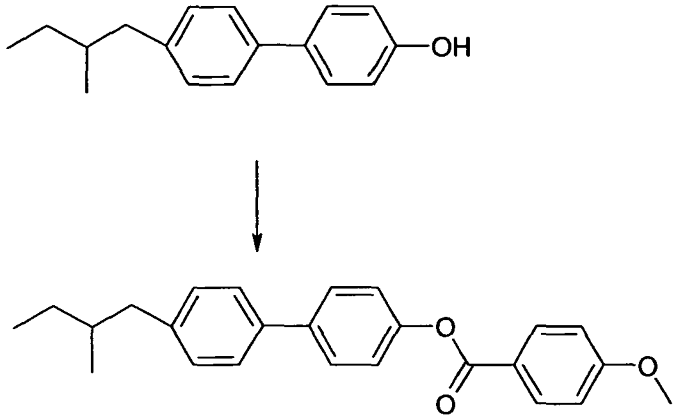

4-methoxybenzoic acid (10 g, 65.7 mmol), intermediate from step 6.1 (15.7 g, 65.3 mmol), Dicyclohexylcarbodiimide (13.5 g, 65.4 mmol), Dimethylamino pyridine (0.5 g) and Dichloromethane (250 ml) are added to a flask under nitrogen atmosphere stirred at 30°C overnight. The progress of the reaction procedure is monitored by TLC. When the reaction appears complete, Oxalic acid (5.9 g, 65.7 mmol) is added, then the reaction mixture is filtered using vacuum and the filtrate evaporated to dryness *in vacuo.* The product is isolated as a white solid.

<u>Step 6.4</u>

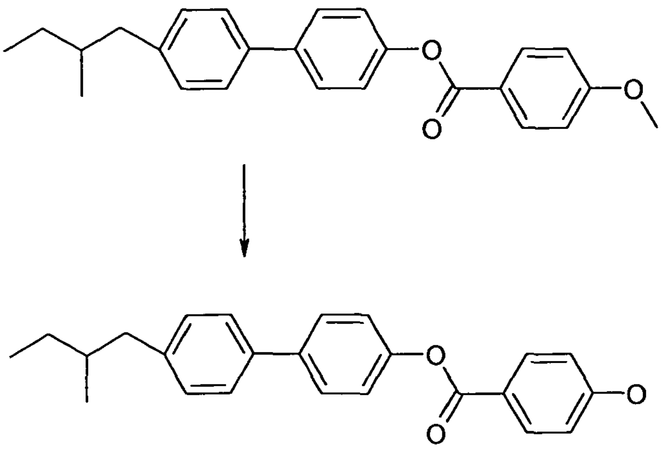

The ester from step 6.3 (20 g, 53.4 mmol) is dissolved in Dichloromethane (80 ml) and added to a suspension of aluminium chloride (35 g, 262 mmol) in Dichloromethane (80 ml) at a temperature in the range from 0°C to - 5°C. Dimethyl sulphide (21 ml, 284 mmol)) is then added dropwise, while the temperature is maintained below 0°C and the resulting mixture (brown solution) is stirred overnight.

The reaction is quenched by the addition (which is exothermic) of (saturated) ammonium chloride solution until the resultant mixture is acidic leading to a white solid precipitate, diluted with Dichloromethane and filtered off under vacuum collecting the precipitate.

<u>Step 6.5</u>

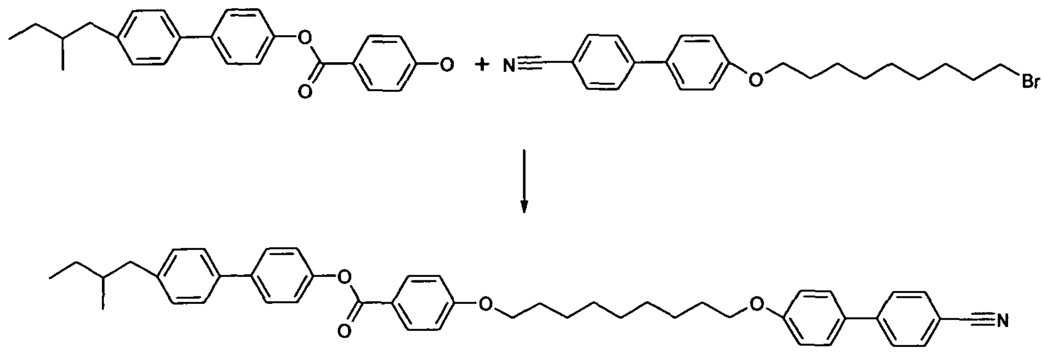

The intermediate from Step 6.4 (3.5 g, 9.71 mmol), the intermediate from step 5.2 (4.0 g, 9.9 mmol), potassium iodide (1.8 g, 10.9 mmol), potassium carbonate (0.9 g, 6.5 mmol) and dimethylformamide (100 ml) are added to a flask and heated at 100°C under reflux for 48 hours.

The reaction is cooled, the reaction mixture poured into a mixture of dichloromethane and water, the layers are separated and the organic solution is washed with water, the organics are dried over sodium sulphate, filtered and concentrated *in vacuo* to yield a yellow solid.

The material is purified by column chromatography, eluting with DCM with increasing amounts of Industrial methylated spirits. The product is recrystallized from acetone to give the final material.

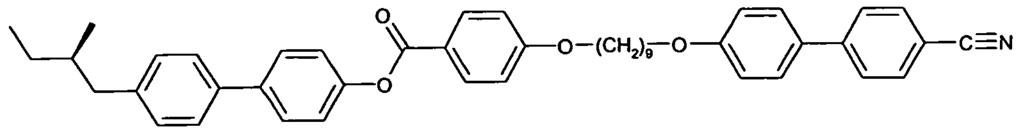

**C2H5CH(CH3)CH2-PPZIP-090-PP-N**

Phase sequence: to be determined.

Compound Examples 7 and following.

The following compounds of formula I are prepared analogously.

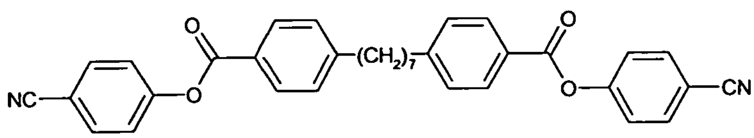

**N-PZIP-7-PZP-N**

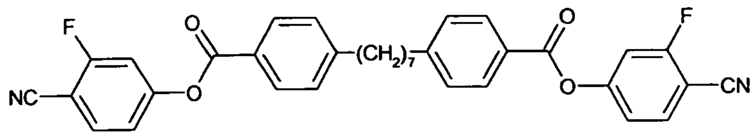

**N-GIZIP-7-PZG-N**

Phase sequence: K 108.7 ($N_2$ 60 N 86) I.

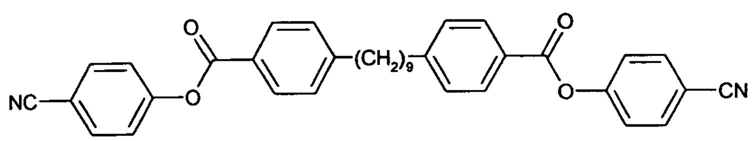

**N-PZIP-9-PZP-N**

Phase sequence: K 118.6 N 135.8 I.

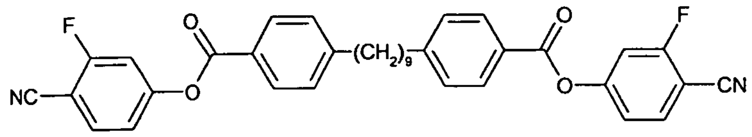

**N-GIZIP-9-PZG-N**

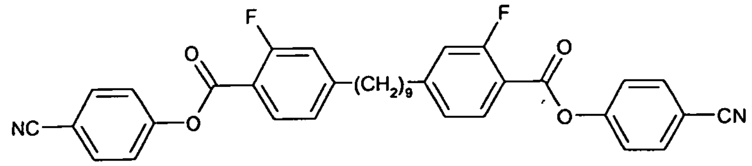

**N-PZIGI-9-GZP-N**

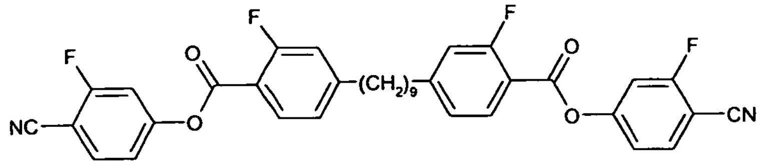

**N-GIZIGI-9-GZG-N**

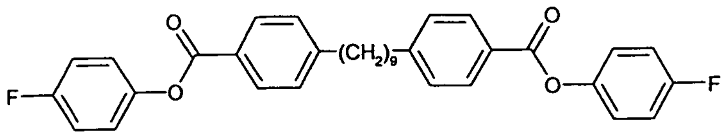

**F-PZIP-9-PZP-F**

Phase sequence: K 85 I.

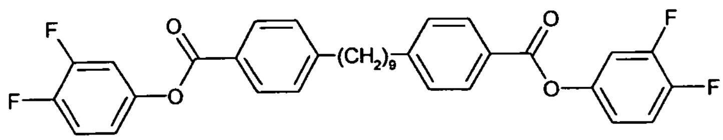

**F-GIZIP-9-PZG-F**

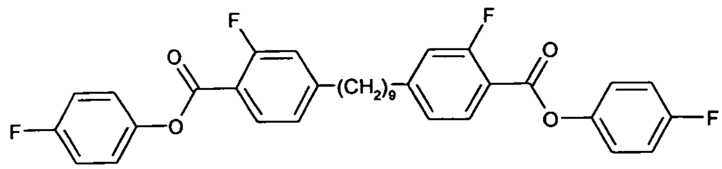

**F-PZIGI-9-GZP-F**

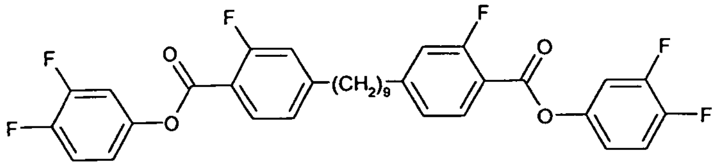

**F-GIZIGI-9-GZG-F**

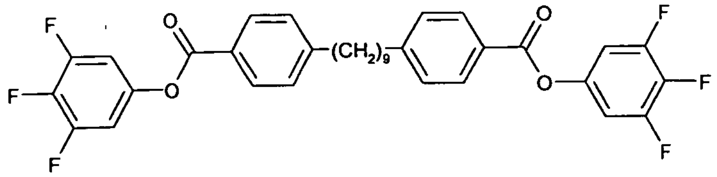

**F-UIZIP-9-PZU-F**
Phase sequence: K 69.9 I.

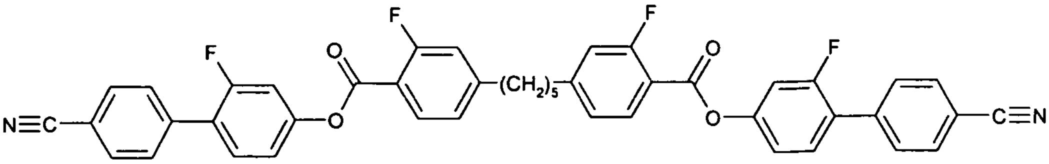

**N-PGIZIGI-5-GZGG-NF**

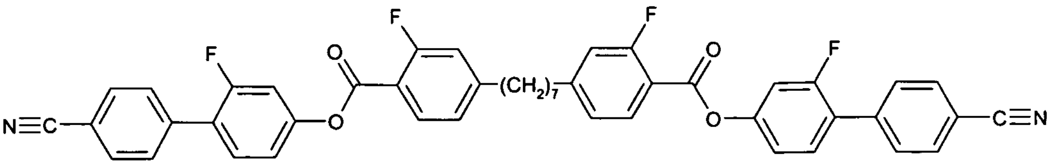

**N-PGIZIGI-7-GZGG-NF**

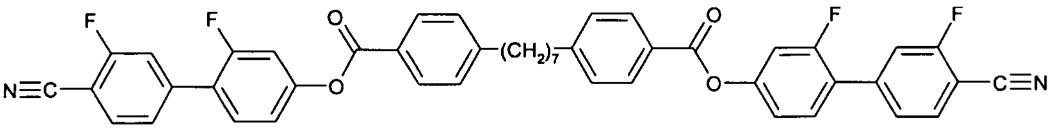

**N-GIGIZIP-7-PZGG-N**

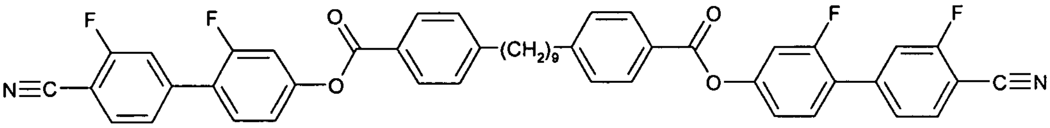

**N-GIGIZIP-9-PZGG-N**

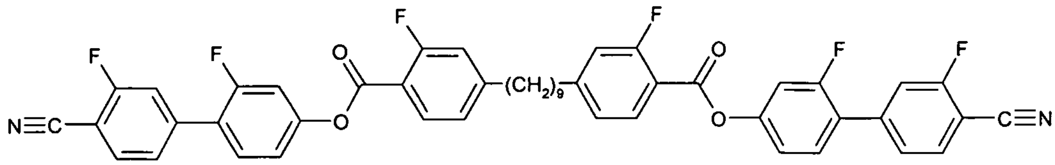

**N-GIGIZIGI-9-GZGG-N**

The materials in the above table generally showed increased performance in the screening mixtures, as compared to known, more conventional bimesogenic compounds as e.g. those shown in the table below.

Comparative Examples

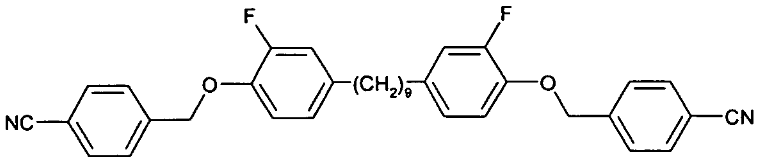

**N-P1OGI-9-GO1P-N**

Phase sequence: K 109.8 I.

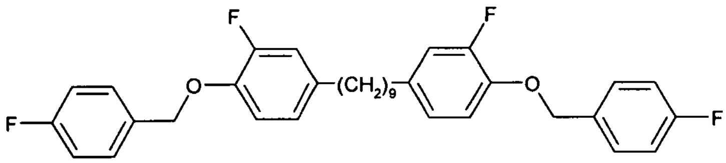

**F-P1OGI-9-GO1P-F**

Phase sequence: K 77.5 I.

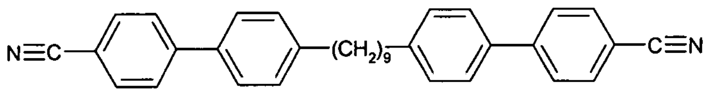

**N-PP-9-PP-N**

Phase sequence: K 84.1 SmC 105.7 N 122 I.

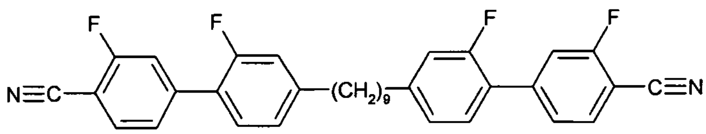

**N-GIGI-9-GG-N**

Phase sequence: to be determined.

The mixture M-1 shows an N to N2 transition at 35°C. This mixture (M-1) is well suitable for the USH-mode.

Comparative Mixture Example 1: Mixture C-1

The following mixture is prepared (Mixture C-1)

| Composition | | |
|---|---|---|
| Compound | | |
| No. | Abbreviation | Conc. /% |
| 1 | R-5011 | 2.0 |
| 2 | F-PGI-O-9-O-GP-F | 22.0 |
| 3 | F-PGI-O-9-O-PP-N | 22.0 |
| 4 | F-PGI-ZI-9-Z-GP-F | 22.0 |
| 5 | F-PGI-ZI-9-Z-PP-N | 22.0 |
| 6 | N-PP-9-PP-N | 10.0 |
| Σ | | 100.0 |

This mixture, mixture C-1, shows an N to N2 transition at 42°C. In mixture mixture M-1 the second nematic phase has a lower onset temperature and is allowed to exist at a lower temperature.

Mixture Example 2: Mixture M-2

The following mixture is prepared (Mixture M-2)

| Composition | | |
|---|---|---|
| Corroound | | |
| No. | Abbreviation | Conc. /% |
| 1 | R-5011 | 2.0 |
| 2 | F-PGI-O-9-O-GP-F | 22.0 |
| 3 | F-PGI-O-9-O-PP-N | 22.0 |
| 4 | F-PGI-ZI-9-Z-GP-F | 22.0 |
| 5 | F-PGI-ZI-9-Z-PP-N | 22.0 |
| 6 | N-GIZIP-7-PZG-N | 10.0 |
| Σ | | 100.0 |

This mixture, mixture M-2, shows an N to N2 transition at 31°C. This mixture (M-2) is well suitable for the USH-mode.

Comparative Mixture Example 2: Mixture C-2

The following mixture is prepared (Mixture C-2)

| Composition | | |
|---|---|---|
| Compound | | |
| No. | Abbreviation | Conc. /% |
| 1 | R-5011 | 2.0 |
| 2 | F-PGI-O-9-O-GP-F | 22.0 |
| 3 | F-PGI-O-9-O-PP-N | 22.0 |
| 4 | F-PGI-ZI-9-Z-GP-F | 22.0 |
| 5 | F-PGI-ZI-9-Z-PP-N | 22.0 |
| 6 | N-GIGI-9-GG-N | 10.0 |
| Σ | | 100.0 |

This mixture, mixture C-2, shows an N to N2 transition at 32°C. Also here In mixture M-2 the second nematic phase has a lower onset temperature and is allowed to exist at a lower temperature.

## Claims

1. Bimesogenic compounds of formula I

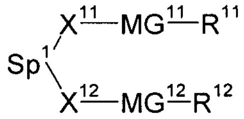

I

wherein

$R^{11}$ and $R^{12}$ are each independently H, F, Cl, CN, NCS or a straight-chain or branched alkyl group with 1 to 25 C atoms which may be unsubstituted, mono- or polysubstituted by halogen or CN, it being also possible for one or more non-adjacent $CH_2$ groups to be replaced, in each occurrence independently from one another, by -O-, -S-, -NH-, -N($CH_3$)-, -CO-, -COO-, -OCO-, -O-CO-O-, -S-CO-, -CO-S-, -CH=CH-, -CH=CF-, -CF=CF- or -C≡C- in such a manner that oxygen atoms are not linked directly to one another,
$MG^{11}$ and $MG^{12}$ are each independently a mesogenic group and at least one of
$MG^{11}$ and $MG^{12}$ comprises two or more 6-atomic rings, at least two of which are linked by a 2-atomic linking group, selected from -CO-O- and -O-CO-, and
$Sp^1$ is a spacer group comprising 1, 3 or 5 to 40 C atoms, wherein one or more non-adjacent and non-terminal $CH_2$ groups may also be replaced by -O-, -S-, -NH-, -N($CH_3$)-, -CO-, -O-CO-, -S-CO-, -O-COO-, -CO-S-, -CO-O-, -CH(halogen)-, -CH(CN)-, -CH=CH- or -C≡C-, however in such a way that no two O-atoms are adjacent to one another, no two -CH=CH- groups are adjacent to each other and no two groups selected from-O-CO-, -S-CO-, -O-COO-, -CO-S-, -CO-O- and -CH=CH- are adjacent to each other,
$X^{11}$ and $X^{12}$ are independently from one another a linking group selected from -CO-O-, -O-CO-, -CH=CH-, -C≡C-, -S-, -O-and a single bond,

however under the condition that in -$X^{11}$-$Sp^1$-$X^{12}$- no two O atoms are adjacent to one another, now two -CH=CH- groups are adjacent to each other and no two groups selected from -O-CO-, -S-CO-, -O-COO-, -CO-S-, -CO-O- and -CH=CH- are adjacent to each other.

2. Bimesogenic compounds according to claim 1, **characterized in that** $MG^{11}$ and $MG^{12}$ are independently of each other selected of partial formula II

$$-A^{11}-(Z^{11}-A^{12})_k- \qquad II$$

wherein
at least one of

$Z^{11}$, which is present, is -COO- or -OCO-,

and the others present are, independently of those defined above and of each other, -COO-, -OCO-, -O-CO-O-, -$OCH_2$-, -$CH_2O$-, -$OCF_2$-, -$CF_2O$-, -$CH_2CH_2$-, -$(CH_2)_4$-, -$CF_2CF_2$-, -CH=CH-, -CF=CF-, -CH=CH-COO-, -OCO-CH=CH- or -C≡C-, optionally substituted with one or more of F, S or are a single bond,

$A^{11}$ and $A^{12}$ are each independently in each occurrence 1,4-phenylene, wherein in addition one or more CH groups may be replaced by N, trans-1,4-cyclo-hexylene in which, in addition, one or two non-adjacent $CH_2$ groups may be replaced by O and/or S, 1,4-cyclohexenylene, 1,4-bicyclo-(2,2,2)-octylene, piperidine-1,4-diyl, naphthalene-2,6-diyl, decahydro-naphthalene-2,6-diyl, 1,2,3,4-tetrahydro-naphthalene-2,6-diyl, cyclobutane-1,3-diyl, spiro[3.3]heptane-2,6-diyl or dispiro[3.1.3.1] decane-2,8-diyl, it being possible for all these groups to be unsubstituted, mono-, di-, tri- or tetrasubstituted with F, Cl, CN or alkyl, alkoxy, alkylcarbonyl or alkoxycarbonyl groups with 1 to 7 C atoms, wherein one or more H atoms may be substituted by F or Cl, and
k is 1, 2, 3 or 4.

3. Bimesogenic compounds according to claim 1 or 2, **characterized in that** $MG^{11}$ and $MG^{12}$ are independently of one another selected from the group of formulae II-1 to II-26

| | |
|---|---|
| -Phe-Z-Phe- | II-1 |
| -Phe-Z-Cyc- | II-2 |
| -Cyc-Z-Cyc- | II-3 |
| -Phe-Z-PheL- | II-4 |
| -PheL-Z-Phe- | II-5 |
| -PheL-Z-Cyc- | II-6 |
| -PheL-Z-PheL- | II-7 |
| -Phe-Z-Phe-Z-Phe- | II-8 |
| -Phe-Z-Phe-Z-Cyc- | II-9 |
| -Phe-Z-Cyc-Z-Phe- | II-10 |
| -Cyc-Z-Phe-Z-Cyc- | II-11 |
| -Phe-Z-Cyc-Z-Cyc- | II-12 |
| -Cyc-Z-Cyc-Z-Cyc- | II-13 |
| -Phe-Z-Phe-Z-PheL- | II-14 |
| -Phe-Z-PheL-Z-Phe- | II-15 |
| -PheL-Z-Phe-Z-Phe- | II-16 |
| -PheL-Z-Phe-Z-PheL- | II-17 |
| -PheL-Z-PheL-Z-Phe- | II-18 |
| -PheL-Z-PheL-Z-PheL- | II-19 |
| -Phe-Z-PheL-Z-Cyc- | II-20 |
| -Phe-Z-Cyc-Z-PheL- | II-21 |
| -Cyc-Z-Phe-Z-PheL- | II-22 |
| -PheL-Z-Cyc-Z-PheL- | II-23 |
| -PheL-Z-PheL-Z-Cyc- | II-24 |
| -PheL-Z-Cyc-Z-Cyc- | II-25 |
| -Cyc-Z-PheL-Z-Cyc- | II-26 |

wherein

Cyc is 1,4-cyclohexlene, preferably trans-1,4-cyclohexlene,
Phe is 1,4-phenylene,
PheL is 1,4-phenylene, which is substituted by one, two or three fluorine atoms, by one or two Cl atoms or by one Cl atom and one F atom, and

at least one of

Z, which is present, is -COO- or -OCO-.

4. Bimesogenic compounds according to at least one of claims 1 to 3, **characterized in that** at $MG^{11}$ and $MG^{12}$ are independently of one another selected from the group of formulae IIa to IIf

| | |
|---|---|
| 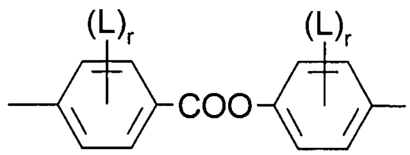 | IIa |
| 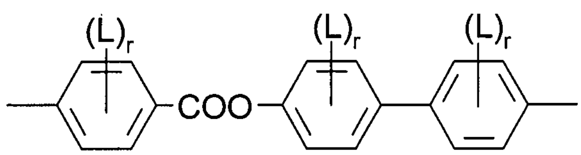 | IIb |

(continued)

| | |
|---|---|
| 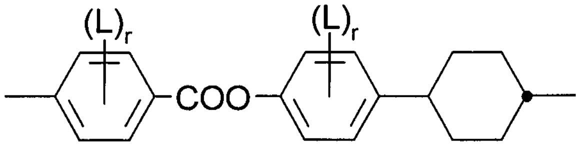 | IIc |
| 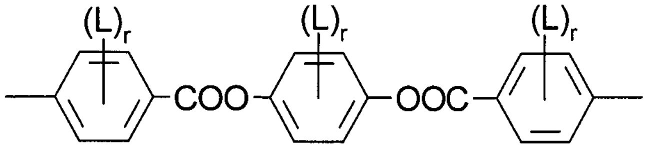 | IId |
| 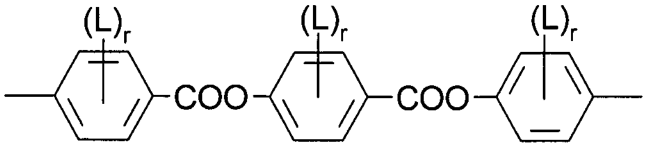 | IIe |
| 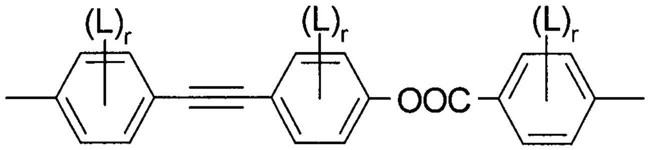 | IIf |

wherein

L is in each occurrence independently of each other F or Cl and
r is in each occurrence independently of each other 0, 1, 2 or 3.

**5.** Bimesogenic compounds according to claim 4, **characterized in that**

r is in each occurrence independently of each other 0, 1 or 2.

**6.** Bimesogenic compounds according to claim 4 or 5, **characterized in that** the group

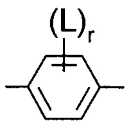

in each occurrence independently from one another is selected from

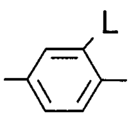 , 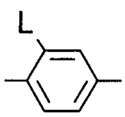 , 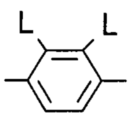

and

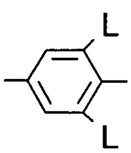 .

7. Bimesogenic compounds according to at least one of claims 4 to 6, **characterized in that**

L is in each occurrence F.

8. Bimesogenic compounds according to at least one of claims 1 to 7, **characterized in that** $R^{11}$ and $R^{12}$ are selected from F, Cl and CN.

9. Bimesogenic compounds according to at least one of claims 1 to 8, **characterized in that** $Sp^1$ is $-(CH_2)_o-$ and o is 1, 3 or an integer from 5 to 15.

10. Use of one or more bimesogenic compounds according to at least one of claims 1 to 9 in a liquid crystalline medium.

11. Liquid-crystalline medium, **characterised in that** it comprises one or more bimesogenic compounds according to at least one or more of claims 1 to 10.

12. Liquid-crystalline medium according to claim 11, **characterised in that** it additionally comprises one or more compounds selected from the group of the compounds of the formulae III

$$R^{31}\text{-}MG^{31}\text{-}X^{31}\text{-}Sp^{3}\text{-}X^{32}\text{-}MG^{32}\text{-}R^{32} \qquad \text{III}$$

wherein

$R^{31}$and $R^{32}$ are each independently H, F, Cl, CN, NCS or a straight-chain or branched alkyl group with 1 to 25 C atoms which may be unsubstituted, mono- or polysubstituted by halogen or CN, it being also possible for one or more non-adjacent $CH_2$ groups to be replaced, in each case independently from one another, by -O-, -S-, -NH-, $-N(CH_3)-$, -CO-, -COO-, -OCO-, -O-CO-O-, -S-CO-, -CO-S-, -CH=CH-, -CH=CF-, -CF=CF- or -C≡C- in such a manner that oxygen atoms are not linked directly to one another,
$MG^{31}$ and $MG^{32}$ are each independently a mesogenic group,
$Sp^3$ is a spacer group comprising 5 to 40 C atoms, wherein one or more non-adjacent $CH_2$ groups may also be replaced by -O-, -S-, -NH-, $-N(CH_3)-$, -CO-, -O-CO-, -S-CO-, -O-COO-, -CO-S-, -CO-O-, -CH(halogen)-, -CH(CN)-, -CH=CH- or -C≡C-, and
$X^{31}$ and $X^{32}$ are each independently -O-, -S-, -CO-, -COO-, -OCO-, -O-CO-O-, -CO-NH-, -NH-CO-, $-CH_2CH_2-$, $-OCH_2-$, $-CH_2O-$, $-SCH_2-$, $-CH_2S-$, -CH=CH-, -CH=CH-COO-, -OCO-CH=CH-, -C≡C- or a single bond, and

with the condition that compounds of formula I are excluded.

13. Use of a liquid crystal medium according to claim 11 or 12, in a liquid crystal device.

14. Liquid crystal device comprising a liquid crystalline medium comprising two or more components, one or more of which is a bimesogenic compound of formula I according at least one of claims 1 to 9.

15. Liquid crystal device according to claim 14, **characterized in that** it is a flexoelectric device.

## Patentansprüche

1. Bimesogene Verbindungen der Formel I

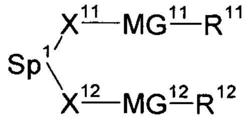

I

worin

$R^{11}$ und $R^{12}$ jeweils unabhängig H, F, Cl, CN, NCS oder eine gerad-kettige oder verzweigte Alkylgruppe mit 1 bis 25 C-Atomen sind, die unsubstituiert oder ein- oder mehrfach durch Halogen oder CN substituiert sein kann,

wobei auch eine oder mehrere nicht benachbarte $CH_2$-Gruppen bei jedem Auftreten unabhängig voneinander so durch -O-, -S-, -NH-, -$N(CH_3)$-, -CO-, -COO-, -OCO-, -O-CO-O-, -S-CO-, -CO-S-, -CH=CH-, -CH=CF-, -CF=CF- oder -C≡C- ersetzt sein können, dass Sauerstoffatome nicht direkt miteinander verknüpft sind,
$MG^{11}$ und $MG^{12}$ jeweils unabhängig eine mesogene Gruppe sind

und mindestens eines von

$MG^{11}$ und $MG^{12}$ zwei oder mehr 6-atomige Ringe enthält, wobei mindestens zwei hiervon durch eine 2-atomige Ver-knüpfungsgruppe verknüpft sind, die aus -CO-O- und -O-CO- ausgewählt ist, und
$Sp^1$ eine Spacergruppe mit 1, 3 oder 5 bis 40 C-Atomen ist, worin eine oder mehrere nicht benachbarte und nicht endständige $CH_2$-Gruppen auch durch -O-, -S-, -NH-, -$N(CH_3)$-, -CO-, -O-CO-, -S-CO-, -O-COO-, -CO-S-, -CO-O-, -CH(Halogen)-, -CH(CN)-, -CH=CH- oder -C≡C-ersetzt sein können, jedoch derart, dass keine zwei O-Atome einander benachbart sind, keine zwei -CH=CH-Gruppen einander benachbart sind und keine zwei aus -O-CO-, -S-CO-, -O-COO-, -CO-S-, -CO-O- und -CH=CH- ausgewählten Gruppen einander benachbart sind,
$X^{11}$ und $X^{12}$ unabhängig voneinander eine aus -CO-O-, -O-CO-, -CH=CH-, -C=C-, -S-, -O- und einer Einfachbindung ausgewählte Verknüpfungsgruppe sind,

jedoch unter der Bedingung, dass in -$X^{11}$-$Sp^1$-$X^{12}$- keine zwei O-Atome einander benachbart sind, jetzt zwei -CH=CH-Gruppen einander benachbart sind und keine zwei aus -O-CO-, -S-CO-, -O-COO-, -CO-S-, -CO-O- und -CH=CH-ausgewählten Gruppen einander benachbart sind.

2. Bimesogene Verbindungen nach Anspruch 1, **dadurch gekennzeichnet, dass** $MG^{11}$ und $MG^{12}$ unabhängig voneinander aus der Teilformel II

$$-A^{11}-(Z^{11}-A^{12})_k- \qquad \text{II}$$

ausgewählt sind, worin
mindestens eines von

$Z^{11}$, das vorhanden ist, -COO- oder -OCO- ist,

und die anderen vorhandenen unabhängig von den vorstehend definierten und voneinander -COO-, -OCO-, -O-CO-O-, -$OCH_2$-, -$CH_2O$-, -$OCF_2$-, -$CF_2O$-, -$CH_2CH_2$-, -$(CH_2)_4$-, -$CF_2CF_2$-, -CH=CH-, -CF=CF-, -CH=CH-COO-, -OCO-CH=CH- oder -C≡C-, gegebenenfalls mit einem oder mehreren von F, S substituiert, sind oder eine Einfachbindung sind,

$A^{11}$ und $A^{12}$ jeweils unabhängig bei jedem Auftreten 1,4-Phenylen, worin zusätzlich eine oder mehrere CH-Gruppen durch N ersetzt sein können, trans-1,4-Cyclohexylen, in dem zusätzlich eine oder zwei nicht benachbarte $CH_2$-Gruppen durch O und/oder S ersetzt sein können, 1,4-Cyclohexenylen, 1,4-Bicyclo-(2,2,2)-octylen, Piperidin-1,4-diyl, Naphthalin-2,6-diyl, Decahydro-naphthalin-2,6-diyl, 1,2,3,4-Tetrahydro-naphthalin-2,6-diyl, Cyclobutan-1,3-diyl, Spiro[3.3]heptan-2,6-diyl oder Dispiro[3.1.3.1]-decan-2,8-diyl sind, wobei alle diese Gruppen unsubsti-tuiert oder ein-, zwei-, drei- oder vierfach mit F, Cl, CN oder Alkyl-, Alkoxy-, Alkylcarbonyl- oder Alkoxycarbonyl-gruppen mit 1 bis 7 C-Atomen substituiert sein können, worin ein oder mehrere H-Atome durch F oder Cl substituiert sein können, und
k 1, 2, 3 oder 4 ist.

3. Bimesogene Verbindungen nach Anspruch 1 oder 2, **dadurch gekennzeichnet, dass** $MG^{11}$ und $MG^{12}$ unabhängig voneinander aus der Gruppe der Formeln II-1 bis II-26

| | |
|---|---|
| -Phe-Z-Phe- | II-1 |
| -Phe-Z-Cyc- | II-2 |
| -Cyc-Z-Cyc- | II-3 |
| -Phe-Z-PheL- | II-4 |
| -PheL-Z-Phe- | II-5 |
| -PheL-Z-Cyc- | II-6 |
| -PheL-Z-PheL- | II-7 |
| -Phe-Z-Phe-Z-Phe- | II-8 |

(fortgesetzt)

| | |
|---|---|
| -Phe-Z-Phe-Z-Cyc- | II-9 |
| -Phe-Z-Cyc-Z-Phe- | II-10 |
| -Cyc-Z-Phe-Z-Cyc- | II-11 |
| -Phe-Z-Cyc-Z-Cyc- | II-12 |
| -Cyc-Z-Cyc-Z-Cyc- | II-13 |
| -Phe-Z-Phe-Z-PheL- | II-14 |
| -Phe-Z-PheL-Z-Phe- | II-15 |
| -PheL-Z-Phe-Z-Phe- | II-16 |
| -PheL-Z-Phe-Z-PheL- | II-17 |
| -PheL-Z-PheL-Z-Phe- | II-18 |
| -PheL-Z-PheL-Z-PheL- | II-19 |
| -Phe-Z-PheL-Z-Cyc- | II-29 |
| -Phe-Z-Cyc-Z-PheL- | II-21 |
| -Cyc-Z-Phe-Z-PheL- | II-22 |
| -PheL-Z-Cyc-Z-PheL- | II-23 |
| -PheL-Z-PheL-Z-Cyc- | II-24 |
| -PheL-Z-Cyc-Z-Cyc- | II-25 |
| -Cyc-Z-PheL-Z-Cyc- | II-26 |

ausgewählt sind, worin

Cyc 1,4-Cyclohexlen, vorzugsweise trans-1,4-Cyclohexlen ist,
Phe 1,4-Phenylen ist,
PheL 1,4-Phenylen ist, das durch ein, zwei oder drei Fluor-atome, durch ein oder zwei Cl-Atome oder durch ein Cl-Atom und ein F-Atom substituiert ist, und

mindestens eines von

Z, das vorhanden ist, -COO- oder -OCO- ist.

**4.** Bimesogene Verbindungen nach mindestens einem der Ansprüche 1 bis 3, **dadurch gekennzeichnet, dass** $MG^{11}$ und $MG^{12}$ unabhängig voneinander aus der Gruppe der Formeln IIa bis IIf

| | |
|---|---|
| 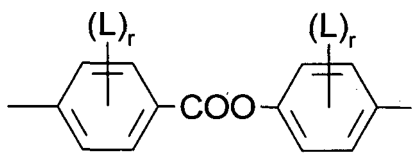 | IIa |
| 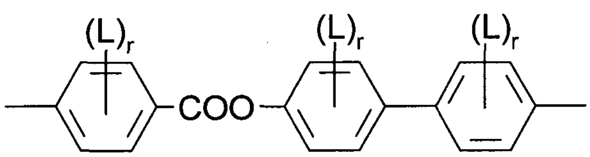 | IIb |
| 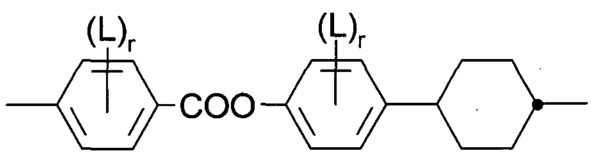 | IIc |

(fortgesetzt)

| | |
|---|---|
| 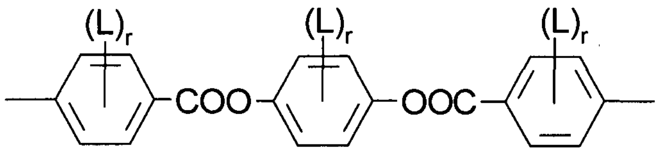 | IId |
| 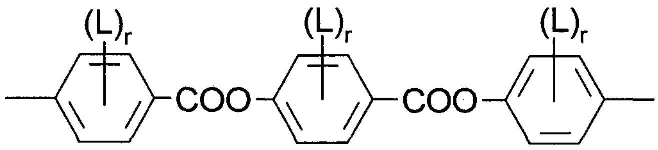 | IIe |
| 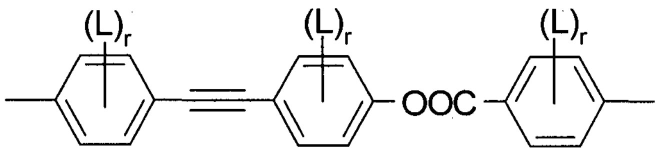 | IIf |

ausgewählt sind, worin

L bei jedem Auftreten unabhängig voneinander F oder Cl ist und
r bei jedem Auftreten unabhängig voneinander 0, 1, 2 oder 3 ist.

**5.** Bimesogene Verbindungen nach Anspruch 4, **dadurch gekennzeichnet, dass**

r bei jedem Auftreten unabhängig voneinander 0, 1 oder 2 ist.

**6.** Bimesogene Verbindungen nach Anspruch 4 oder 5, **dadurch gekennzeichnet, dass** die Gruppe

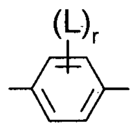

bei jedem Auftreten unabhängig voneinander aus

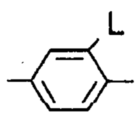 , 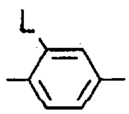 , 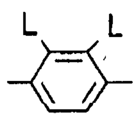 und 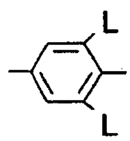

ausgewählt ist.

**7.** Bimesogene Verbindungen nach mindestens einem der Ansprüche 4 bis 6, **dadurch gekennzeichnet, dass**

L bei jedem Auftreten F ist.

**8.** Bimesogene Verbindungen nach mindestens einem der Ansprüche 1 bis 7, **dadurch gekennzeichnet, dass** $R^{11}$ und $R^{12}$ aus F, Cl und CN ausgewählt sind.

**9.** Bimesogene Verbindungen nach mindestens einem der Ansprüche 1 bis 8, **dadurch gekennzeichnet, dass** $Sp^1$ $-(CH_2)_o-$ ist und o 1, 3 oder eine ganze Zahl von 5 bis 15 ist.

**10.** Verwendung von einer oder mehreren bimesogenen Verbindungen nach mindestens einem der Ansprüche 1 bis 9 in einem flüssigkristallinen Medium.

**11.** Flüssigkristallines Medium, **dadurch gekennzeichnet, dass** es eine oder mehrere bimesogene Verbindungen nach mindestens einem oder mehreren der Ansprüche 1 bis 10 enthält.

**12.** Flüssigkristallines Medium nach Anspruch 11, **dadurch gekennzeichnet, dass** es zusätzlich eine oder mehrere Verbindungen enthält, die aus der Gruppe der Verbindungen der Formeln III

$$R^{31}\text{-}MG^{31}\text{-}X^{31}\text{-}Sp^{3}\text{-}X^{32}\text{-}MG^{32}\text{-}R^{32} \qquad III$$

ausgewählt sind, worin

$R^{31}$ und $R^{32}$ jeweils unabhängig H, F, Cl, CN, NCS oder eine geradkettige oder verzweigte Alkylgruppe mit 1 bis 25 C-Atomen sind, die unsubstituiert oder ein- oder mehrfach durch Halogen oder CN substituiert sein kann, wobei auch eine oder mehrere nicht benachbarte $CH_2$-Gruppen jeweils unabhängig voneinander so durch -O-, -S-, -NH-, $-N(CH_3)-$, -CO-, -COO-, -OCO-, -O-CO-O-, -S-CO-, -CO-S-, -CH=CH-, -CH=CF-, -CF=CF- oder -C≡C- ersetzt sein können, dass Sauerstoffatome nicht direkt miteinander verknüpft sind,
$MG^{31}$ und $MG^{32}$ jeweils unabhängig eine mesogene Gruppe sind,
$Sp^3$ eine Spacergruppe mit 5 bis 40 C-Atomen ist, worin auch eine oder mehrere nicht benachbarte $CH_2$-Gruppen durch -O-, -S-, -NH-, $-N(CH_3)-$, -CO-, -O-CO-, -S-CO-, -O-COO-, -CO-S-, -CO-O-, -CH(Halogen)-, -CH(CN)-, -CH=CH- oder -C≡C- ersetzt sein können, und
$X^{31}$ und $X^{32}$ jeweils unabhängig -O-, -S-, -CO-, -COO-, -OCO-, -O-CO-O-, -CO-NH-, -NH-CO-, $-CH_2CH_2-$, $-OCH_2-$, $-CH_2O-$, $-SCH_2-$, $-CH_2S-$, -CH=CH-, -CH=CH-COO-, -OCO-CH=CH-, -C≡C- oder eine Einfachbindung sind, und

unter der Bedingung, dass Verbindungen der Formel I ausgenommen sind.

**13.** Verwendung eines Flüssigkristallmediums nach Anspruch 11 oder 12 in einer Flüssigkristallvorrichtung.

**14.** Flüssigkristallvorrichtung enthaltend ein flüssigkristallines Medium, das zwei oder mehr Komponenten enthält, von denen eine oder mehrere eine bimesogene Verbindung der Formel I nach mindestens einem der Ansprüche 1 bis 9 ist.

**15.** Flüssigkristallvorrichtung nach Anspruch 14, **dadurch gekennzeichnet, dass** es sich um eine flexoelektrische Vorrichtung handelt.

## Revendications

**1.** Composés bimésogènes de la formule I :

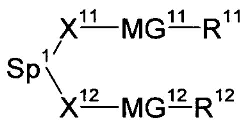

I

dans laquelle :

$R^{11}$ et $R^{12}$ sont, chacun de manière indépendante, H, F, Cl, CN, NCS ou un groupe alkyle en chaîne droite ou ramifié qui comporte 1 à 25 atome(s) de C, lequel peut être non substitué, monosubstitué ou polysubstitué par halogène ou CN, étant entendu qu'il est également possible qu'un ou que plusieurs groupe(s) $CH_2$ non adjacents soit/soient remplacé(s), pour chaque occurrence indépendamment les unes des autres, par -O-, -S-, -NH-, $-N(CH_3)-$, -CO-, -COO-, -OCO-, -O-CO-O-, -S-CO-, -CO-S-, -CH=CH-, -CH=CF-, -CF=CF- ou -C≡C- de telle sorte que des atomes d'oxygène ne soient pas liés directement les uns aux autres,
$MG^{11}$ et $MG^{12}$ sont, chacun de manière indépendante, un groupe mésogène et

au moins l'un de

$MG^{11}$ et $MG^{12}$ comprend deux cycles ou plus à 6 atomes, dont au moins deux sont liés au moyen d'un groupe de liaison à 2 atomes, lequel groupe est sélectionné parmi -CO-O-et -O-CO-, et
$Sp^1$ est un groupe d'espaceur qui comprend 1, 3 ou 5 à 40 atome(s) de C, dans lequel un ou plusieurs groupe(s)

$CH_2$ non adjacents et non terminal/terminaux peut/ peuvent être remplacé(s) par -O-, -S-, -NH-, -N($CH_3$)-, -CO-, -O-CO-, -S-CO-, -O-COO-, -CO-S-, -CO-O-, -CH(halogène)-, -CH(CN)-, -CH=CH- ou -C≡C-, cepen-dant de telle sorte que deux atomes de O ne soient pas adjacents l'un à l'autre, deux groupes -CH=CH- ne soient pas adjacents l'un à l'autre et deux groupes qui sont sélectionnés parmi-O-CO-, -S-CO-, -O-COO-, -CO-S-, -CO-O- et -CH=CH- ne soient pas adjacents l'un à l'autre,
$X^{11}$ et $X^{12}$ sont, de manière indépendante l'un de l'autre, un groupe de liaison qui est sélectionné parmi -CO-O-, -O-CO-, -CH=CH-, -C≡C-, -S-, -O- et une liaison simple,

cependant avec pour condition que dans -$X^{11}$-$Sp^1$-$X^{12}$-, deux atomes de O ne soient pas adjacents l'un à l'autre, deux groupes -CH=CH-ne soient pas adjacents l'un à l'autre et deux groupes qui sont sélectionnés parmi -O-CO-, -S-CO-, -O-COO-, -CO-S-, -CO-O- et -CH=CH- ne soient pas adjacents l'un à l'autre.

**2.** Composés bimésogènes selon la revendication 1, **caractérisés en ce que** $MG^{11}$ et $MG^{12}$ sont, de manière indépendante l'un de l'autre, sélectionnés parmi la formule partielle II :

$$-A^{11}-(Z^{11}-A^{12})_k- \qquad II$$

dans laquelle :
au moins l'un de

$Z^{11}$, qui est présent, est -COO- ou -OCO-,

et les autres qui sont présents sont, indépendamment de ceux qui sont définis ci-avant et les uns des autres, -COO-, -OCO-, -O-CO-O-, -$OCF_2$-, -$CH_2O$-, -$OCF_2$-, -$CF_2O$-, -$CH_2CH_2$-, -$(CH_2)_4$-, -$CF_2CF_2$-, -CH=CH-, -CF=CF-, -CH=CH-COO-, -OCO-CH=CH- ou -C≡C-, en option substitués par un ou plusieurs de F, S ou sont une liaison simple,

$A^{11}$ et $A^{12}$ sont, chacun de manière indépendante pour chaque occurrence, 1,4-phénylène, où en outre un ou plusieurs groupe(s) CH peut/peuvent être remplacé(s) par N, trans-1,4-cyclo-hexylène où, en outre, un ou deux groupes $CH_2$ non adjacents peut/peuvent être remplacé(s) par O et/ou S, 1,4-cyclohexénylène, 1,4-bicyclo-(2,2,2)-octylène, pipéridine-1,4-diyle, naphthalène-2,6-diyle, décahydro-naphtalène-2,6-diyle, 1,2,3,4-tétrahydro-naphtalène-2,6-diyle, cyclobutane-1,3-diyle, spiro[3.3]heptane-2,6-diyle ou dispiro[3.1.3.1] décane-2,8-diyle, étant entendu qu'il est également possible que tous ces groups soient non substitués, monosubstitués, disubstitués, trisubstitués ou tétrasubstitués par F, Cl, CN ou des groupes alkyle, alcoxy, alkylcarbonyle ou alcoxycarbonyle qui comportent 1 à 7 atome(s) de C, où un ou plusieurs atome(s) de H peut/peuvent être substitué(s) par F ou Cl, et
k est 1, 2, 3 ou 4.

**3.** Composés bimésogènes selon la revendication 1 ou 2, **caractérisés en ce que** $MG^{11}$ et $MG^{12}$ sont, de manière indépendante l'un de l'autre, sélectionnés parmi le groupe de formules II-1 à II-26 :

| | |
|---|---|
| -Phe-Z-Phe- | II-1 |
| -Phe-Z-Cyc- | II-2 |
| -Cyc-Z-Cyc- | II-3 |
| -Phe-Z-PheL- | II-4 |
| -PheL-Z-Phe- | II-5 |
| -PheL-Z-Cyc- | II-6 |
| -PheL-Z-PheL- | II-7 |
| -Phe-Z-Phe-Z-Phe- | II-8 |
| -Phe-Z-Phe-Z-Cyc- | II-9 |
| -Phe-Z-Cyc-Z-Phe- | II-10 |
| -Cyc-Z-Phe-Z-Cyc- | II-11 |
| -Phe-Z-Cyc-Z-Cyc- | II-12 |
| -Cyc-Z-Cyc-Z-Cyc- | II-13 |
| -Phe-Z-Phe-Z-PheL- | II-14 |
| -Phe-Z-PheL-Z-Phe- | II-15 |
| -PheL-Z-Phe-Z-Phe- | II-16 |

(suite)

| | |
|---|---|
| -PheL-Z-Phe-Z-PheL- | II-17 |
| -PheL-Z-PheL-Z-Phe- | II-18 |
| -PheL-Z-PheL-Z-PheL- | II-19 |
| -Phe-Z-PheL-Z-Cyc- | II-29 |
| -Phe-Z-Cyc-Z-PheL- | II-21 |
| -Cyc-Z-Phe-Z-PheL- | II-22 |
| -PheL-Z-Cyc-Z-PheL- | II-23 |
| -PheL-Z-PheL-Z-Cyc- | II-24 |
| -PheL-Z-Cyc-Z-Cyc- | II-25 |
| -Cyc-Z-PheL-Z-Cyc- | II-26 |

dans lesquelles :

Cyc est 1,4-cyclohexlène, de façon préférable trans-1,4-cyclohexlène,
Phe est 1,4-phénylène,
PheL est 1,4-phenylène, lequel est substitué par un, deux ou trois atome(s) de fluor, par un ou deux atome(s) de Cl ou par un atome de Cl et un atome de F, et

au moins l'un de

Z, qui est présent, est -COO- ou -OCO-.

**4.** Composés bimésogènes selon au moins l'une des revendications 1 à 3, **caractérisés en ce que** $MG^{11}$ et $MG^{12}$ sont, de manière indépendante l'un de l'autre, sélectionnés parmi le groupe de formules IIa à IIf :

| | |
|---|---|
| 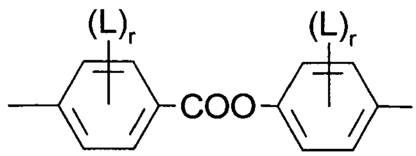 | Iia |
| 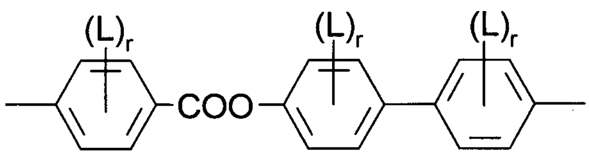 | IIb |
| 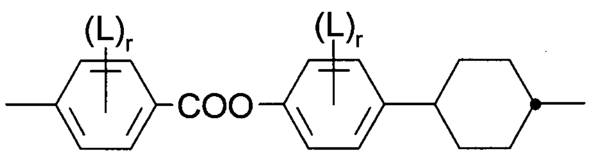 | IIc |
| 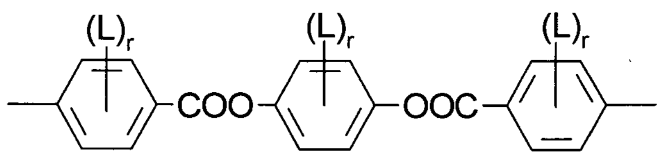 | IId |
| 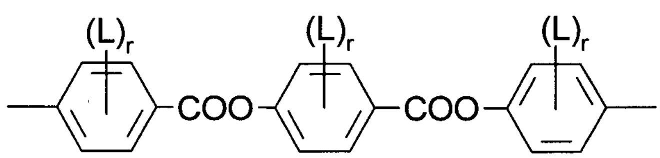 | IIe |

(suite)

| | |
|---|---|
| 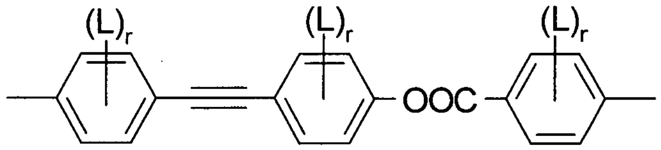 | IIf |

dans lesquelles :

L est, pour chaque occurrence de manière indépendante les uns des autres, F ou Cl et
r est, pour chaque occurrence de manière indépendante les uns des autres, 0, 1, 2 ou 3.

**5.** Composés bimésogènes selon la revendication 4, **caractérisé en ce que**:

r est, pour chaque occurrence de manière indépendante les uns des autres, 0, 1 ou 2.

**6.** Composés bimésogènes selon la revendication 4 ou 5, **caractérisés en ce que** le groupe

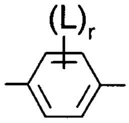

pour chaque occurrence de manière indépendante les unes des autres, est sélectionné parmi :

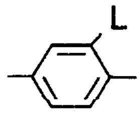
,
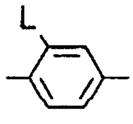
,
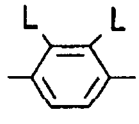

et

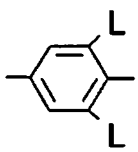
.

**7.** Composés bimésogènes selon au moins l'une des revendications 4 à 6, **caractérisés en ce que** :

L est pour chaque occurrence F.

**8.** Composés bimésogènes selon au moins l'une des revendications 1 à 7, **caractérisés en ce que** $R^{11}$ et $R^{12}$ sont sélectionnés parmi F, Cl et CN.

**9.** Composés bimésogènes selon au moins l'une des revendications 1 à 8, **caractérisés en ce que** $Sp^1$ est $-(CH_2)_o-$ et o est 1, 3 ou un entier de 5 à 15.

**10.** Utilisation d'un ou de plusieurs composé(s) bimésogène(s) selon au moins l'une des revendications 1 à 9 dans un milieu cristallin liquide.

**11.** Milieu cristallin liquide, **caractérisé en ce qu'**il comprend un ou plusieurs composé(s) bimésogène(s) selon au

moins une ou plusieurs des revendications 1 à 10.

**12.** Milieu cristallin liquide selon la revendication11, **caractérisé en ce qu'**il comprend de manière additionnelle un ou plusieurs composé(s) qui est/sont sélectionné(s) parmi le groupe des composés des formules III :

$$R^{31}\text{-}MG^{31}\text{-}X^{31}\text{-}Sp^{3}\text{-}X^{32}\text{-}MG^{32}\text{-}R^{32} \qquad \text{III}$$

dans lesquelles :

$R^{31}$ et $R^{32}$ sont, chacun de manière indépendante, H, F, Cl, CN, NCS ou un groupe alkyle en chaîne droite ou ramifié qui comporte 1 à 25 atome(s) de C, lequel peut être non substitué, monosubstitué ou polysubstitué par halogène ou CN, étant entendu qu'il est également possible qu'un ou plusieurs groupe(s) $CH_2$ non adjacents soit/soient remplacé(s), dans chaque cas indépendamment les uns des autres, par -O-, -S-, -NH-, -N($CH_3$)-, -CO-, -COO-, -OCO-, -O-CO-O-, -S-CO-, -CO-S-, -CH=CH-, -CH=CF-, -CF=CF- ou -C≡C- de telle sorte que des atomes d'oxygène ne soient pas liés directement les uns aux autres,
$MG^{31}$ et $MG^{32}$ sont, chacun de manière indépendante, un groupe mésogène,
$Sp^3$ est un groupe d'espaceur qui comprend 5 à 40 atomes de C, où un ou plusieurs groupe(s) $CH_2$ non adjacents peut/peuvent également être remplacé(s) par -O-, -S-, -NH-, -N($CH_3$)-, -CO-, -O-CO-, -S-CO-, -O-COO-, -CO-S-, -CO-O-, -CH(halogen)-, -CH(CN)-, -CH=CH- ou -C≡C-, et
$X^{31}$ et $X^{32}$ sont, chacun de manière indépendante, -O-, -S-, -CO-, -COO-, -OCO-, -O-CO-O-, -CO-NH-, -NH-CO-, -$CH_2CH_2$-, -$OCH_2$-, -$CH_2O$-, -$SCH_2$-, -$CH_2S$-, -CH=CH-, -CH=CH-COO-, -OCO-CH=CH-, -C≡C- ou une liaison simple, et

avec pour condition que des composés de la formule I sont exclus.

**13.** Utilisation d'un milieu cristallin liquide selon la revendication 11 ou 12, dans un dispositif à cristaux liquides.

**14.** Dispositif à cristaux liquides comprenant un milieu cristallin liquide qui comprend deux composants ou plus, dont un ou plusieurs est/sont un composé bimésogène de la formule I selon au moins l'une des revendications 1 à 9.

**15.** Dispositif à cristaux liquides selon la revendication 14, **caractérisé en ce qu'**il s'agit d'un dispositif flexoélectrique.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- DE 4000451
- EP 0588568 A
- US 2008142758 A1
- US 2010296038 A1
- US 2009115957 A1
- EP 0971016 A
- GB 2356629 A
- WO 9800428 A
- GB 2328207 A


### Non-patent literature cited in the description


- **HENDERSON et al.** *Liquid crystals,* 2001, vol. 28 (3), 463-472
- **CHANDRASEKHAR.** Liquid Crystals. Cambridge University Press, 1992
- **P.G. DEGENNES et al.** The Physics of Liquid Crystals. Oxford Science Publications, 1995
- **CF. ALSO HORI, K. ; LIMURO, M. ; NAKAO, A. ; TORIUMI, H.** *J. Mol. Struc.,* 2004, vol. 699, 23-29
- **H.J. COLES et al.** *J. Appl. Phys.,* 2006, vol. 99, 034104
- **COLES, H.J. ; MUSGRAVE, B. ; COLES, M.J. ; WILLMOTT, J.** *J. Mater. Chem.,* 2001, vol. 11, 2709-2716
- **BARNES, P.J. ; DOUGLAS, A.G. ; HEEKS, S.K. ; LUCKHURST, G.R.** *Liquid Crystals,* 1993, vol. 13 (4), 603-613
- **HENDERSON, P.A. ; NIEMEYER, O. ; IMRIE, C.T.** *Liquid Crystals,* 2001, vol. 28 (3), 463-472
- **HENDERSON, P.A. ; SEDDON, J.M ; IMRIE, C.T.** reported, that the new phase below the nematic belonged in some special examples to a smectic C phase. *In Liquid Crystals,* 2005, vol. 32 (11-12), 1499-1513
- **PANOV, V.P. ; NGARAJ, M. ; VIJ, J.K. ; PANARIN, Y.P. ; KOHLMEIER, A. ; TAMBA, M.G. ; LEWIS, R.A. ; MEHL, G.H.** *Phys.Rev.Lett.,* 2010, vol. 105, 1678011-1678014
- **J. COGNARD.** *Mol.Cryst.Liq.Cryst.,* 1981, vol. 78 (1), 1-77